(19) Europäisches Patentamt
European Patent Office
Office européen des brevets

(11) EP 2 480 628 B1

(12) EUROPÄISCHE PATENTSCHRIFT

(45) Veröffentlichungstag und Bekanntmachung des Hinweises auf die Patenterteilung:
**03.07.2013 Patentblatt 2013/27**

(21) Anmeldenummer: **10751813.6**

(22) Anmeldetag: **01.09.2010**

(51) Int Cl.:
***C09K 19/18*** (2006.01) ***C09K 19/30*** (2006.01)

(86) Internationale Anmeldenummer:
**PCT/EP2010/005371**

(87) Internationale Veröffentlichungsnummer:
**WO 2011/035849 (31.03.2011 Gazette 2011/13)**

# (54) VERBINDUNGEN FÜR EIN FLÜSSIGKRISTALLINES MEDIUM UND DIESES ENTHALTENDE HOCHFREQUENZBAUTEILE

COMPOUNDS FOR A LIQUID CRYSTAL MEDIUM AND HIGH-FREQUENCY COMPONENTS CONTAINING SAID LIQUID CRYSTAL MEDIUM

COMPOSÉS POUR UN MILIEU À BASE DE CRISTAUX LIQUIDES ET COMPOSANTS HAUTE FRÉQUENCE CONTENANT CE MILIEU

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **25.09.2009 DE 102009042729**

(43) Veröffentlichungstag der Anmeldung:
**01.08.2012 Patentblatt 2012/31**

(73) Patentinhaber: **Merck Patent GmbH**
**64293 Darmstadt (DE)**

(72) Erfinder:
- **MONTENEGRO, Elvira**
  **69469 Weinheim (DE)**
- **JASPER, Christian**
  **64283 Darmstadt (DE)**
- **PAULUTH, Detlef**
  **64372 Ober-Ramstadt (DE)**
- **REIFFENRATH, Volker**
  **64380 Roßdorf (DE)**
- **MANABE, Atsutaka**
  **64625 Bensheim (DE)**

(56) Entgegenhaltungen:
**DE-A1- 10 120 024** **DE-A1- 19 907 941**
**DE-A1-102004 029 429** **US-A- 5 759 443**

- **HSU C S ET AL: "SYNTHESIS OF LATERALLY SUBSTITUTED BISTOLANE LIQUID CRYSTALS", LIQUID CRYSTALS: AN INTERNATIONAL JOURNAL OF SCIENCE AND TECHNOLOGY, TAYLOR & FRANCIS, GB, Bd. 27, Nr. 2, 1. Februar 2000 (2000-02-01), Seiten 283-287, XP000932257, ISSN: 0267-8292, DOI: DOI: 10.1080/026782900203100 in der Anmeldung erwähnt**
- **TSAI W-L ET AL: "MESOGENIC PROPERTIES OF CYCLOALKYLMETHYL 4-(4'-OCTOXYBIPHENYL-4-CARBONYLOXY) BENZOAT E", LIQUID CRYSTALS: AN INTERNATIONAL JOURNAL OF SCIENCE AND TECHNOLOGY, TAYLOR & FRANCIS, GB, Bd. 31, Nr. 2, 1. Februar 2004 (2004-02-01), Seite 299/300, XP001047715, ISSN: 0267-8292, DOI: DOI: 10.1080/02678290410001648688**

EP 2 480 628 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft neue chemische Verbindungen, damit zusammengestellte flüssigkristalline Medien und diese Medien enthaltende Hochfrequenzbauteile, insbesondere Antennen, speziell für den Gigahertzbereich. Die flüssigkristallinen Medien dienen beispielsweise zur Phasenschiebung von Mikrowellen für abstimmbare "phased-array" Antennen oder für abstimmbare Zellen von Mikrowellenantennen basierend auf "reflectarrays".

Flüssigkristalline Medien werden seit längerem in elektrooptischen Anzeigen (Liquid Crystal Displays - LCDs) genutzt, um Informationen anzuzeigen.

In neuerer Zeit werden flüssigkristalline Medien jedoch auch für die Verwendung in Komponenten, bzw. in Bauteilen, für die Mikrowellentechnik vorgeschlagen, wie z.B. in DE 10 2004 029 429 A und in JP 2005-120208 (A).

Eine technisch wertvolle Anwendung der flüssigkristallinen Medien in der Hochfrequenztechnik beruht auf ihrer Eigenschaft, dass sie sich durch eine variable Spannung in ihren dielektrischen Eigenschaften steuern lassen, besonders für den Gigahertzbereich. Somit lassen sich abstimmbare Antennen konstruieren, die keine beweglichen Teile beinhalten (A. Gaebler, A. Moessinger, F. Goelden, et al., "Liquid Crystal-Reconfigurable Antenna Concepts for Space Applications at Microwave and Millimeter Waves," International Journal of Antennas and Propagation, Vol. 2009 (2009), Article ID 876989, 7 pages; doi:10.1155/2009/876989).

A. Penirschke, S. Müller, P. Scheele, C. Weil, M. Wittek, C. Hock und R. Jakoby: "Cavity Perturbation Method for Characterization of Liquid Crystals up to 35GHz", 34th European Microwave Conference - Amsterdam, S. 545-548 beschreibt unter anderen die Eigenschaften der bekannten, flüssigkristallinen Einzelsubstanz K15 (Merck KGaA, Deutschland) bei einer Frequenz von 9 GHz.

1-(Phenylethinyl)tolane, nachfolgend auch Bistolanverbindungen genannt, mit einer Alkylsubstitution am zentralen Phenylenring sind dem Fachmann bekannt. Z.B. offenbart Wu, S.-T., Hsu, C.-S., Shyu, K.-F., Appl. Phys. Lett., 74 (3), (1999), 344-346 verschiedene flüssigkristalline Bistolanverbindungen mit einer lateralen Methylgruppe der Formel

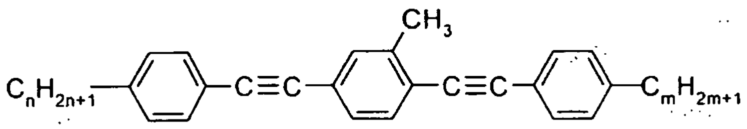

Hsu, C. S. Shyu, K. F., Chuang, Y. Y. and Wu, S.-T., Liq. Cryst., 27 (2), (2000), 283-287 offenbart, neben solchen flüssigkristallinen Bistolanverbindungen mit einer lateralen Methylgruppe, auch entsprechende Verbindungen mit einer lateralen Ethylgruppe und schlägt deren Verwendung u.a. in "liquid crystal optically phased arrays" vor.

In Dabrowski, R., Kula, P. Gauza, S., Dziadiszek, J., Urban, S. und Wu, S.-T., IDRC 08, (2008), 35- 38 werden dielektrisch neutrale Bistolanverbindungen mit und ohne lateraler Methylgruppe am mittleren Ring neben stark dielektrisch positiven Isothiocyanatbistolanverbindungen der Formel

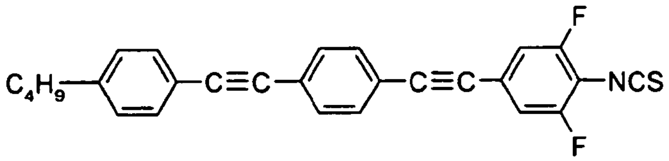

erwähnt.

DE 10 2004 029 429 A beschreibt die Anwendung von herkömmlichen Flüssigkristallmedien in der Mikrowellentechnik, unter anderem in Phasenschiebern. Dort werden bereits flüssigkristalline Medien bezüglich ihrer Eigenschaften im entsprechenden Frequenzbereich untersucht.

Die bisher bekannten Zusammensetzungen oder Einzelverbindungen sind jedoch in der Regel mit Nachteilen behaftet. Die meisten von ihnen führen, neben anderen Mängeln, zu unvorteilhaft hohen Verlusten und/oder unzureichenden Phasenverschiebungen bzw. zu geringer Materialgüte.

In den Druckschriften DE 10120024 A1 und DE 19907941 A1 werden weitere Bistolanverbindungen offenbart, die beispielsweise eine seitlich angeordnete Methylgruppe an einem der Ringe tragen.

Stäbchenförmige, flüssigkristalline Verbindungen mit einer endständigen Cycloalkylgruppe ($C_3$-$C_6$) werden in den Druckschriften Tsai W.-L. et al. Liquid Crystals (2004), 31, 2, 299-300 und US 5,759,443 A (Cyclopentylderivate) offenbart. Die Gruppe ist jeweils an einem Ende, nicht lateral angehängt.

Für die Anwendung in der Hochfrequenztechnik werden flüssigkristalline Medien mit besonderen, bislang eher ungewöhnlichen, ungebräuchlichen Eigenschaften, bzw. Kombinationen von Eigenschaften benötigt.

Somit sind neue Komponenten für flüssigkristalline Medien mit verbesserten Eigenschaften erforderlich. Insbesondere müssen der Verlust im Mikrowellenbereich verringert und die Materialgüte (η) verbessert werden.

Außerdem besteht der Bedarf das Tieftemperaturverhalten der Bauteile zu verbessern. Hier sind sowohl eine Verbesserung der Betriebseigenschaften, wie auch der Lagerfähigkeit nötig.

Es besteht daher ein erheblicher Bedarf an flüssigkristallinen Medien mit geeigneten Eigenschaften für entsprechende praktische Anwendungen.

Überraschenderweise wurde nun gefunden, dass mit den erfindungsgemäßen Verbindungen flüssigkristalline Medien mit einem geeigneten, nematischen Phasenbereich und hohem Δn verwirklicht werden können, welche die Nachteile der Materialien des Standes der Technik nicht oder zumindest nur in erheblich geringerem Maße aufweisen.

Die Erfindung betrifft Verbindungen der Formel 1, nachfolgend auch Bistolane genannt,

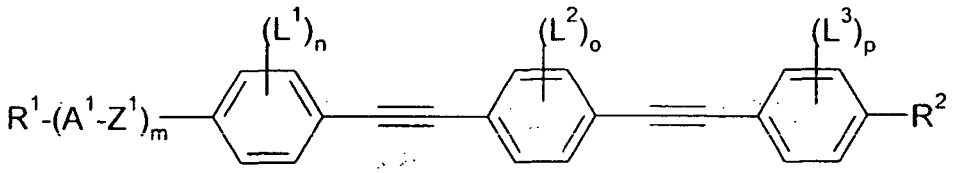

I

worin

| | |
|---|---|
| $L^1$ bis $L^3$ | F, Cl, $C_1$ bis $C_{10}$-Alkyl oder eine Bedeutung gemäß $R^x$ bedeutet, wobei einer oder mehrere der Reste $L^1$ bis $L^3$ ein $R^x$ bedeuten, |
| n, o, p | unabhängig 0, 1, 2, 3, oder 4, bevorzugt 0 oder 1, |
| $R^x$ | Cyclopropyl, Cyclobutyl, Cyclopentyl oder Cyclohexyl, |
| $R^1$ und $R^2$ | unabhängig voneinander H, einen halogenierten oder unsubstituierten Alkylrest mit 1 bis 15 C-Atomen, wobei in diesen Resten auch eine oder mehrere $CH_2$-Gruppen jeweils unabhängig voneinander durch -C≡C-, -CH=CH-, -CF=CF-, -(CO)O-, -O(CO)-, -(CO)- oder -O- so ersetzt sein können, dass O-Atome nicht direkt miteinander verknüpft sind,<br>F, Cl, Br, CN, $CF_3$, $OCF_3$, SCN, NCS oder $SF_5$ bedeuten, |

$A^1$ a) trans-1,4-Cyclohexylen oder Cyclohexenylen, worin auch eine oder zwei nicht benachbarte $CH_2$-Gruppen durch -O - und/oder -S- ersetzt sein können, und worin H durch F ersetzt sein kann,

b) 1,4-Phenylen, worin eine oder:zwei CH-Gruppen durch N ersetzt sein können und worin auch ein oder mehrere H-Atome gegen Br, Cl, F, CN, $R^x$, $C_1$-$C_{10}$ Alkyl, $C_1$-$C_{10}$ Alkoxy oder eine ein- oder mehrfach fluorierte $C_1$-$C_{10}$ Alkyl- oder Alkoxygruppe ersetzt sein können, oder

c) ein Rest aus der Gruppe 1,4-Bicyclo(2,2,2)-octylen, Cylcobut-1,3-diyl, Spiro[3.3]heptan-2,6-diyl, Thioplien-2,5-diyl,

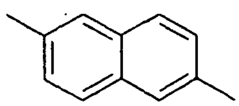 oder 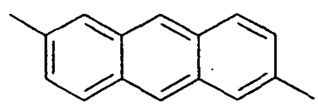 ,

worin ein oder mehrere CH-Gruppen durch N ersetzt sein können,

ein oder mehrere H-Atome gegen Br, Cl, F, CN, $R^x$, $C_1$-$C_{10}$ Alkyl, $C_1$-$C_{10}$ Alkoxy oder eine ein- oder mehrfach fluorierte $C_1$-$C_{10}$ Alkyl- oder Alkoxygruppe ersetzt sein können, und eine oder mehrere Doppelbindungen durch Einfachbindungen ersetzt sein können,

bedeutet,

| | |
|---|---|
| $Z^1$ | eine Einfachbindung, -C≡C-, -CH=CH-, $-CH_2O-$, -(CO)O-, $-CF_2O-$, $-CF_2CF_2-$, $-CH_2CF_2-$, $-CH_2CH_2-$, $-(CH_2)_4-$, -CH=CF- oder -CF=CF-, wobei asymmetrische Brücken nach beiden Seiten orientiert sein können, bevorzugt eine Einfachbindung, -C≡C-, -CH=CH- oder -CF=CF-, und |
| m | 0, 1 oder 2 |

bedeutet.

Die erfindungsgemäßen Verbindungen besitzen einen hohen Klärpunkt, eine außerordentlich hohe optische Anisotropie (An), sowie eine vorteilhafte hohe Rotationsviskosität. Diese Eigenschaften machen sie besonders geeignet für die Verwendung in Bauteilen für die Hochfrequenztechnik, insbesondere in flüssigkristallinen Phasenschiebern mit geringem Verlust.

Die Reste $L^{1-3}$ bedeuten bevorzugt H, F, Alkyl ($C_1$-$C_{10}$) oder $R^x$. Bevorzugt bedeuten 1, 2, 3 oder 4 der Reste $L^1$ bis $L^3$ einen Rest ausgewählt aus Cyclopropyl, Cyclobutyl, Cyclopentyl oder Cyclohexyl ($R^x$). Besonders bevorzugt bedeuten 1 bis 2, insbesondere einer der Reste $L^1$ bis $L^3$ einen Rest ausgewählt aus $R^x$. Unter den cycloaliphatischen Ringen $R^x$ sind bevorzugt Cyclopropyl, Cyclobutyl oder Cyclopentyl, besonders bevorzugt Cyclopropyl oder Cyclobutyl, und ganz besonders bevorzugt Cyclopropyl.

Der eine Rest $R^x$ oder mindestens einer der vorhandenen Reste $R^x$ ist bevorzugt am mittleren Ring des Bistolans lokalisiert, also an der Position von einem oder mehreren der Reste $L^2$. Das bedeutet, dass bevorzugt o > 0 und mindestens ein $L^2 = R^x$. Besonders bevorzugt sind n oder p = 0, ganz besonders bevorzugt n und p = 0. Besonders bevorzugt ist genau ein Rest $L^2$ ein Rest $R^x$. Weiterhin ist es bevorzugt, dass 2 oder 3 vorhandene Reste $R^x$ auf die drei Ringe des Bistolans, also auf $L^1$-$L^3$ verteilt sind.

Bevorzugte Verbindungen der Formel I sind Verbindungen der Formel IA

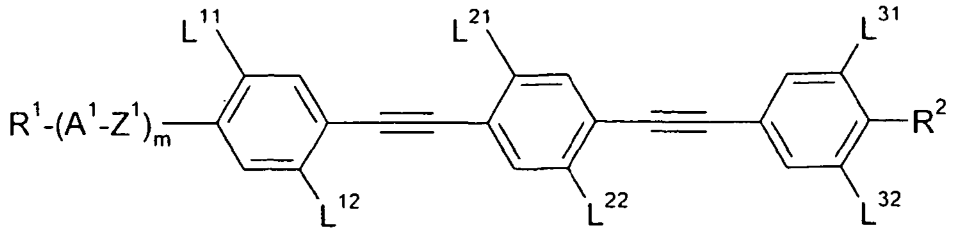
IA

worin

$L^{11}$ bis $L^{32}$ wie $L^{1-3}$ für Formel I definiert sind und zusätzlich Wasserstoff, bevorzugt H, $R^x$, $CH_3$, $C_2H_5$ oder F.

In der Formel IA bedeuten bevorzugt mindestens eine der Gruppen $L^{12}$ und $L^{21}$ ein Wasserstoff. Besonders bevorzugt sind mindestens $L^{11}$, $L^{21}$ und $L^{31}$ Wasserstoff. Weiterhin sind besonders bevorzugt einer aus $L^{12}$ und $L^{32}$ ein Wasserstoff.

Der Zähler m ist bevorzugt 0 oder 1; besonders bevorzugt 0. Bei mehrfachem Auftreten von $A^1$ bzw. $Z^1$ (m = 2) können die Reste unabhängig voneinander verschiedene Bedeutungen annehmen.

Die Ringgruppe $A^1$ ist bevorzugt ein 1,4-Phenylen, worin auch ein oder mehrere H-Atome gegen Br, Cl, F, CN, $C_1$-$C_{10}$ Alkyl, $R^x$, Methoxy oder eine ein- oder mehrfach fluorierte Methyl- oder Methoxygruppe ersetzt sein können.

Die Brückengruppe $Z^1$ ist bevorzugt eine Einfachbindung oder -C≡C-.

Einer der Rest $R^1$ oder $R^2$ bedeutet bevorzugt einen Alkylrest mit 1 bis 15 C-Atomen, wobei in diesen Resten auch eine oder mehrere $CH_2$-Gruppen jeweils unabhängig voneinander durch -C≡C-, -CH=CH-, -(CO)O-, -O(CO)-, -(CO)- oder -O- so ersetzt sein können, dass O-Atome nicht direkt miteinander verknüpft sind.

Bevorzugte Ausführungsformen der Erfindung sind daher ausgewählt aus den folgenden Strukturen:

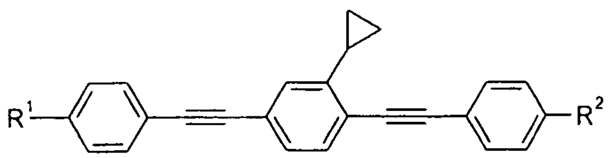

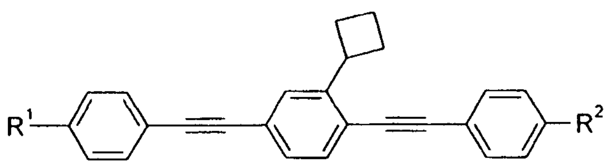

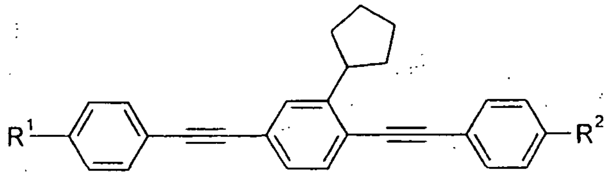

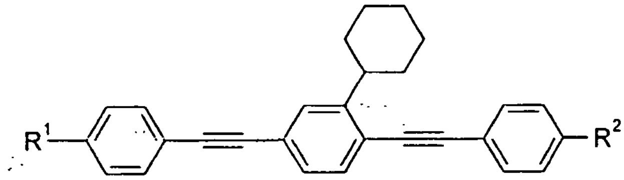

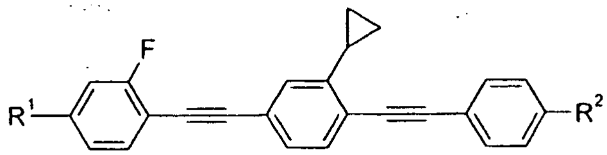

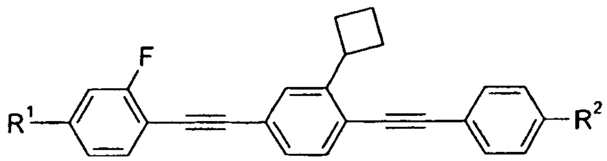

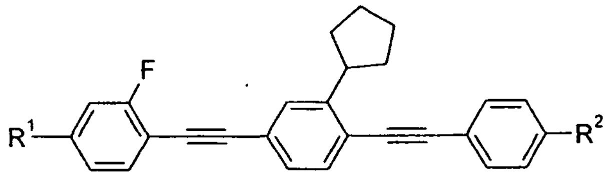

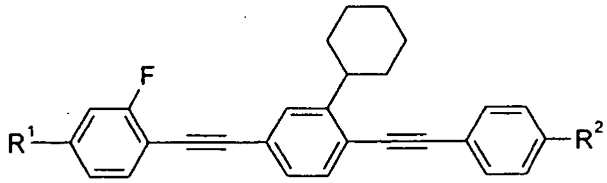

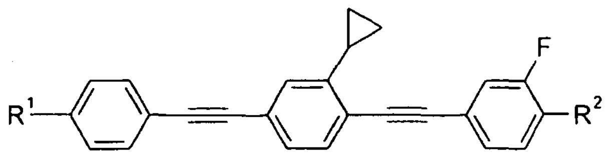

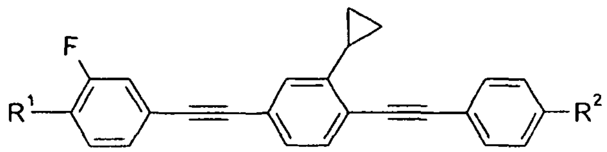

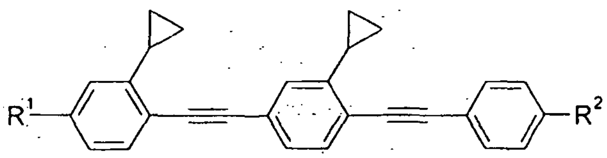

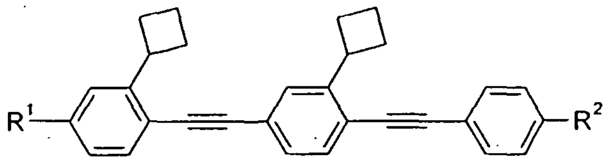

worin $R^1$ und $R^2$ wie oben definiert sind.

In einer weiteren bevorzugten Ausführungsform besitzen die erfindungsgemäßen Verbindungen eine deutlich positive dielektrische Anisotropie (Δε). Entsprechende Verbindungen habe bevorzugt eine Struktur gemäß Formel IB-1 oder IB-2:

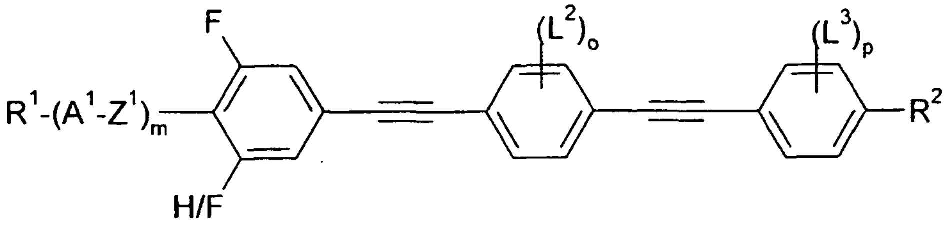

IB-1

worin $R^1$ bevorzugt F, Cl, Br, CN, $CF_3$, $OCF_3$, SCN, NCS oder $SF_5$ bedeutet,

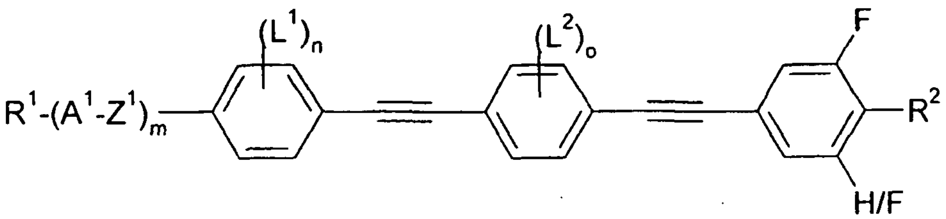

IB-2

worin $R^2$ bevorzugt F, Cl, Br, CN, $CF_3$, OCF3, SCN, NCS oder $SF_5$ bedeutet.

Die Verbindungen der Formel I können vorteilhaft wie an der folgenden beispielhaften Synthese ersichtlich hergestellt werden (Schema 1-4):

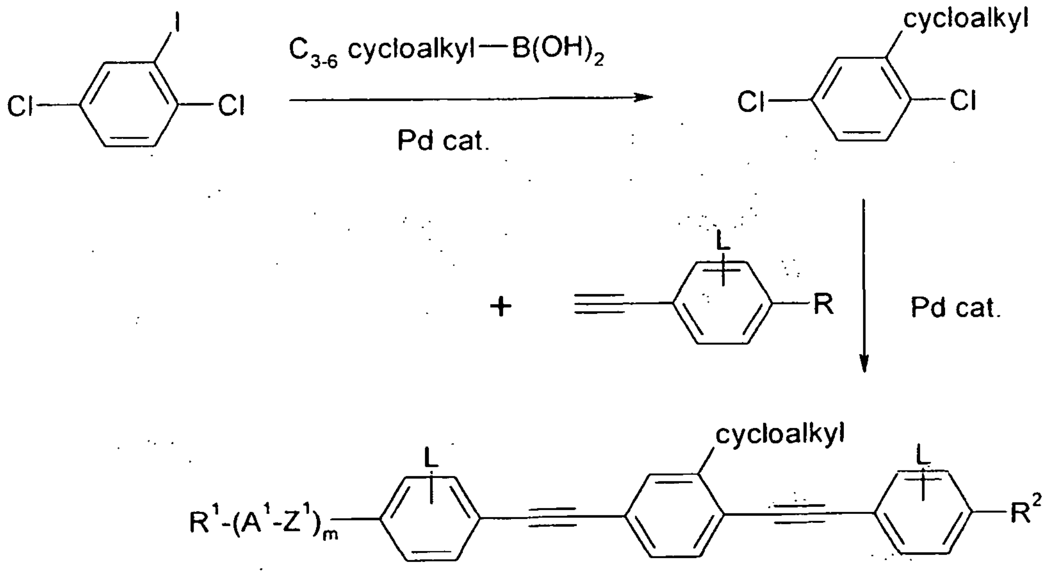


**Schema 1**. Beispielhafte Synthese der Verbindungen der Formel I (symmetrisch); L wie $L^1$ definiert, insbesondere H oder F.

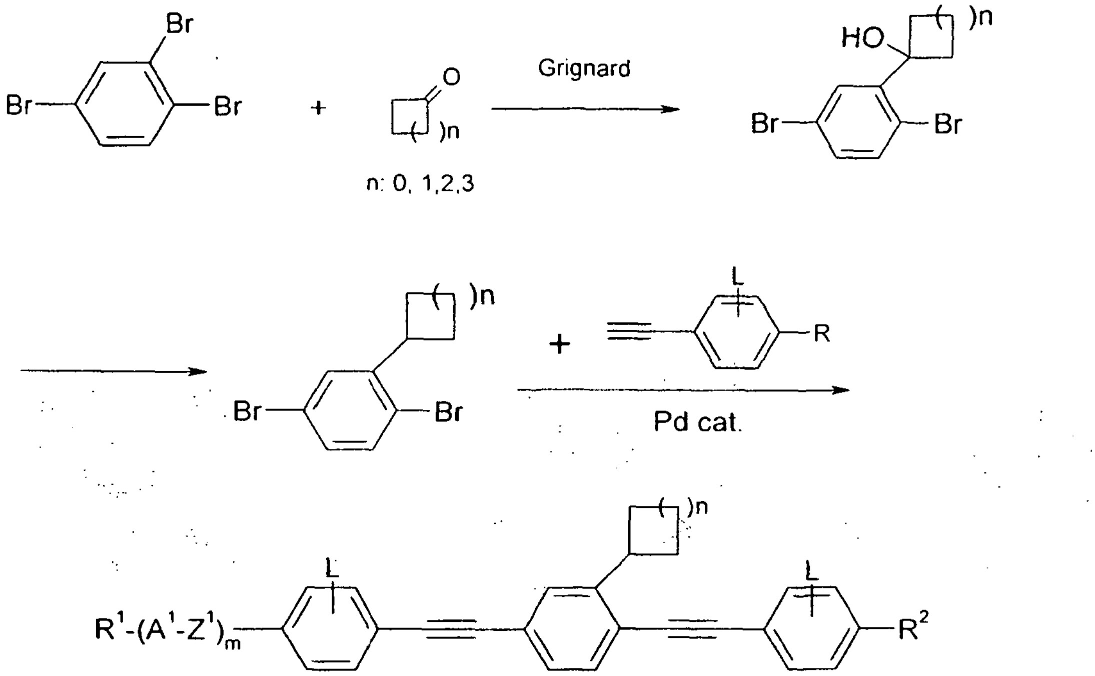


**Schema 2**. Beispielhafte Synthese der Verbindungen der Formel I (symmetrisch); L wie $L^1$ definiert, insbesondere H oder F.

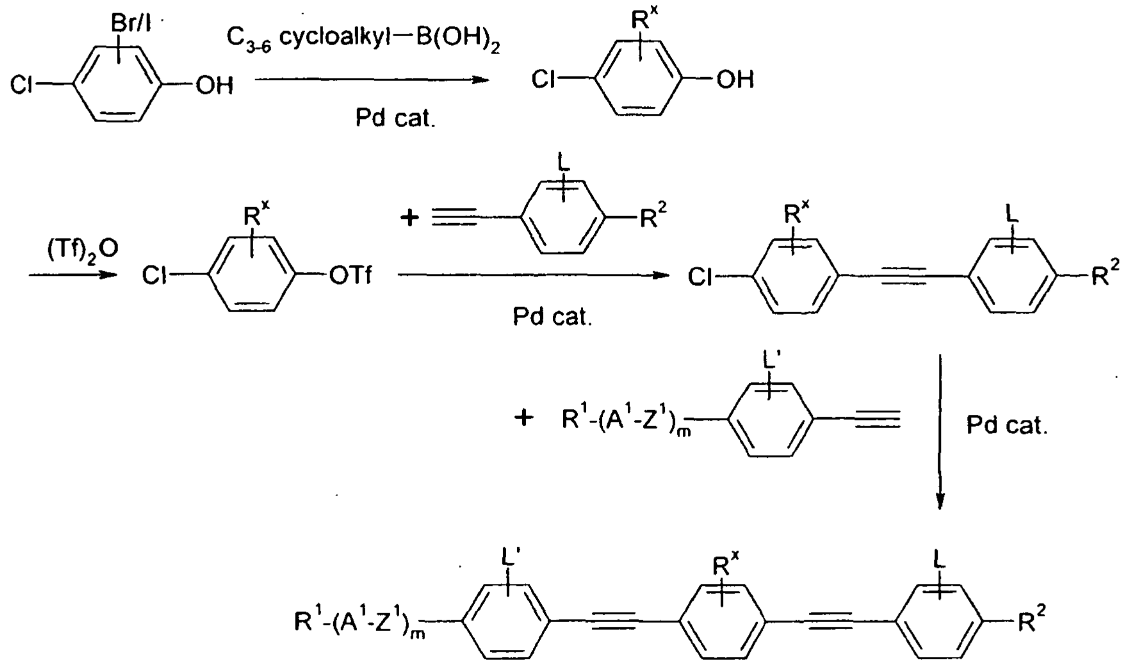


**Schema 3**. Beispielhafte Synthese der Verbindungen der Formel I (asymmetrisch); L, L' wie $L^1$ definiert, insbesondere H oder F.

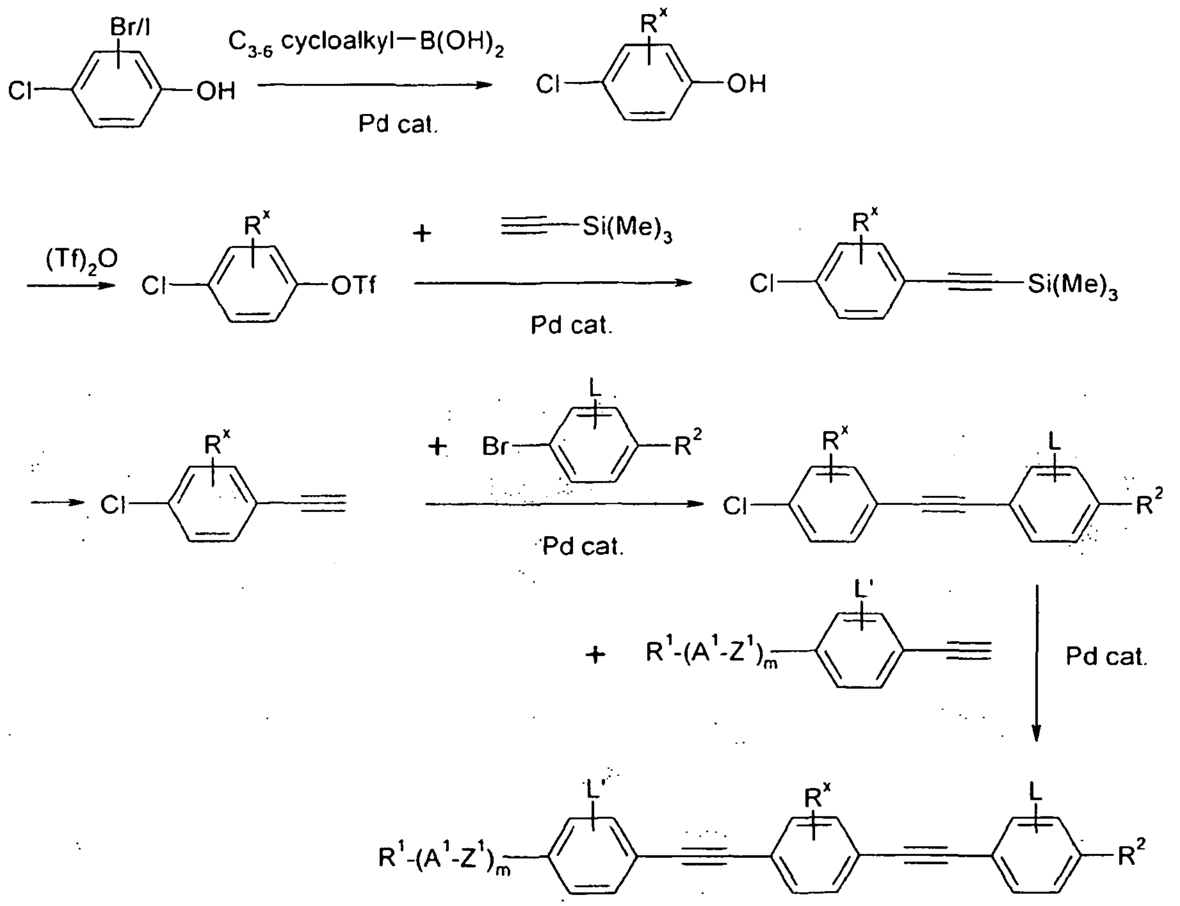


**Schema 4**. Beispielhafte Synthese der Verbindungen der Formel I (asymmetrisch); L, L' wie $L^1$ definiert, insbesondere H oder F.

Die erfindungsgemäßen flüssigkristallinen Medien gemäß der vorliegenden Erfindung enthalten eine oder mehrere Verbindungen der Formel I und optional weitere, vorzugsweise mesogene Komponenten.

Weitere Komponenten sind vorzugsweise ausgewählt aus den Verbindungen der Formeln II, III und IV:

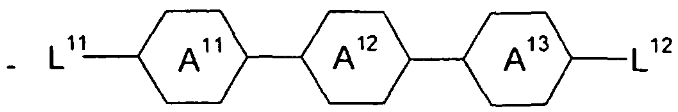

II

worin

| | |
|---|---|
| $L^{11}$ | $R^{11}$ oder $X^{11}$, |
| $L^{12}$ | $R^{12}$ oder $X^{12}$, |
| $R^{11}$ und $R^{12}$ | unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy oder unfluoriertes Alkoxyalkyl mit 2 bis 15, bevorzugt 3 bis 10, C-Atomen, vorzugsweise Alkyl oder unfluoriertes Alkenyl bedeuten, |
| $X^{11}$ und $X^{12}$ | unabhängig voneinander H, F, Cl, -CN, -NCS, $-SF_5$, fluoriertes Alkyl, insbesondere $-CF_3$, oder fluoriertes Alkoxy mit 1 bis 7 C-Atomen, insbesondere $-OCF_3$, oder fluoriertes Alkenyl, fluoriertes Alkenyloxy oder fluoriertes Alkoxyalkyl mit 2 bis 7 C-Atomen, vorzugsweise fluoriertes Alkoxy, fluoriertes Alkenyloxy, F oder Cl bedeuten, und |

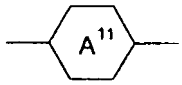

bis

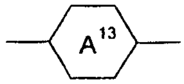

unabhängig voneinander

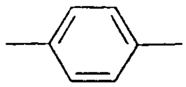 , 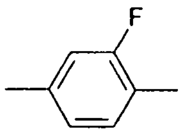 , 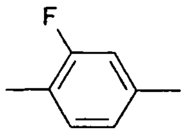 ,

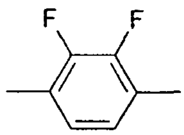 , 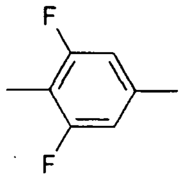 , 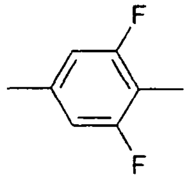 ,

oder

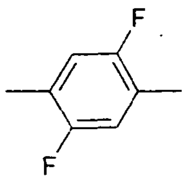 ,

vorzugsweise

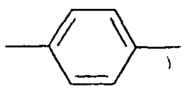 , 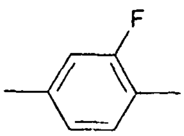 , 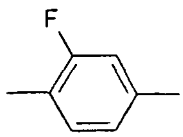 ,

oder

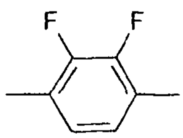 ,

bedeuten

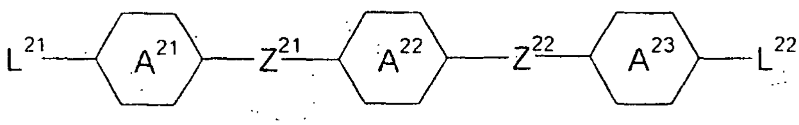 III

worin

$L^{21}$ $R^{21}$ und, im Fall, dass $Z^{21}$ und/oder $Z^{22}$ *trans*- -CH=CH - oder *trans*- -CF=CF-, bedeutet, alternativ $X^{21}$, bedeutet,

$L^{22}$ $R^{22}$ und, im Fall, dass $Z^{21}$ und/oder $Z^{22}$ *trans*- -CH=CH - oder *trans*- -CF=CF-, bedeutet, alternativ $X^{22}$, bedeutet,

$R^{21}$ und $R^{22}$ unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen, vorzugsweise Alkyl oder unfluoriertes Alkenyl, bedeuten,

$X^{21}$ und $X^{22}$ unabhängig voneinander F oder Cl, -CN, -NCS, $-SF_5$, fluoriertes Alkyl oder Alkoxy mit 1 bis 7 C-Atomen oder oder fluoriertes Alkenyl, Alkenyloxy oder Alkoxyalkyl mit 2 bis 7 C-Atomen, oder -NCS, vorzugsweise -NCS, bedeuten,
einer von

$Z^{21}$ und $Z^{22}$ *trans*- -CH=CH-, *trans*- -CF=CF- oder -C≡C- bedeutet und der andere unabhängig davon *trans*- -CH=CH-, *trans*- -CF=CF- oder eine Einfachbindung bedeutet, vorzugsweise einer von ihnen -C≡C- oder *trans*- -CH=CH- und der andere eine Einfachbindung bedeutet, und

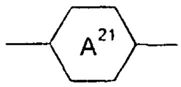

bis

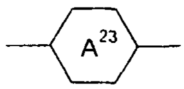

unabhängig voneinander

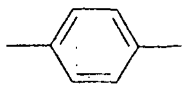 , 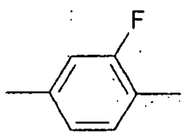 , 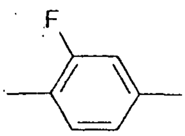 ,

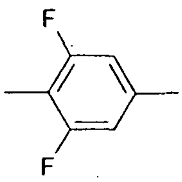 , 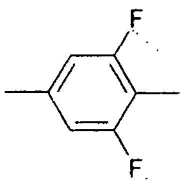 , 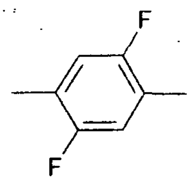 ,

oder

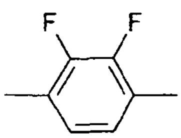 ,

vorzugsweise

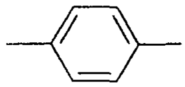, 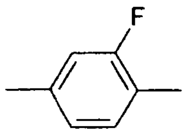, 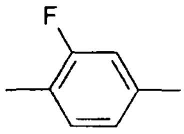,

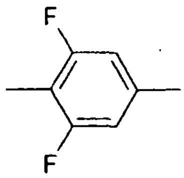, 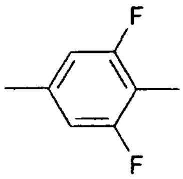,

oder

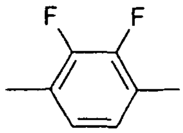,

bedeuten

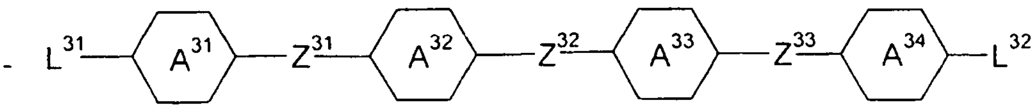 IV

worin

$L^{31}$ $R^{31}$ oder $X^{31}$,

$L^{32}$ $R^{32}$ oder $X^{32}$,

$R^{31}$ und $R^{32}$ unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen, vorzugsweise Alkyl oder unfluoriertes Alkenyl bedeuten,

$X^{31}$ und $X^{32}$ unabhängig voneinander H, F, Cl, -CN, -NCS, $-SF_5$, fluoriertes Alkyl oder fluoriertes Alkoxy mit 1 bis 7 C-Atomen oder fluoriertes Alkenyl, fluoriertes Alkenyloxy oder fluoriertes Alkoxyalkyl mit 2 bis 7 C-Atomen, vorzugsweise fluoriertes Alkoxy, fluoriertes Alkenyloxy, F oder Cl bedeuten, und

$Z^{31}$ bis $Z^{33}$ unabhängig voneinander *trans*- -CH=CH-, *trans*--CF=CF-, -C≡C- oder eine Einfachbindung bedeuten, vorzugsweise eines oder mehrere von ihnen eine Einfachbindung bedeutet, besonders bevorzugt alle eine Einfachbindung bedeuten und

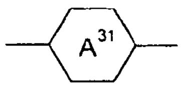

bis

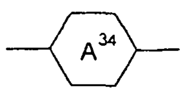

unabhängig voneinander

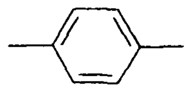 , 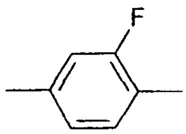 , 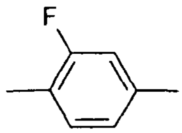 ,

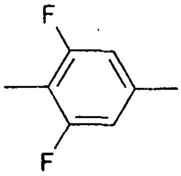 , 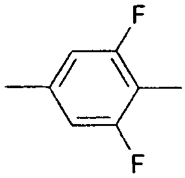 , 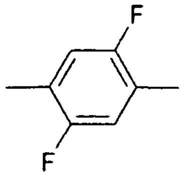 ,

oder

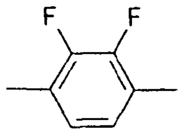 ,

vorzugsweise

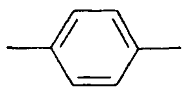 , 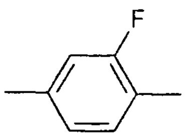 , 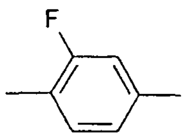 ,

oder

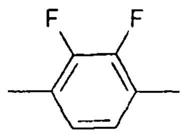 ,

bedeuten.

In einer bevorzugten Ausführungsform der vorliegenden Erfindung enthalten die flüssigkristallinen Medien eine oder mehrere Verbindungen der Formel I und eine oder mehrere Verbindungen der Formel II.

In einer weiteren bevorzugten Ausführungsform der vorliegenden Erfindung enthalten die flüssigkristallinen Medien eine oder mehrere Verbindungen der Formel I und eine oder mehrere Verbindungen der Formel III.

Ebenfalls bevorzugt enthalten die flüssigkristallinen Medien gemäß der vorliegenden Erfindung eine oder mehrere Verbindungen der Formel I und eine oder mehrere Verbindungen der Formel IV.

Besonders bevorzugt nach der vorliegenden Erfindung sind flüssigkristalline Medien, die eine oder mehrere Verbindungen der Formel I, eine oder mehrere Verbindungen der Formel II und eine oder mehrere Verbindungen der Formel III oder IV, bevorzugt III, enthalten.

Bevorzugt enthalten die flüssigkristallinen Medien gemäß der vorliegenden Anmeldung insgesamt 5 bis 90 %, bevorzugt 10 bis 85 % und besonders bevorzugt 15 bis 80 %, an Verbindungen der Formel I.

Bevorzugt enthalten die flüssigkristallinen Medien gemäß der vorliegenden Anmeldung insgesamt 15 bis 90 %, bevorzugt 20 bis 85 % und besonders bevorzugt 25 bis 80 %, an Verbindungen der Formel I oder II.

Bevorzugt enthalten die flüssigkristallinen Medien gemäß der vorliegenden Anmeldung insgesamt 1 bis 70 %, bevorzugt 2 bis 65 % und besonders bevorzugt 3 bis 60 %, an Verbindungen der Formel III.

Bevorzugt enthalten die flüssigkristallinen Medien gemäß der vorliegenden Anmeldung insgesamt 0 bis 60 %, bevorzugt 5 bis 55 % und besonders bevorzugt 10 bis 50 %, an Verbindungen der Formel IV.

Ebenfalls bevorzugt enthalten die flüssigkristallinen Medien gemäß der vorliegenden Anmeldung insgesamt 5 bis 60 %, bevorzugt 10 bis 50 % und besonders bevorzugt 7 bis 20 % an Verbindungen der Formel III.

Im Fall der Verwendung einer einzelnen Homologen Verbindung, entsprechen diese Grenzen der Konzentration dieses Homologen, die bevorzugt 2 bis 20 %, besonders bevorzugt 1 bis 15 % beträgt. Im Fall der Verwendung von zwei oder mehr Homologen beträgt die Konzentration der einzelnen Homologen ebenfalls bevorzugt jeweils 1 bis 15 %.

Die Verbindungen der Formel I bis III umfassen jeweils dielektrisch positive Verbindungen mit einer dielektrischen Anisotropie von mehr als 3, dielektrisch neutrale Verbindungen mit einer dielektrischen Anisotropie von weniger als 3 und mehr als -1,5 und dielektrisch negative Verbindungen mit einer dielektrischen Anisotropie von -1,5 und weniger.

In einer bevorzugten Ausführungsform der vorliegenden Erfindung enthält das Flüssigkristallmedium eine oder mehrere Verbindungen der Formeln II, bevorzugt ausgewählt aus der Gruppe der Verbindungen der Formeln II-1 bis II-3, bevorzugt der Formeln II-1 und/oder II-2, bevorzugt der Formeln II-1 und II-2, stärker bevorzugt bestehen diese Verbindungen der Formel II überwiegend, noch stärker bevorzugt bestehen sie im Wesentlichen und ganz besonders bevorzugt bestehen sie vollständig daraus:

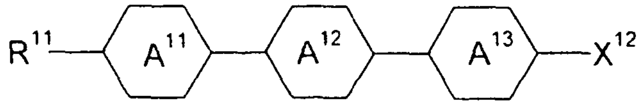

II-1

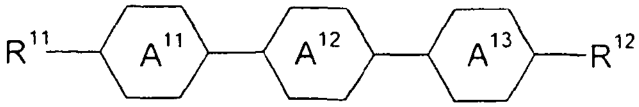

II-2

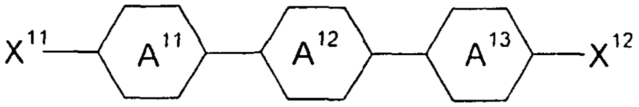

II-3

worin die Parameter die jeweiligen oben bei Formel II angegebenen Bedeutungen haben und bevorzugt

$R^{11}$ unfluoriertes Alkyl mit 1 bis 7 C-Atomen oder unfluoriertes Alkenyl mit 2 bis 7 C-Atomen,

$R^{12}$ unfluoriertes Alkyl mit 1 bis 7 C-Atomen, unfluoriertes Alkenyl mit 2 bis 7 C-Atomen, oder unfluoriertes Alkoxy mit 1 bis 7 C-Atomen,

$X^{11}$ und $X^{12}$ unabhängig voneinander F, Cl, $-OCF_3$, $-CF_3$, -CN, -NCS oder $-SF_5$, bevorzugt F, Cl, $-OCF_3$, oder -CN bedeuten.

Bevorzugt werden die Verbindungen der Formeln II-1 ausgewählt aus der Gruppe der Verbindungen der Formeln II-1a bis II-1d, stärker bevorzugt bestehen diese Verbindungen der Formel II überwiegend, noch stärker bevorzugt bestehen sie im Wesentlichen und ganz besonders bevorzugt bestehen sie vollständig daraus:

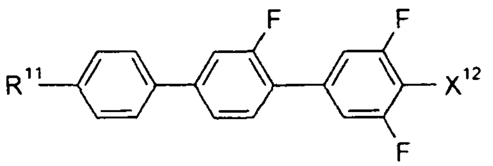

II-1a

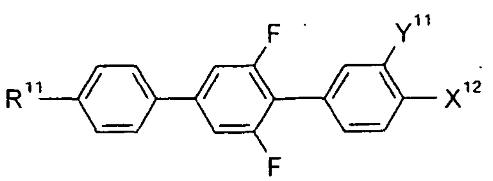

II-1b

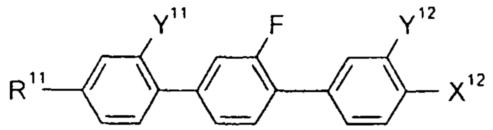

II-1c

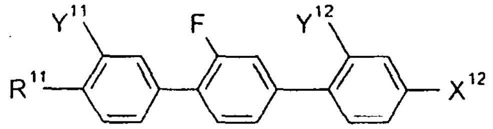

II-1d

worin die Parameter die jeweiligen oben bei Formel II-1 angegebenen Bedeutungen haben und worin

$Y^{11}$ und $Y^{12}$ jeweils unabhängig voneinander H oder F bedeuten, und bevorzugt

$R^{11}$ Alkyl oder Alkenyl, und

$X^{11}$ F, Cl oder $-OCF_3$, bedeuten.

Bevorzugt werden die Verbindungen der Formeln II-2 ausgewählt aus der Gruppe der Verbindungen der Formeln II-2a bis II-2e und/oder aus der Gruppe der Verbindungen der Formeln II-2f und II-2g, stärker bevorzugt bestehen diese Verbindungen der Formel II überwiegend, noch stärker bevorzugt bestehen sie im Wesentlichen und ganz besonders bevorzugt bestehen sie vollständig daraus:

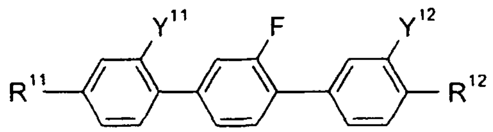

II-2a

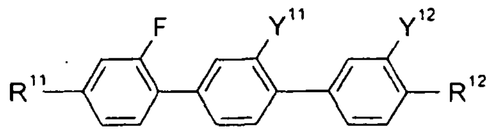

II-2b

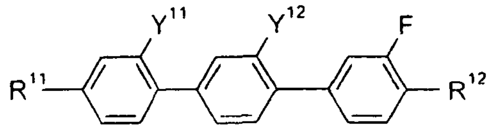

II-2c

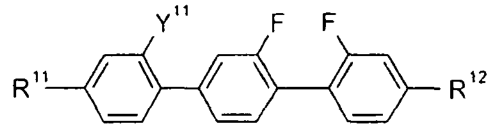

II-2d

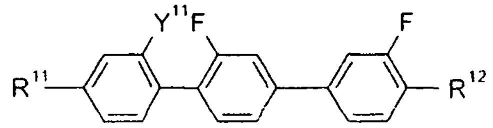

II-2e

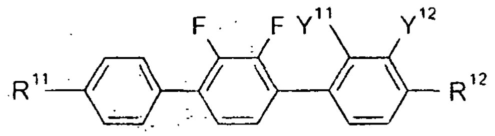

II-2f

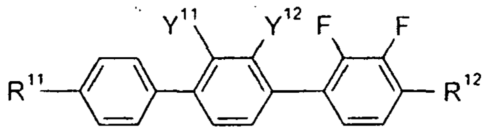

II-2g

wobei jeweils die Verbindungen der Formel II-2a von den Verbindungen der Formeln II-2b und II-2C, die Verbindungen der Formel II-2b von den Verbindungen der Formel II-2c und die Verbindungen der Formel II-2e von den Verbindungen der Formel II-2f ausgeschlossen sind, und
worin die Parameter die jeweiligen oben bei Formel II-1 angegebenen Bedeutungen haben und worin

$Y^{11}$ und $Y^{12}$ jeweils unabhängig voneinander H oder F bedeuten, und bevorzugt

$R^{11}$ Alkyl oder Alkenyl,

$X^{11}$ F, Cl oder $-OCF_3$ bedeuten, und bevorzugt einer von

$Y^{11}$ und $Y^{12}$ H und der andere H oder F bevorzugt ebenfalls H bedeutet.

Bevorzugt sind die Verbindungen der Formel II-3 Verbindungen der Formel II-3a:

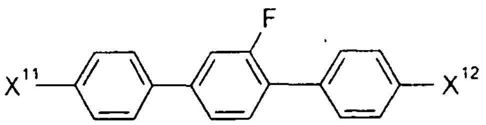

II-3a

worin die Parameter die jeweiligen oben bei Formel II-1 angegebenen Bedeutungen haben und worin bevorzugt

$X^{11}$ F, Cl, bevorzugt F,

$X^{12}$ F, Cl oder $-OCF_3$, bevorzugt $-OCF_3$ bedeutet.

In einer noch stärker bevorzugten Ausführungsform der vorliegenden Erfindung werden die Verbindungen der Formel II ausgewählt aus der Gruppe der Verbindungen II-1a bis II-1d, bevorzugt ausgewählt aus der Gruppe der Verbindungen II-1c und II-1d, stärker bevorzugt bestehen die Verbindungen der Formel II überwiegend, noch stärker bevorzugt bestehen sie im Wesentlichen und ganz besonders bevorzugt bestehen sie vollständig daraus:

Bevorzugt werden die Verbindungen der Formeln II-1a ausgewählt aus der Gruppe der Verbindungen der Formeln II-1a-1 und II-1a-2, stärker bevorzugt bestehen diese Verbindungen der Formel II überwiegend, noch stärker bevorzugt bestehen sie im Wesentlichen und ganz besonders bevorzugt bestehen sie vollständig daraus:

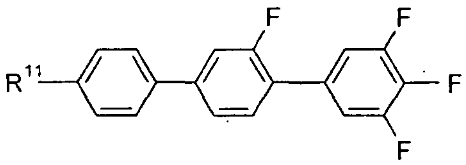

II-1a-1

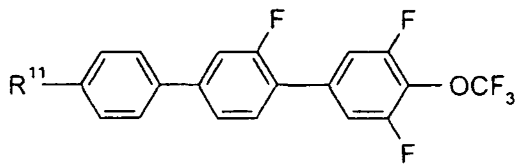

II-1a-2

worin

$R^{11}$ die oben angegebene Bedeutung hat und bevorzugt $C_nH_{2n+1}$ bedeutet, worin

n eine ganze Zahl im Bereich von 0 bis 7, bevorzugt im Bereich von 1 bis 5 und besonders bevorzugt 3 oder 7 bedeutet.

Bevorzugt sind die Verbindungen der Formeln II-1b Verbindungen der Formel II-2b-1:

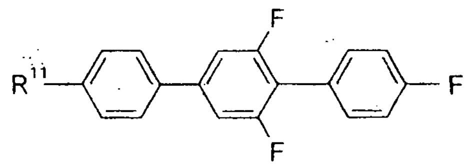

II-1b-1

worin

$R^{11}$ die oben angegebene Bedeutung hat und bevorzugt $C_nH_{2n+1}$ bedeutet, worin

n eine ganze Zahl im Bereich von 0 bis 15, bevorzugt im Bereich von 1 bis 7 und besonders bevorzugt 1 bis 5 bedeutet.

Bevorzugt werden die Verbindungen der Formeln II-1c ausgewählt aus der Gruppe der Verbindungen der Formeln II-1c-1 bis und II-1c-4, bevorzugt ausgewählt aus der Gruppe der Verbindungen der Formeln II-1c-1 und II-1c-2, stärker bevorzugt bestehen diese Verbindungen der Formel II überwiegend, noch stärker bevorzugt bestehen sie im Wesentlichen und ganz besonders bevorzugt bestehen sie vollständig daraus:

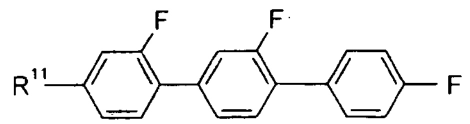

II-1c-1

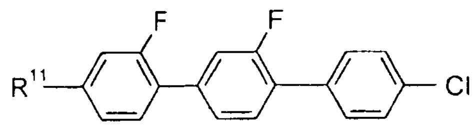

II-1c-2

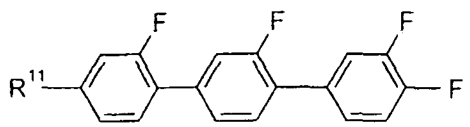

II-1c-3

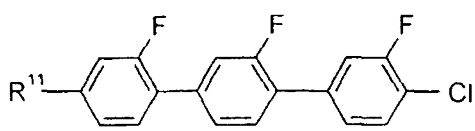

II-1c-4

worin

$R^{11}$ die oben angegebene Bedeutung hat und bevorzugt $C_nH_{2n+1}$ bedeutet, worin

n eine ganze Zahl im Bereich von 0 bis 15, bevorzugt im Bereich von 1 bis 7 und besonders bevorzugt 1 bis 5 bedeutet.

Bevorzugt werden die Verbindungen der Formeln II-1d ausgewählt aus der Gruppe der Verbindungen der Formeln II-1d-1 und II-1d-2, bevorzugt der Verbindung der Formeln II-1d-2, stärker bevorzugt bestehen diese Verbindungen der Formel II überwiegend, noch stärker bevorzugt bestehen sie im Wesentlichen und ganz besonders bevorzugt bestehen sie vollständig daraus:

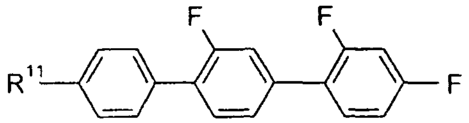

II-1d-1

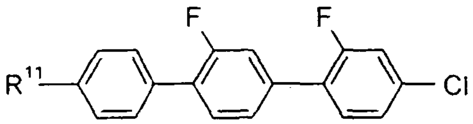

II-1d-2

worin

$R^{11}$ die oben angegebene Bedeutung hat und bevorzugt $C_nH_{2n+1}$ bedeutet, worin

n eine ganze Zahl im Bereich von 0 bis 15, bevorzugt im Bereich von 1 bis 7 und besonders bevorzugt 1 bis 5 bedeutet.

Bevorzugt werden die Verbindungen der Formeln II-2a ausgewählt aus der Gruppe der Verbindungen der Formeln II-2a-1 und II-2a-2, bevorzugt der Verbindungen der Formeln II-1a-1, stärker bevorzugt bestehen diese Verbindungen der Formel II überwiegend, noch stärker bevorzugt bestehen sie im Wesentlichen und ganz besonders bevorzugt bestehen sie vollständig daraus:

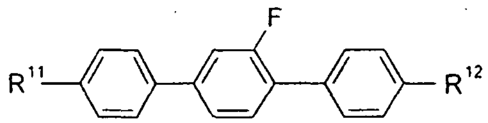

II-2a-1

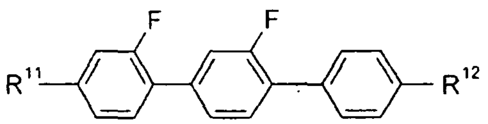

II-2a-2

worin

$R^{11}$ die oben angegebene Bedeutung hat und bevorzugt $C_nH_{2n+1}$ oder $CH_2=CH-(CH_2)_z$ bedeutet, und

$R^{12}$ die oben angegebene Bedeutung hat und bevorzugt $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Bevorzugte Kombinationen von ($R^{11}$ und $R^{12}$), insbesondere bei Formel II-2a-1 sind ($C_nH_{2n+1}$ und $C_mH_{2m+1}$), ($C_nH_{2n+1}$ und $O-C_mH_{2m+1}$), ($CH_2=CH-(CH_2)_z$ und $C_mH_{2m+1}$), ($CH_z=CH-(CH_2)_z$ und $O-C_mH_{2m+1}$) und ($C_nH_{2n+1}$ und $(CH_2)_z-CH=CH_2$).

Bevorzugte Verbindungen der Formel II-2b sind die Verbindungen der Formel II-2b-1:

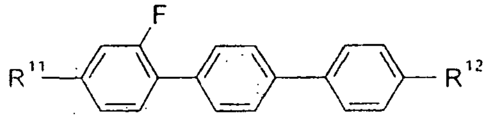

II-2b-1

worin

$R^{11}$ die oben angegebene Bedeutung hat und bevorzugt $C_nH_{2n+1}$ oder $CH_2=CH-(CH_2)_z$ bedeutet, und

$R^{12}$ die oben angegebene Bedeutung hat und bevorzugt $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugte Kombination von ($R^{11}$ und $R^{12}$) ist hier insbesondere ($C_nH_{2n-1}$ und $C_mH_{2m+1}$).

Bevorzugte Verbindungen der Formel II-2c sind die Verbindungen der Formel II-2c-1:

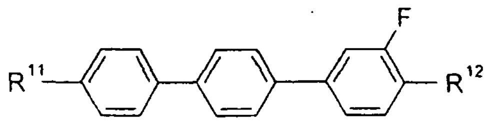

II-2c-1

worin

$R^{11}$ die oben angegebene Bedeutung hat und bevorzugt $C_nH_{2n+1}$ oder $CH_2=CH-(CH_2)_z$ bedeutet, und

$R^{12}$ die oben angegebene Bedeutung hat und bevorzugt $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugte Kombination von ($R^{11}$ und $R^{12}$) ist hier insbesondere ($C_nH_{2n+1}$ und $C_mH_{2m+1}$).

Bevorzugte Verbindungen der Formel II-2d sind die Verbindungen der Formel II-2d-1:

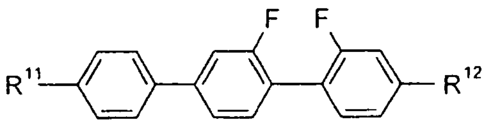

II-2d-1

worin

$R^{11}$ die oben angegebene Bedeutung hat und bevorzugt $C_nH_{2n+1}$ oder $CH_2=CH-(CH_2)_z$ bedeutet, und

$R^{12}$ die oben angegebene Bedeutung hat und bevorzugt $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugte Kombination von ($R^{11}$ und $R^{12}$) ist hier insbesondere ($C_nH_{2n+1}$ und $C_mH_{2m+1}$).

Bevorzugte Verbindungen der Formel II-2e sind die Verbindungen der Formel II-2e-1:

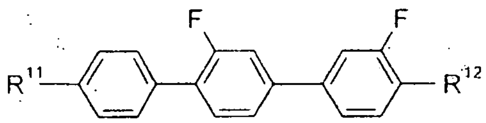

II-2e-1

worin

$R^{11}$ die oben angegebene Bedeutung hat und bevorzugt $C_nH_{2n+1}$ oder $CH_2=CH-(CH_2)_z$ bedeutet, und

$R^{12}$ die oben angegebene Bedeutung hat und bevorzugt $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugte Kombination von ($R^{11}$ und $R^{12}$) ist hier insbesondere ($C_nH_{2n+1}$ und $O-C_mH_{2m+1}$).

Bevorzugte Verbindungen der Formel II-2e sind die Verbindungen der Formel II-2f1:

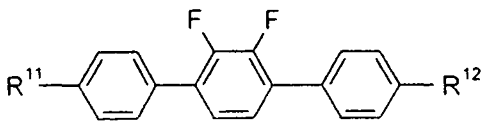

II-2f-1

worin

$R^{11}$ die oben angegebene Bedeutung hat und bevorzugt $C_nH_{2n+1}$ oder $CH_2=CH-(CH_2)_z$ bedeutet, und

$R^{12}$ die oben angegebene Bedeutung hat und bevorzugt $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{11}$ und $R^{12}$) sind hier insbesondere ($C_nH_{2n+1}$ und $C_mH_{2m+1}$) und ($C_nH_{2n+1}$ und $O-C_mH_{2m+1}$), besonders bevorzugt ($C_nH_{2n+1}$ und $C_mH_{2m+1}$).

Bevorzugte Verbindungen der Formel II-2f sind die Verbindungen der Formel II-2f-1:

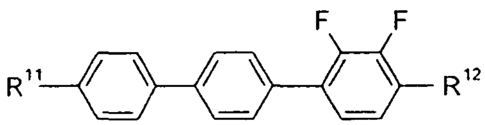

II-2f-1

worin

$R^{11}$ die oben angegebene Bedeutung hat und bevorzugt $C_nH_{2n+1}$ oder $CH_2=CH-(CH_2)_z$ bedeutet, und

$R^{12}$ die oben angegebene Bedeutung hat und bevorzugt $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{11}$ und $R^{12}$) sind hier insbesondere ($C_nH_{2n+1}$ und $C_mH_{2m+1}$) und ($C_nH_{2n+1}$ und O-$C_mH_{2m+1}$), besonders bevorzugt ($C_nH_{2n+1}$ und O-$C_mH_{2m+1}$).

Bevorzugt werden die Verbindungen der Formeln III ausgewählt aus der Gruppe der Verbindungen der Formeln III-1 bis III-4, stärker bevorzugt bestehen diese Verbindungen der Formel III überwiegend, noch stärker bevorzugt bestehen sie im Wesentlichen und ganz besonders bevorzugt bestehen sie vollständig daraus:

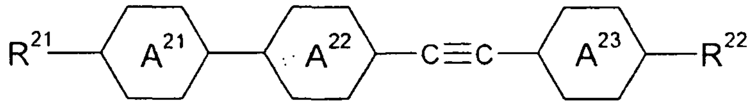

III-1

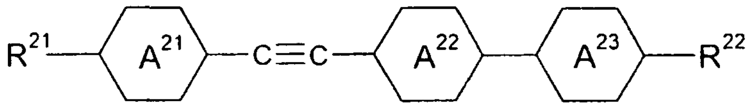

III-2

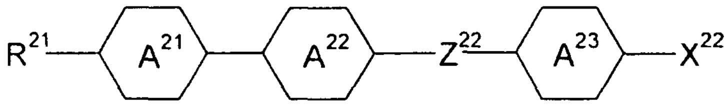

III-3

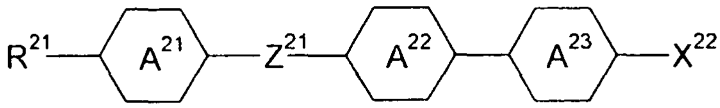

III-4

worin

$Z^{21}$ und $Z^{22}$ *trans*- -CH=CH- oder *trans*- -CF=CF-, bevorzugt *trans*- -CH=CH-, bedeutet, und die übrigen Parameter die oben unter Formel III gegebene Bedeutung haben und bevorzugt

$R^{21}$ und $R^{22}$ unabhängig voneinander H, unfluoriertes Alkyl oder Alkoxy mit 1 bis 7 C-Atomen oder unfluoriertes Alkenyl mit 2 bis 7 C-Atomen, bedeuten,

$X^{22}$ F, Cl, -CN oder -NCS, vorzugsweise -NCS, bedeutet,

und einer von

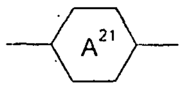

bis

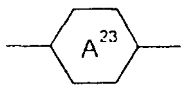

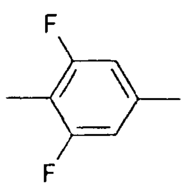

,

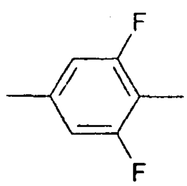

,

oder

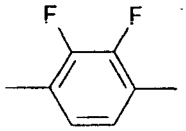

bedeutet und die anderen unabhängig voneinander

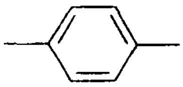
,
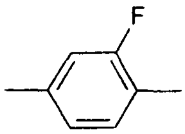
,
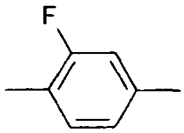
,

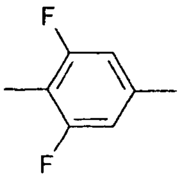
,
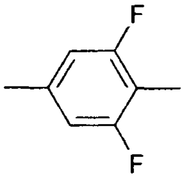
,
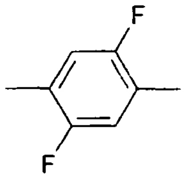
,

oder

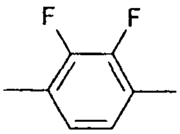
,

vorzugsweise

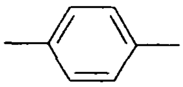
,
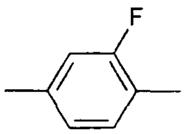
,
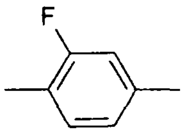
,

oder

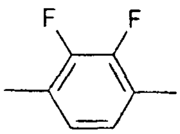

bedeuten und bevorzugt

$R^{21}$ $C_nH_{2n+1}$ oder $CH_2=CH-(CH_2)_z$ bedeutet, und

$R^{22}$ $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Bevorzugt werden die Verbindungen der Formeln III-1 ausgewählt aus der Gruppe der Verbindungen der Formeln III-1a und III-1b, bevorzugt ausgewählt Verbindungen der Formeln III-1a, stärker bevorzugt bestehen diese Verbindungen der Formel III überwiegend, noch stärker bevorzugt bestehen sie im Wesentlichen und ganz besonders bevorzugt bestehen sie vollständig daraus:

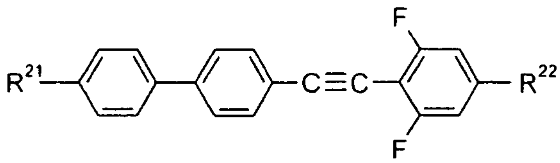

III-1a

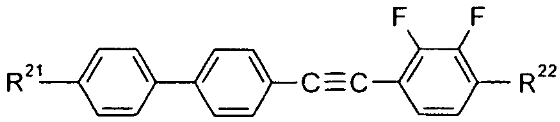

III-1b

worin

$R^{21}$ die oben angegebene Bedeutung hat und bevorzugt $C_nH_{2n+1}$ oder $CH_2=CH-(CH_2)_z$ bedeutet, und

$R^{22}$ die oben angegebene Bedeutung hat und bevorzugt $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{21}$ und $R^{22}$) sind hier insbesondere ($C_nH_{2n+1}$ und $C_mH_{2m+1}$) und ($C_nH_{2n+1}$ und $O-C_mH_{2m+1}$), bei Formel III-1a besonders bevorzugt ($C_nH_{2n+1}$ und $C_mH_{2m+1}$) und bei Formel III-1b besonders bevorzugt ($C_nH_{2n+1}$ und $O-C_mH_{2m+1}$).

Bevorzugt sind die Verbindungen der Formel III-2 Verbindungen der Formel III-2a:

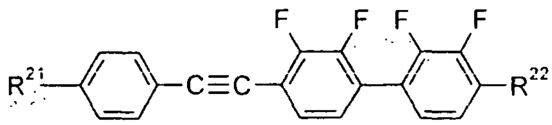

III-2a

worin

$R^{21}$ die oben angegebene Bedeutung hat und bevorzugt $C_nH_{2n+1}$ oder $CH_2=CH-(CH_2)_z$ bedeutet, und

$R^{22}$ die oben angegebene Bedeutung hat und bevorzugt $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{21}$ und $R^{22}$) sind hier insbesondere ($C_nH_{2n+1}$ und $C_mH_{2m+1}$) und ($C_nH_{2n+1}$ und $O-C_mH_{2m+1}$).

Bevorzugt sind die Verbindungen der Formel III-3 Verbindungen der Formel III-3a oder III-3b:

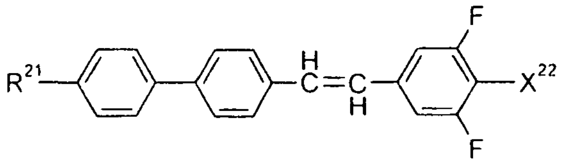

III-3a

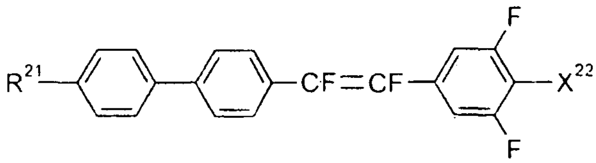

III-3b

worin die Parameter die oben unter Formel III-3 gegebene Bedeutung haben und bevorzugt

$R^{21}$ die oben angegebene Bedeutung hat und bevorzugt $C_nH_{2n+1}$ bedeutet, worin

n eine ganze Zahl im Bereich von 0 bis 7, bevorzugt im Bereich von 1 bis 5, und

$X^{22}$ -F, -Cl, $OCF_3$, -CN oder -NCS, besonders bevorzugt -NCS, bedeutet.

Bevorzugt sind die Verbindungen der Formeln III-4 Verbindungen der Formel III-4a:

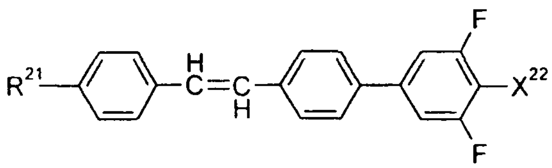

III-4a

worin die Parameter die oben unter Formel III-4 gegebene Bedeutung haben und bevorzugt

$R^{21}$ die oben angegebene Bedeutung hat und bevorzugt $C_nH_{2n+1}$ bedeutet, worin

n eine ganze Zahl im Bereich von 0 bis 7, bevorzugt im Bereich von 1 bis 5, und

$X^{22}$ -F, -Cl, $OCF_3$, -CN oder -NCS, besonders bevorzugt -NCS, bedeutet.

Weitere bevorzugte Verbindungen der Formel III sind die Verbindungen der folgenden Formeln

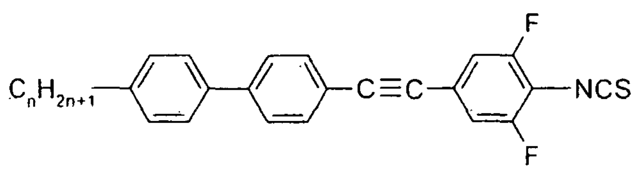

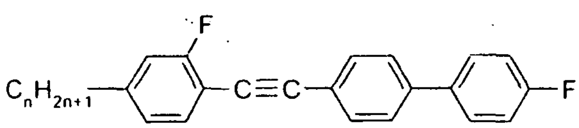

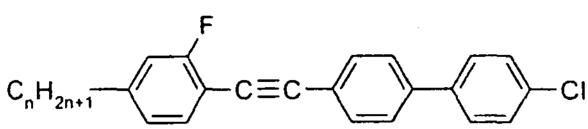

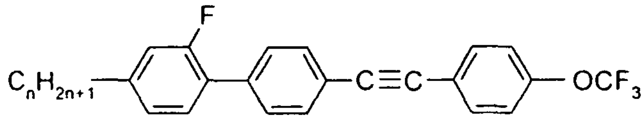

worin

n eine ganze Zahl im Bereich von 0 bis 7, bevorzugt im Bereich von 1 bis 5 bedeutet.

Bevorzugt werden die Verbindungen der Formeln IV ausgewählt aus der Gruppe der Verbindungen der Formeln IV-1 bis IV-6, stärker bevorzugt bestehen diese Verbindungen der Formel IV überwiegend, noch stärker bevorzugt bestehen sie im Wesentlichen und ganz besonders bevorzugt bestehen sie vollständig daraus:

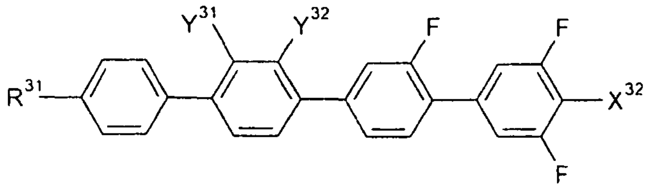

IV-1

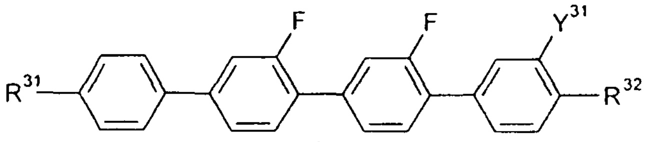

IV-2

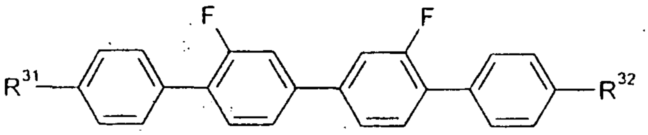

IV-3

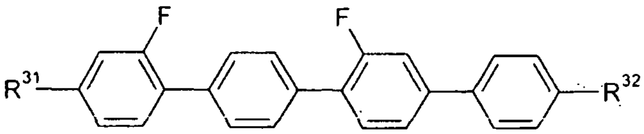

IV-4

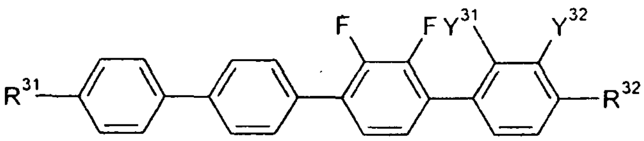

IV-5

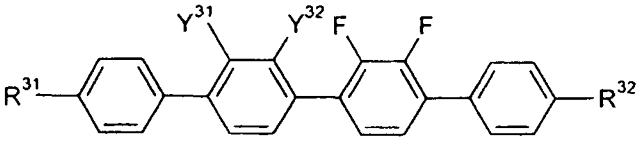

IV-6

wobei die Verbindungen der Formel IV-5 von den Verbindungen der Formel IV-6 ausgeschlossen sind, und worin die Parameter die jeweiligen oben bei Formel IV angegebenen Bedeutungen haben und bevorzugt

$R^{31}$ unfluoriertes Alkyl oder Alkoxy jeweils mit 1 bis 7 C-Atomen oder unfluoriertes Alkenyl mit 2 bis 7 C-Atomen,

$R^{32}$ unfluoriertes Alkyl oder Alkoxy, jeweils mit 1 bis 7 C-Atomen oder unfluoriertes Alkenyl mit 2 bis 7 C-Atomen, und

$X^{32}$ F, Cl, oder $-OCF_3$, bevorzugt F, bedeutet, und besonders bevorzugt

$R^{31}$ die oben angegebene Bedeutung hat und bevorzugt $C_nH_{2n+1}$ oder $CH_2=CH-(CH_2)_z$ bedeutet, und

$R^{32}$ die oben angegebene Bedeutung hat und bevorzugt $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Bevorzugt werden die Verbindungen der Formeln IV-1 ausgewählt aus der Gruppe der Verbindungen der Formeln IV-1a bis IV-1d, stärker bevorzugt bestehen diese Verbindungen der Formel IV-1 überwiegend, noch stärker bevorzugt bestehen sie im Wesentlichen und ganz besonders bevorzugt bestehen sie vollständig daraus:

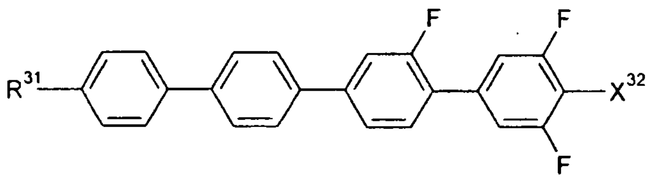

IV-1a

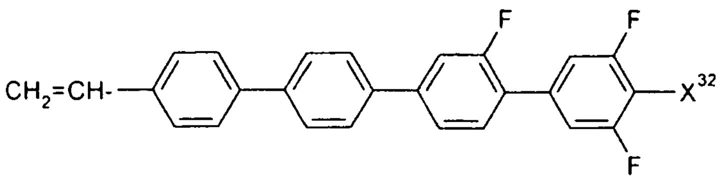

IV-1b

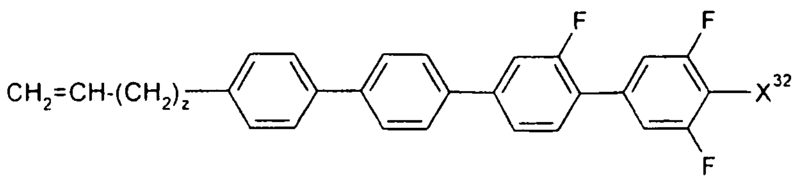

IV-1c

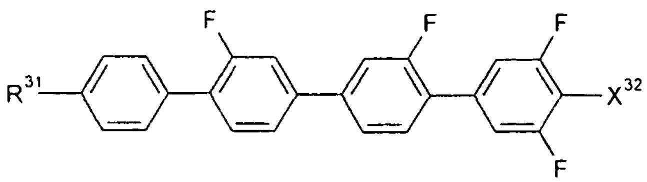

IV-1d

worin $X^{32}$ die oben bei Formel IV-2 gegebene Bedeutung hat und

$R^{31}$ die oben angegebene Bedeutung hat und bevorzugt $C_nH_{2n+1}$ bedeutet, worin

n 1 bis 7, bevorzugt 2 bis 6, besonders bevorzugt 2, 3 oder 5 und

z 0, 1, 2, 3 oder 4, bevorzugt 0 oder 2, und

$X^{32}$ bevorzugt F

bedeutet.

Bevorzugt werden die Verbindungen der Formeln IV-2 ausgewählt aus der Gruppe der Verbindungen der Formeln IV-2a und IV-2b, bevorzugt der Formel IV-2a, stärker bevorzugt bestehen diese Verbindungen der Formel IV-2 überwiegend, noch stärker bevorzugt bestehen sie im Wesentlichen und ganz besonders bevorzugt bestehen sie

vollständig daraus:

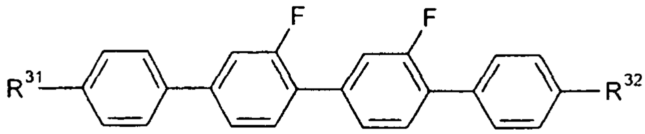

IV-2a

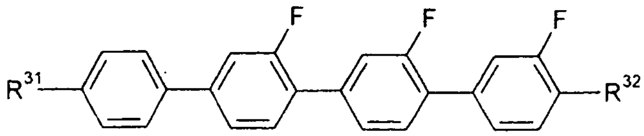

IV-2b

worin

$R^{31}$ die oben angegebene Bedeutung hat und bevorzugt $C_nH_{2n+1}$ oder $CH_2$=CH-$(CH_2)_z$ bedeutet, und

$R^{32}$ die oben angegebene Bedeutung hat und bevorzugt $C_mH_{2m+1}$ oder O-$C_mH_{2m+1}$ oder $(CH_2)_z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{31}$ und $R^{32}$) sind hier insbesondere ($C_nH_{2n+1}$ und $C_mH_{2m+1}$) und ($C_nH_{2n+1}$ und O-$C_mH_{2m+1}$), Besonders bevorzugt ($C_nH_{2n+1}$ und $C_mH_{2m+1}$).

Bevorzugt sind die Verbindungen der Formel IV-3 Verbindungen der Formel IV-3a:

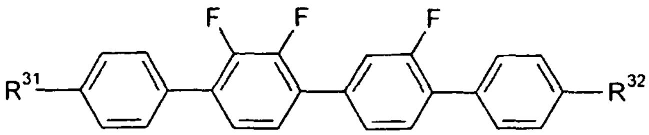

IV-3a

worin

$R^{31}$ die oben angegebene Bedeutung hat und bevorzugt $C_nH_{2n+1}$ oder $CH_2$=CH-$(CH_2)_z$ bedeutet, und

$R^{32}$ die oben angegebene Bedeutung hat und bevorzugt $C_mH_{2m+1}$ oder O-$C_mH_{2m+1}$ oder $(CH_2)_z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{31}$ und $R^{32}$) sind hier insbesondere ($C_nH_{2n+1}$ und $C_mH_{2m+1}$) und ($C_nH_{2n+1}$ und O-$C_mH_{2m+1}$),. Besonders bevorzugt ($C_nH_{2n+1}$ und $C_mH_{2m+1}$).

Bevorzugt sind die Verbindungen der Formel IV-4 Verbindungen der Formel IV-4a:

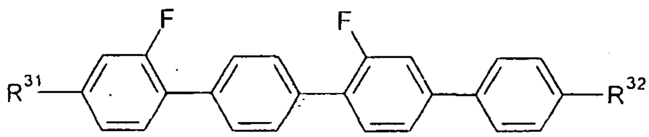

IV-4a

worin

$R^{31}$ die oben angegebene Bedeutung hat und bevorzugt $C_nH_{2n+1}$ oder $CH_2$=CH-$(CH_2)_z$ bedeutet, und

$R^{32}$ die oben angegebene Bedeutung hat und bevorzugt $C_mH_{2m+1}$ oder O-$C_mH_{2m+1}$ oder $(CH_2)_z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{31}$ und $R^{32}$) sind hier insbesondere ($C_nH_{2n+1}$ und $C_mH_{2m+1}$) und ($C_nH_{2n+1}$ und O-$C_mH_{2m+1}$),. Besonders bevorzugt ($C_nH_{2n+1}$ und $C_mH_{2m+1}$).

Bevorzugt werden die Verbindungen der Formeln IV-5 ausgewählt aus der Gruppe der Verbindungen der Formeln IV-5a und IV-5b, bevorzugt der Formel IV-5astärker bevorzugt bestehen diese Verbindungen der Formel IV-5 überwiegend, noch stärker bevorzugt bestehen sie im Wesentlichen und ganz besonders bevorzugt bestehen sie vollständig daraus:

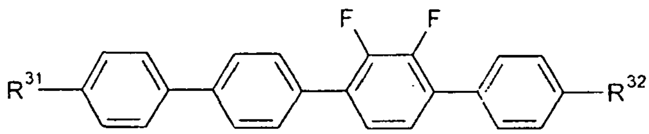

IV-5a

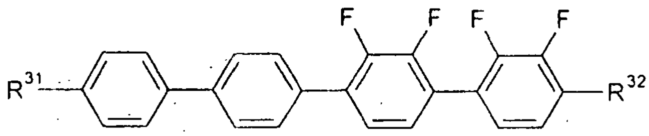

IV-5b

worin

$R^{31}$ die oben angegebene Bedeutung hat und bevorzugt $C_nH_{2n+1}$ oder $CH_2$=CH-$(CH_2)_2$ bedeutet, und

$R^{32}$ die oben angegebene Bedeutung hat und bevorzugt $C_mH_{2m+1}$ oder O-$C_mH_{2m+1}$ oder $(CH_2)_z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{31}$ und $R^{32}$) sind hier insbesondere ($C_nH_{2n+1}$ und $C_mH_{2m+1}$) und ($C_nH_{2n+1}$ und O-$C_mH_{2m+1}$); Besonders bevorzugt ($C_nH_{2n+1}$ und $C_mH_{2m+1}$).

Bevorzugt werden die Verbindungen der Formeln IV-6 ausgewählt aus der Gruppe der Verbindungen der Formeln IV-6a und IV-6b, stärker bevorzugt bestehen diese Verbindungen der Formel IV-6 überwiegend, noch stärker bevorzugt bestehen sie im Wesentlichen und ganz besonders bevorzugt bestehen sie vollständig daraus:

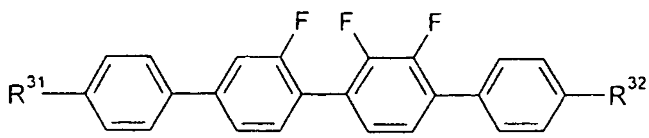

IV-6a

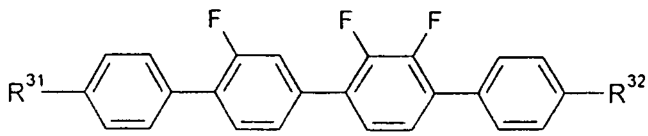

IV-6b

worin

$R^{31}$ die oben angegebene Bedeutung hat und bevorzugt $C_nH_{2n+1}$ oder $CH_2$=CH-$(CH_2)_z$ bedeutet, und

$R^{32}$ die oben angegebene Bedeutung hat und bevorzugt $C_mH_{2m+1}$ oder O-$C_mH_{2m+1}$ oder $(CH_2)_z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{31}$ und $R^{32}$) sind hier insbesondere ($C_nH_{2n-1}$ und $C_mH_{2m+1}$) und ($C_nH_{2n+1}$ und O-$C_mH_{2m+1}$), besonders bevorzugt ($C_nH_{2n+1}$ und $C_mH_{2m+1}$).

Optional enthalten die Medien gemäß der vorliegenden Erfindung eine oder mehrere Verbindungen der Formel V

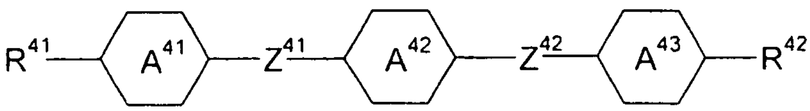

V

worin

$R^{41}$ und $R^{42}$ unabhängig voneinander H, unfluoriertes Alkyl oder Alkoxy mit 1 bis 15, bevorzugt 3 bis 10, C-Atomen oder unfluoriertes Alkenyl, Alkenyloxy oder Alkoxyalkyl mit 2 bis 15, bevorzugt 3 bis 10, C-Atomen, vorzugsweise unfluoriertes Alkyl oder Alkenyl bedeuten,
einer von

$Z^{41}$ und $Z^{42}$ *trans*--CH=CH-, *trans*--CF=CF- oder -C=C- bedeutet und der andere unabhängig davon *trans*--CH=CH-, *trans*- -CF=CF- oder eine Einfachbindung bedeutet, vorzugsweise einer von ihnen -CΞC- oder *trans*--CH=CH- und der andere eine Einfachbindung bedeutet, und

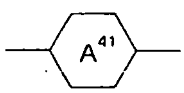

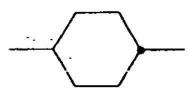

bedeutet,

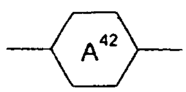

und

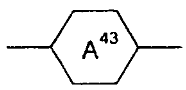

unabhängig voneinander

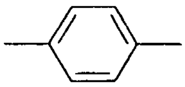, 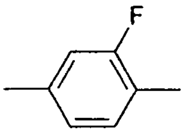, 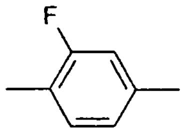,

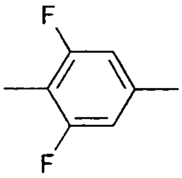, 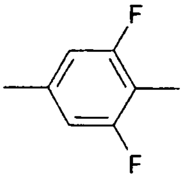, 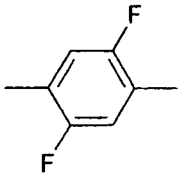,

oder

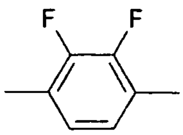

bedeuten.

Bevorzugt enthalten die flüssigkristallinen Medien gemäß der vorliegenden Anmeldung insgesamt 0 bis 40 %, bevorzugt 0 bis 30 % und besonders bevorzugt 5 bis 25 % an Verbindungen der Formel V.

Bevorzugt werden die Verbindungen der Formeln V ausgewählt aus der Gruppe der Verbindungen der Formeln V-1 bis V-3, stärker bevorzugt bestehen diese Verbindungen der Formel V überwiegend, noch stärker bevorzugt bestehen sie im Wesentlichen und ganz besonders bevorzugt bestehen sie vollständig daraus:

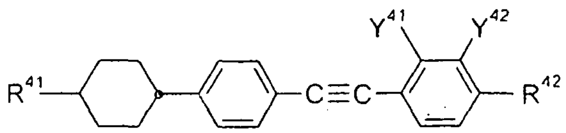 V-1

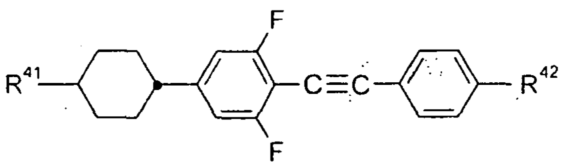 V-2

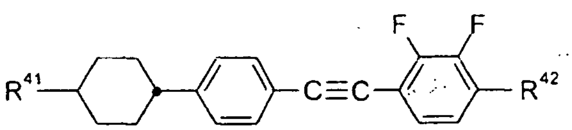 V-3

worin
einer von

| | |
|---|---|
| $Y^{41}$ und $Y^{42}$ | H bedeutet und der andere H oder F bedeutet, und |
| $R^{41}$ | die oben angegebene Bedeutung hat und bevorzugt $C_nH_{2n+1}$ oder $CH_2$=CH-$(CH_2)_z$ bedeutet, und |
| $R^{42}$ | die oben angegebene Bedeutung hat und bevorzugt $C_mH_{2m+1}$ oder O-$C_mH_{2m+1}$ oder $(CH_2)_z$-CH=$CH_2$ bedeutet, und worin |

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{41}$ und $R^{42}$) sind hier insbesondere ($C_nH_{2n+1}$ und $C_mH_{2m+1}$) und ($C_nH_{2n+1}$ und O-$C_mH_{2m+1}$) besonders bevorzugt ($C_nH_{2n+1}$ und $C_mH_{2m+1}$).

Bevorzugt werden die Verbindungen der Formeln V-1 ausgewählt aus der Gruppe der Verbindungen der Formeln V-1a bis V-1c, stärker bevorzugt bestehen diese Verbindungen der Formel V-1 überwiegend, noch stärker bevorzugt bestehen sie im Wesentlichen und ganz besonders bevorzugt bestehen sie vollständig daraus:

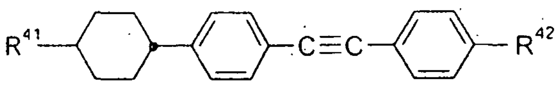

V-1a

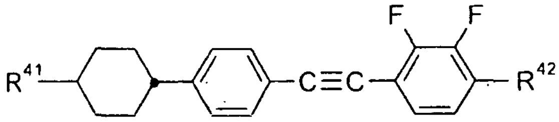

V-1b

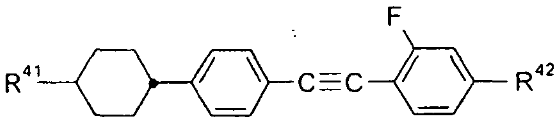

V-1c

worin

$R^{41}$ die oben angegebene Bedeutung hat und bevorzugt $C_nH_{2n-1}$ oder $CH_2$=CH-$(CH_2)_z$ bedeutet, und

$R^{42}$ die oben angegebene Bedeutung hat und bevorzugt $C_mH_{2m+1}$ oder O-$C_mH_{2m+1}$ oder $(CH_2)_z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{41}$ und $R^{42}$) sind hier insbesondere ($C_nH_{2n+1}$ und $C_mH_{2m+1}$) und ($C_nH_{2n+1}$ und O-$C_mH_{2m+1}$) besonders bevorzugt ($C_nH_{2n-1}$ und $C_mH_{2m+1}$).

Bevorzugt sind die Verbindungen der Formel V-2 Verbindungen der Formel V-2a:

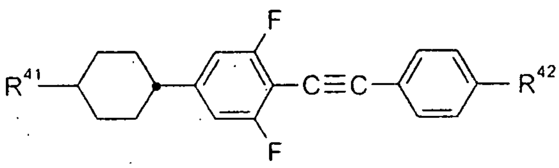

V-2a

worin

$R^{41}$ die oben angegebene Bedeutung hat und bevorzugt $C_nH_{2n+1}$oder $CH_2$=CH-$(CH_2)_z$ bedeutet, und

$R^{42}$ die oben angegebene Bedeutung hat und bevorzugt $C_mH_{2m+1}$ oder O-$C_mH_{2m+1}$ oder $(CH_2)_z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{41}$ und $R^{42}$) sind hier insbesondere ($C_nH_{2n+1}$ und $C_mH_{2m+1}$), $C_nH_{2n+1}$ und $O-C_mH_{2m+1}$) und ($CH_2=CH-(CH_2)_z$ und $C_mH_{2m+1}$) besonders bevorzugt ($C_nH_{2n+1}$ und $C_mH_{2m+1}$).

Bevorzugt sind die Verbindungen der Formel V-3 Verbindungen der Formel V-3a:

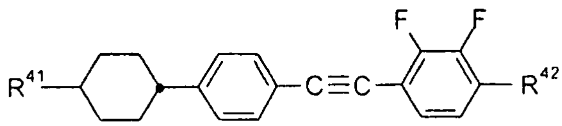

V-3a

worin

$R^{41}$ die oben angegebene Bedeutung hat und bevorzugt $C_nH_{2n+1}$ oder $CH_2=CH-(CH_2)_z$ bedeutet, und

$R^{42}$ die oben angegebene Bedeutung hat und bevorzugt $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{41}$ und $R^{42}$) sind hier insbesondere ($C_nH_{2n+1}$ und $C_mH_{2m+1}$) und ($C_nH_{2n+1}$ und $O-C_mH_{2m+1}$).

Optional enthalten die Medien gemäß der vorliegenden Erfindung eine oder mehrere Verbindungen der Formel VI

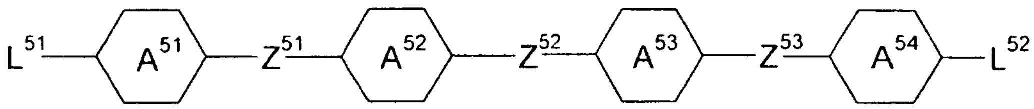

VI

worin

$L^{51}$ $R^{51}$ oder $X^{51}$ bedeutet,

$L^{52}$ $R^{52}$ oder $X^{52}$ bedeutet,

$R^{51}$ und $R^{52}$ unabhängig voneinander H, unfluoriertes Alkyl oder Alkoxy mit 1 bis 15, bevorzugt 3 bis 10, C-Atomen oder unfluoriertes Alkenyl, Alkenyloxy oder Alkoxyalkyl mit 2 bis 15, bevorzugt 3 bis 10, C-Atomen, vorzugsweise unfluoriertes Alkyl oder Alkenyl bedeuten,

$X^{51}$ und $X^{52}$ unabhängig voneinander H, F, Cl, -CN, -NCS, $-SF_5$, fluoriertes Alkyl oder fluoriertes Alkoxy mit 1 bis 7 C-Atomen oder fluoriertes Alkenyl, unfluoriertes oder Alkenyloxy, oder unfluoriertes oder Alkoxyalkyl mit 2 bis 7 C-Atomen, vorzugsweise fluoriertes Alkoxy, fluoriertes Alkenyloxy, F oder Cl bedeuten, und

$Z^{51}$ bis $Z^{53}$ unabhängig voneinander *trans*- -CH=CH-, *trans*--CF=CF-, -C=C- oder eine Einfachbindung bedeuten bevorzugt einer oder mehrere von ihnen eine Einfachbindung bedeutet, und besonders bevorzugt alle eine Einfachbindung bedeuten,

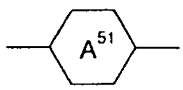

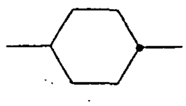 , 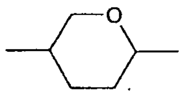

oder

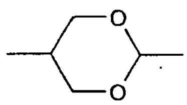

bedeutet,

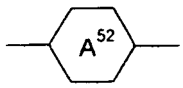

bis

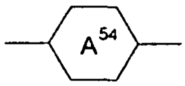

unabhängig voneinander

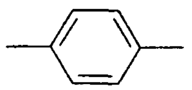 , 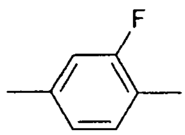 , 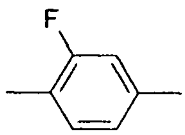 ,

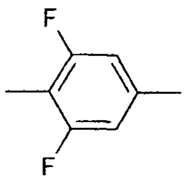 , 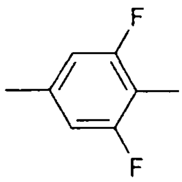 , 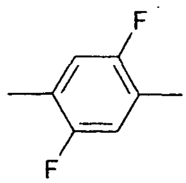 ,

oder

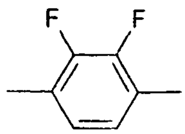

bedeuten.

Bevorzugt werden die Verbindungen der Formeln VI ausgewählt aus der Gruppe der Verbindungen der Formeln VI-1 bis VI-3, stärker bevorzugt bestehen diese Verbindungen der Formel VI überwiegend, noch stärker bevorzugt bestehen sie im Wesentlichen und ganz besonders bevorzugt bestehen sie vollständig daraus:

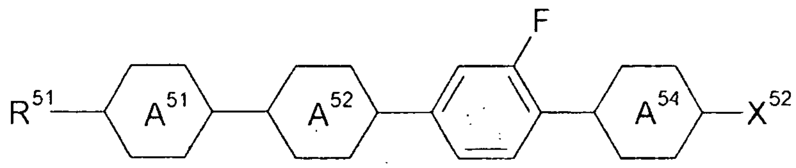

VI-1

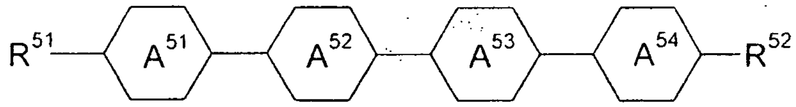

VI-2

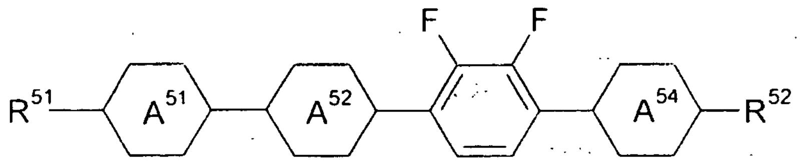

VI-3

worin die Parameter die jeweilige oben unter Formel VI angegebene Bedeutung haben und bevorzugt einer von

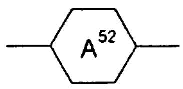

bis

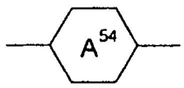

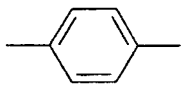 , 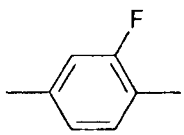 , 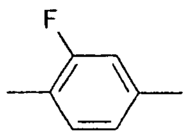 ,

bedeutet
und
worin

| | |
|---|---|
| $R^{51}$ | die oben angegebene Bedeutung hat und bevorzugt $C_nH_{2n+1}$ oder $CH_2=CH-(CH_2)_z$ bedeutet, und |
| $R^{52}$ | die oben angegebene Bedeutung hat und bevorzugt $C_mH_{2m+1}$ oder $O-C_mH_{2m+1}$ oder $(CH_2)_z-CH=CH_2$ bedeutet, und worin |
| n und m | unabhängig voneinander eine ganze Zahl im Bereich von 0 bis 15, bevorzugt im Bereich von 1 bis 7 und besonders bevorzugt 1 bis 5 bedeuten und |
| z | 0, 1, 2, 3 oder 4, bevorzugt 0 oder 2 bedeutet. |

Die bevorzugten Kombinationen von ($R^{51}$ und $R^{52}$) sind hier insbesondere ($C_nH_{2n+1}$ und $C_mH_{2m+1}$) und ($C_nH_{2n+1}$ und $O-C_mH_{2m+1}$).

Bevorzugt enthalten die flüssigkristallinen Medien gemäß der vorliegenden Anmeldung insgesamt 5 bis 30 %, bevorzugt 10 bis 25 % und besonders bevorzugt 15 bis 20 % an Verbindungen der Formel VI.

Bevorzugt werden die Verbindungen der Formeln VI-1 ausgewählt aus der Gruppe der Verbindungen der Formeln VI-1a bis VI-1e, stärker bevorzugt bestehen diese Verbindungen der Formel VI-1 überwiegend, noch stärker

bevorzugt bestehen sie im Wesentlichen und ganz besonders bevorzugt bestehen sie vollständig daraus:

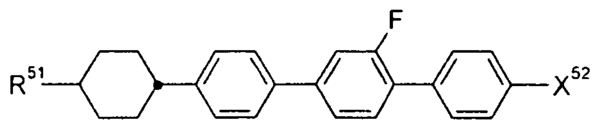

VI-1a

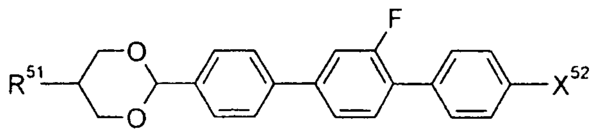

VI-1b

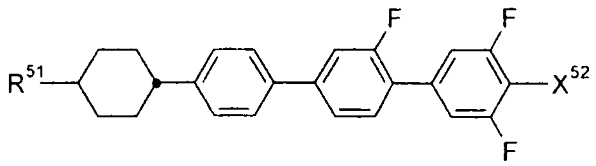

VI-1c

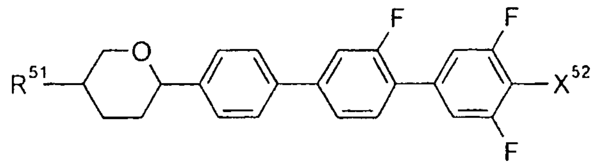

VI-1d

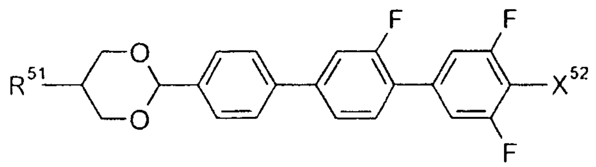

VI-1e

worin die Parameter die oben gegebene Bedeutung haben und bevorzugt

$R^{51}$ die oben angegebene Bedeutung hat und bevorzugt $C_nH_{2n+1}$ bedeutet, und

n eine ganze Zahl im Bereich von 0 bis 15, bevorzugt im Bereich von 1 bis 7 und besonders bevorzugt 1 bis 5 bedeutet und

$X^{52}$ bevorzugt F oder Cl bedeutet.

Bevorzugt werden die Verbindungen der Formeln VI-2 ausgewählt aus der Gruppe der Verbindungen der Formeln VI-2a und VI-2b, stärker bevorzugt bestehen diese Verbindungen der Formel VI-2 überwiegend, noch stärker bevorzugt bestehen sie im Wesentlichen und ganz besonders bevorzugt bestehen sie vollständig daraus:

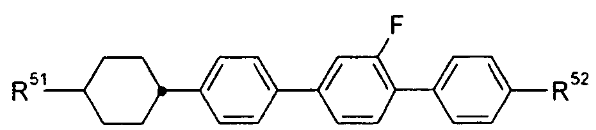

VI-2a

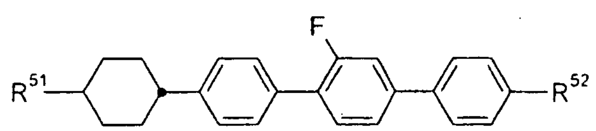

VI-2b

worin

$R^{51}$ die oben angegebene Bedeutung hat und bevorzugt $C_nH_{2n+1}$ oder $CH_2$=CH-$(CH_2)_z$ bedeutet, und

$R^{52}$ die oben angegebene Bedeutung hat und bevorzugt $C_mH_{2m+1}$ oder O-$C_mH_{2m+1}$ oder $(CH_2)_z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugte Kombination von ($R^{51}$ und $R^{52}$) ist hier insbesondere ($C_nH_{2n+1}$ und $C_mH_{2m+1}$).

Bevorzugt sind die Verbindungen der Formel VI-3 Verbindungen der Formel VI-3a oder VI-3b:

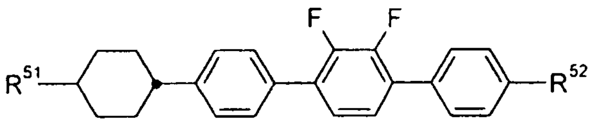

VI-3a

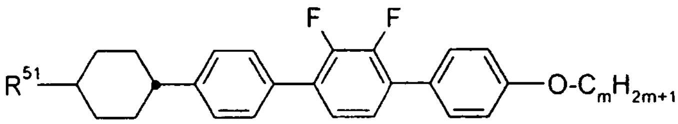

VI-3b

worin

$R^{51}$ die oben angegebene Bedeutung hat und bevorzugt $C_nH_{2n+1}$ oder $CH_2$=CH-$(CH_2)_z$ bedeutet, und

$R^{52}$ die oben angegebene Bedeutung hat und bevorzugt $C_mH_{2m+1}$ oder O-$C_mH_{2m+1}$ oder $(CH_2)_z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{51}$ und $R^{52}$) sind hier insbesondere ($C_nH_{2n+1}$ und $C_mH_{2m+1}$) und ($C_nH_{2n+1}$ und O-$C_mH_{2m+1}$), besonders bevorzugt ($C_nH_{2n+1}$ und O-$C_mH_{2m+1}$).

In einer bevorzugten Ausführungsform der vorliegenden Erfindung enthält das Medium eine oder mehrere dielektrisch positive Verbindungen mit einer dielektrischen Anisotropie von mehr als 3 der Formel II-1.

Vorzugsweise enthält das Medium eine, dielektrisch neutrale Verbindungen mit einer dielektrischen Anisotropie im Bereich von mehr als -1,5 bis 3 der Formel II-2.

In einer bevorzugten Ausführungsform der vorliegenden Erfindung enthält das Medium eine oder mehrere Verbindungen der Formel III.

In einer weiteren bevorzugten Ausführungsform der vorliegenden Erfindung enthält das Medium eine oder mehrere Verbindungen der Formel IV.

Bevorzugt enthalten die flüssigkristallinen Medien gemäß der vorliegenden Erfindung 10 % oder weniger, bevorzugt 5 % oder weniger, besonders bevorzugt 2 % oder weniger, ganz besonders bevorzugt 1 % oder weniger, und insbesondere überhaupt keine Verbindung mit nur zwei oder weniger fünf und/oder sechsgliedrigen Ringen.

Die Definitionen der Abkürzungen (Akronyme) sind ebenfalls unten in Tabelle D angegeben, bzw. aus den Tabellen A bis C zu ersehen.

Vorzugsweise enthalten die flüssigkristallinen Medien gemäß der vorliegenden Erfindung Verbindungen ausgewählt aus der Gruppe der Verbindungen der Formeln I bis VI, vorzugsweise I bis V, stärker bevorzugt bestehen sie überwiegend, noch stärker bevorzugt bestehen sie im Wesentlichen und ganz bevorzugt bestehen sie vollständig daraus.

In dieser Anmeldung bedeutet enthalten im Zusammenhang mit Zusammensetzungen, dass die betreffende Entität, d.h. das Medium oder die Komponente, die angegebene Komponente oder Komponenten oder Verbindung oder Verbindungen enthält, vorzugsweise in einer Gesamtkonzentration von 10 % oder mehr und ganz bevorzugt von 20 % oder mehr.

Überwiegend bestehen bedeutet in diesem Zusammenhang, dass die betreffende Entität 55 % oder mehr,

vorzugsweise 60 % oder mehr und ganz bevorzugt 70 % oder mehr der angegebenen Komponente oder Komponenten oder Verbindung oder Verbindungen enthält.

Im Wesentlichen bestehen bedeutet in diesem Zusammen hang, dass die betreffende Entität 80 % oder mehr, vorzugsweise 90 % oder mehr und ganz bevorzugt 95 % oder mehr der angegebenen Komponente oder Komponenten oder Verbindung oder Verbindungen enthält.

Vollständig bestehen bedeutet in diesem Zusammenhang, dass die betreffende Entität 98 % oder mehr, vorzugsweise 99 % oder mehr und ganz bevorzugt 100,0 % der angegebenen Komponente oder Komponenten oder Verbindung oder Verbindungen enthält.

Auch andere mesogene Verbindungen, die oben nicht explizit genannt sind, können gegebenenfalls und in vorteilhafter Weise in den Medien gemäß der vorliegenden Erfindung verwendet werden. Solche Verbindungen sind dem Fachmann bekannt.

Gemäß der vorliegenden Erfindung werden die Verbindungen der Formel I vorzugsweise in einer Gesamtkonzentration von 10 % bis 90 %, stärker bevorzugt von 15 % bis 60 %, noch stärker bevorzugt von 30 % bis 50 % und ganz bevorzugt von 25 % bis 45 % der Gesamtmischung verwendet.

Gemäß der vorliegenden Erfindung werden die Verbindungen der Formel II vorzugsweise in einer Gesamtkonzentration von 10 % bis 70 %, stärker bevorzugt von 15 % bis 60 %, noch stärker bevorzugt von 30 % bis 50 % und ganz bevorzugt von 25 % bis 45 % der Gesamtmischung verwendet.

Die Verbindungen der Formel III werden vorzugsweise in einer Gesamtkonzentration von 1 % bis 20 %, stärker bevorzugt von 1 % bis 15 %, stärker bevorzugt von 2 % bis 15 % und ganz bevorzugt von 3 % bis 10 % der Gesamtmischung verwendet.

Die Verbindungen der Formel IV werden vorzugsweise in einer Gesamtkonzentration von 1 % bis 60 %, stärker bevorzugt von 5 % bis 50 %, noch stärker bevorzugt von 10 % bis 45 % und ganz bevorzugt von 15 % bis 40 % der Gesamtmischung verwendet.

Die Flüssigkristallmedien enthalten vorzugsweise insgesamt 50 % bis 100 %, stärker bevorzugt 70 % bis 100 % und ganz bevorzugt 80 % bis 100 % und insbesondere 90 % bis 100 % der Verbindungen der Formeln I, III, IV, V und VI, vorzugsweise der Formeln I, III und VI, vorzugsweise bestehen sie überwiegend daraus und ganz bevorzugt bestehen sie vollständig daraus.

In der vorliegenden Anmeldung beschreibt der Ausdruck dielektrisch positiv Verbindungen oder Komponenten mit $\Delta\varepsilon > 3{,}0$, dielektrisch neutral mit $-1{,}5 \leq \Delta\varepsilon \leq 3{,}0$ und dielektrisch negativ mit $\Delta\varepsilon < -1{,}5$. $\Delta\varepsilon$ wird bei einer Frequenz von 1 kHz und 20°C bestimmt. Die dielektrische Anisotropie der jeweiligen Verbindung wird aus den Ergebnissen einer Lösung von 10 % der jeweiligen einzelnen Verbindung in einer nematischen Host-Mischung bestimmt. Wenn die Löslichkeit der jeweiligen Verbindung in der Host-Mischung weniger als 10 % beträgt, wird die Konzentration auf 5 % reduziert. Die Kapazitäten der Testmischungen werden sowohl in einer Zelle mit homeotroper als auch mit homogener Orientierung bestimmt. Die Schichtdicke beträgt bei beiden Zelltypen ca. 20 µm. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

$\Delta\varepsilon$ ist als $(\varepsilon_{||} - \varepsilon_{\perp})$ definiert, während $\varepsilon_{Drchschn.}$ $(\varepsilon_{||} + 2\ \varepsilon_{\perp}) / 3$ ist.

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Werte der dielektrischen Konstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20°C eine nematische Phase aufweisen, werden als solche gemessen, alle anderen werden wie Verbindungen behandelt.

Der Ausdruck Schwellenspannung bezeichnet in der vorliegenden Anmeldung die optische Schwelle und ist für 10 % relativen Kontrast ($V_{10}$) angegeben, der Ausdruck Sättigungsspannung bezeichnet die optische Sättigung und ist für 90 % relativen Kontrast ($V_{90}$) angegeben, in beiden Fällen, soweit nicht ausdrücklich etwas anderes angegeben ist. Die kapazitive Schwellenspannung ($V_0$), auch Freedericks-Schwelle $V_{Fr}$ genannt, wird nur verwendet, wenn dies ausdrücklich genannt ist.

Die in dieser Anmeldung angegebenen Parameterbereiche schließen sämtlich die Grenzwerte ein, wenn nicht ausdrücklich etwas anderes angegeben ist.

Die unterschiedlichen für verschiedene Bereiche von Eigenschaften angegebenen oberen und unteren Grenzwerte ergeben in Kombination miteinander zusätzliche bevorzugte Bereiche.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung, alle Temperaturen und alle Temperaturunterschiede sind in Grad Celsius bzw. Differenzgrad angegeben. Alle physikalischen Eigenschaften werden nach "Merck Liquid Crystals, Physical Properties of Liquid Crystals", Stand Nov. 1997, Merck KGaA, Deutschland, bestimmt und sind für eine Temperatur von 20°C aufgeführt, wenn nicht ausdrücklich anders angegeben. Die optische Anisotropie ($\Delta n$) wird bei einer Wellenlänge von 589,3 nm bestimmt. Die dielektrische Anisotropie ($\Delta\varepsilon$) wird bei einer Frequenz von 1 kHz bestimmt. Die Schwellenspannungen sowie alle anderen elektrooptischen Eigenschaften werden mit bei Merck KGaA, Deutschland, hergestellten Testzellen bestimmt. Die Testzellen für die Bestimmung von $\Delta\varepsilon$ besitzen eine Schichtdicke von circa 20 $\mu$m. Bei der Elektrode handelt es sich um eine kreisförmige ITO-Elektrode mit einer Fläche von 1,13 $cm^2$ und einem Schutzring. Die Ausrichtungsschichten sind SE-1211 von Nissan Chemicals, Japan, für homeotrope Ausrichtung ($\varepsilon_{||}$) und Polyimid AL-1054 von Japan Synthetic Rubber, Japan, für homogene Ausrichtung ($\varepsilon_{\perp}$). Die Bestimmung der Kapazitäten erfolgt mit einem Frequenzgang-Analysegerät Solatron 1260 unter Verwendung einer Sinuswelle mit einer Spannung von 0,3 $V_{rms}$. Als Licht wird bei den elektrooptischen Messungen weißes Licht verwendet. Dabei wird ein Aufbau mit einem im Handel erhältlichen Gerät DMS der Fa. Autronic-Melchers, Germany verwendet. Die charakteristischen Spannungen werden unter senkrechter Beobachtung bestimmt. Die Schwellenspannung ($V_{10}$), "Mittgrau-Spannung" ($V_{50}$) und Sättigungsspannung ($V_{90}$) werden für 10 %, 50 % bzw. 90 % relativen Kontrast bestimmt.

Die flüssigkristallinen Medien werden bezüglich ihrer Eigenschaften im Frequenzbereich der Mikrowellen untersucht wie in A. Penirschke, S. Müller, P. Scheele, C. Weil, M. Wittek, C. Hock und R. Jakoby: "Cavity Perturbation Method for Characterization of Liquid Crystals up to 35GHz", 34th European Microwave Conference - Amsterdam, S. 545-548 beschreiben.

Vergleiche hierzu auch A. Gaebler, F. Gölden, S. Müller, A. Penirschke und R. Jakoby "Direct Simulation of Material Permittivites ... ", 12MTC 2009 - International Instrumentation and Measurement Technology Conference, Singapur, 2009 (IEEE), S. 463-467 und DE 10 2004 029 429 A, in der ebenfalls detailliert ein Meßverfahren beschrieben wird.

Der Flüssigkristall wird in eine Kapillare aus Polytetrafuorethylen (PTFE) gefüllt. Die Kapillare hat einen inneren Radius von 180 $\mu$m und einen äußeren Radius von 350 $\mu$m. Die effektive Länge beträgt 2,0 cm. Die gefüllte Kapillare wird in die Mitte der Kavität mit einer Resonanzfrequenz von 30 GHz eingebracht. Diese Kavität hat eine Länge von 6,6 mm, eine Breite von 7,1 mm und eine Höhe von 3,6 mm. Daraufhin wird das Eingangssignal ("source") angelegt und das Ergebnis des Ausgangssignals mit einem kommerziellen Netzwierkanalysator ("vector network analyzer") aufgenommen.

Aus der Änderung der Resonanzfrequenz und des Q-Faktors, zwischen der Messung mit der mit dem Flüssigkristall gefüllten Kapillare und der Messung ohne der mit dem Flüssigkristall gefüllten Kapillare, wird die dielektrische Konstante und der Verlustwinkel bei der entsprechenden Zielfrequenz mittels der Gleichungen 10 und 11 der A. Penirschke, S. Müller, P. Scheele, C. Weil, M. Wittek, C. Hock und R. Jakoby: "Cavity Perturbation Method for Characterization of Liquid Crystals up to 35GHz", 34th European Microwave Conference - Amsterdam, S. 545-548 bestimmt, wie dort beschrieben.

Die Werte für die Komponenten der Eigenschaften senkrecht bzw. and parallel zum Direktor des Flüssigkristalls werden durch Orientierung des Flüssigkristalls in einem Magnetfeld erhalten. Dazu wird das Magnetfeld eines Permanentmagneten verwendet. Die Stärke des Magnetfelds beträgt 0,35 Tesla. Die Orientierung des Magneten wird entsprechend eingestellt und dann entsprechend um 90° gedreht.

Die dielektrische Anisotropie im $\mu$-Wellenbereich ist definiert als

$$\Delta\varepsilon_r \equiv (\varepsilon_{r,||} - \varepsilon_{r,\perp}) \; .$$

Die Modulierbarkeit bzw. Steuerbarkeit ("tunability", $\tau$) ist definiert als

$$\tau \equiv (\Delta\varepsilon_r \,/\, \varepsilon_{r,||}) \; .$$

Die Materialgüte ($\eta$) ist definiert als

$$\eta \equiv (\tau \,/\, \tan \delta_{\varepsilon\, r,Max.}) \; ,$$

mit dem maximalen dielektrischen Verlustfaktor tan $\delta_{\varepsilon r,Max}$:

$$\tan \delta_{\varepsilon r,Max} \equiv Max. \{ \tan \delta_{\varepsilon r,\perp}; \tan \delta_{\varepsilon r,\parallel} \}$$

der aus dem Maximalwert der gemessenen Werte für tan $\delta_\varepsilon$, hervorgeht.

Die Materialgüte ($\eta$) der bevorzugten Flüssigkristallmaterialien beträgt 5 oder mehr, bevorzugt 6 oder mehr, bevorzugt 8 oder mehr, bevorzugt 10 oder mehr, bevorzugt 15 oder mehr, bevorzugt 17 oder mehr, besonders bevorzugt 20 oder mehr und ganz besonders bevorzugt 25 oder mehr.

Die bevorzugten Flüssigkristallmaterialien haben in den entsprechenden Bauteilen Phasenschiebergüten von 15°/dB oder mehr, bevorzugt von 20°/dB oder mehr, bevorzugt von 30°/dB oder mehr, bevorzugt von 40°/dB oder mehr, bevorzugt von 50°/dB oder mehr, besonders bevorzugt von 80°/dB oder mehr und ganz besonders bevorzugt von 100°/dB oder mehr.

In der vorliegenden Anmeldung, bedeutet, wenn nicht ausdrücklich anders angegeben, der Begriff Verbindungen sowohl eine Verbindung, als auch mehrere Verbindungen.

Die erfindungsgemäßen Flüssigkristallmedien weisen bevorzugt nematische Phasen von jeweils mindestens von -20°C bis 80°C, bevorzugt von -30°C bis 85°C und ganz besonders bevorzugt von -40°C bis 100°C auf. Insbesondere bevorzugt reicht die Phase bis 120°C oder mehr, bevorzugt bis 140°C oder mehr und ganz besonders bevorzugt bis 180°C oder mehr. Hierbei bedeutet der Begriff eine nematische Phase aufweisen einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen, mit einer Schichtdicke von 5 $\mu$m, für mindestens 100 Stunden überprüft. Bei hohen Temperaturen wird der Klärpunkt nach üblichen Methoden in Kapillaren gemessen.

Die Flüssigkristallmedien gemäß der vorliegenden Erfindung weisen bevorzugt einen Klärpunkt von 90°C oder mehr, stärker bevorzugt von 100°C oder mehr, noch stärker bevorzugt von 120°C oder mehr, besonders bevorzugt von 150°C oder mehr und ganz besonders bevorzugt von 170°C oder mehr, auf.

Das $\Delta\varepsilon$ des Flüssigkristallmediums gemäß der Erfindung bei 1 kHz und 20°C beträgt vorzugsweise 1 oder mehr, stärker bevorzugt 2 oder mehr und ganz bevorzugt 3 oder mehr.

Das $\Delta$n der Flüssigkristallmedien gemäß der vorliegenden Erfindung liegt bei 589 nm ($Na^D$) und 20°C vorzugsweise im Bereich von 0,200 oder mehr bis 0,90 oder weniger, stärker bevorzugt im Bereich von 0,250 oder mehr bis 0,90 oder weniger, noch stärker bevorzugt im Bereich von 0,300 oder mehr bis 0, 85 oder weniger und ganz besonders bevorzugt im Bereich von 0,350 oder mehr bis 0,800 oder weniger.

In einer bevorzugten Ausführungsform der vorliegenden Anmeldung beträgt das $\Delta$n der Flüssigkristallmedien gemäß der vorliegenden Erfindung vorzugsweise 0,50 oder mehr, stärker bevorzugt 0,55 oder mehr.

Ferner sind die erfindungsgemäßen Flüssigkristallmedien durch hohe Anisotropien im Mikrowellenbereich gekennzeichnet. Die Doppelbrechung beträgt z.B. bei ca. 8,3 GHz bevorzugt 0,14 oder mehr, besonders bevorzugt 0,15 oder mehr, besonders bevorzugt 0,20 oder mehr, besonders bevorzugt 0,25 oder mehr und ganz besonders bevorzugt 0,30 oder mehr. Außerdem beträgt die Doppelbrechung bevorzugt 0,80 oder weniger.

In einigen Ausführungsformen können jedoch auch Flüssigkristalle mit eine negativen Wert der dielektrischen Anisotropie vorteilhaft verwendet werden.

Die eingesetzten Flüssigkristalle sind entweder Einzelsubstanzen oder Mischungen. Bevorzugt weisen sie eine nematische Phase auf.

Bevorzugte Bauelemente, die ein Flüssigkristallmedium oder wenigstens eine Verbindung gemäß der Erfindung enthalten, sind Phasenschieber, Varaktoren, Antennenarrays (z. B. für Funk, Mobilfunk, Radio, Mikrowellen/Radar und sonstige Datenübertragung), 'matching circuit adaptive filters' und andere. Bevorzugt sind Bauteile für die Hochfrequenztechnik, wie oben definiert. Ganz besonders bevorzugte Bauelemente sind Phasenschieber. In bevorzugten Ausführungsformen werden mehrere Phasenschieber funktionell verbunden, wodurch beispielsweise ein phasengesteuerte Gruppenantenne resultiert. Eine Gruppenantenne nutzt die Phasenverschiebung der in einer Matrix angeordneten Sende- oder Empfangselemente, um durch Interferenz eine Bündelung zu erzielen. Aus einer reihen- oder gitterförmigen parallelen Anordnung von Phasenschiebern lässt sich ein sog. 'phased array' aufbauen, das als abstimmbare Sende- oder Empfangsantenne für Hochfrequenzen (z. B. Gigahertzbereich) dienen kann. Erfindungsgemäße 'phased array'-Antennen besitzen einen sehr breiten nutzbaren Empfangskegel.

Bevorzugte Anwendungen sind Radarinstallationen und Datenübertragungsgeräte auf bemannten oder unbemannten Fahrzeugen aus dem Bereich Automobil, Schifffahrt, Flugzeuge, Raumfahrt und Satellitentechnik.

Zur Herstellung geeigneter Bauelemente, insbesondere Phasenschieber, wird typischerweise ein erfindungsgemäßes flüssigkristallines Medium in rechteckige Kavitäten von weniger als 1 mm Querschnitt und mehreren Zentimetern Länge eingebracht. Die Kavitäten besitzen entlang zweier langer Seiten angebrachte, gegenüberliegende Elektroden. Solche Anordnungen sind dem Fachmann vertraut. Durch Anlegen einer variablen Spannung können im späteren Betrieb die dielektrischen Eigenschaften des flüssigkristallinen Mediums abgestimmt werden, um verschiedene Frequenzen oder Richtungen einer Antenne einzustellen.

Der Ausdruck "Alkyl" umfasst vorzugsweise geradkettige und verzweigte Alkylgruppen mit 1 bis 15 Kohlenstoffatomen, insbesondere die geradkettigen Gruppen Methyl, Ethyl, Propyl, Butyl, Pentyl, Hexyl und Heptyl. Gruppen mit 2 bis 10 Kohlenstoffatomen sind im allgemeinen bevorzugt.

Der Ausdruck "Alkenyl" umfasst vorzugsweise geradkettige und verzweigte Alkenylgruppen mit 2 bis 15 Kohlenstoffatomen, insbesondere die geradkettigen Gruppen. Besonders bevorzugte Alkenylgruppen sind $C_2$ bis $C_7$-1 E-Alkenyl, $C_4$ bis $C_7$-3E-Alkenyl, $C_5$ bis $C_7$-4-Alkenyl, $C_6$ bis $C_7$-5-Alkenyl und $C_7$-6-Alkenyl, insbesondere $C_2$ bis $C_7$-1E-Alkenyl, $C_4$ bis $C_7$-3E-Alkenyl und $C_5$ bis $C_7$-4-Alkenyl. Beispiele weiterer bevorzugter Alkenylgruppen sind Vinyl, 1 E-Propenyl, 1 E-Butenyl, 1 E-Pentenyl, 1 E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl", bzw. Alkoxyalkyl umfasst vorzugsweise geradkettige Reste der Formel $C_nH_{2n+1}$-O-$(CH_2)_m$, worin n und m jeweils unabhängig voneinander 1 bis 10 bedeuten. Vorzugsweise ist n 1 und m 1 bis 6.

Verbindungen mir einer Vinyl-Endgruppe und Verbindungen mit einer Methyl-Endgruppe haben eine geringe Rotationsviskosität.

In der vorliegenden Anmeldung bedeutet Hochfrequenztechnik Anwendungen mit Frequenzen im Bereich von 1 MHz bis 1 THz, bevorzugt von 1 GHz bis 500GHz, stärker bevorzugt 2 GHz bis 300 GHz, insbesondere bevorzugt von ca. 5 bis 150 GHz.

Die Flüssigkristallmedien gemäß der vorliegenden Erfindung können weitere Zusatzstoffe und chirale Dotierstoffe in den üblichen Konzentrationen beinhalten. Die Gesamtkonzentration dieser weiteren Bestandteile liegt im Bereich von 0 % bis 10 %, vorzugsweise 0,1 % bis 6 %, bezogen auf die Gesamtmischung. Die Konzentrationen der einzelnen verwendeten Verbindungen liegen vorzugsweise jeweils im Bereich von 0,1 % bis 3 %. Die Konzentration dieser und ähnlicher Zusatzstoffe wird bei der Angabe der Werte und Konzentrationsbereiche der Flüssigkristallkomponenten und Flüssigkristallverbindungen der Flüssigkristallmedien in dieser Anmeldung nicht berücksichtigt.

Die erfindungsgemäßen Flüssigkristallmedien bestehen aus mehreren Verbindungen, vorzugsweise aus 3 bis 30, stärker bevorzugt aus 4 bis 20 und ganz bevorzugt aus 4 bis 16 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Multi-Bottle"-Systemen, deren Bestandteile selbst gebrauchsfertige Mischungen sind, herzustellen.

Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben.

In der vorliegenden Anmeldung bedeutet Hochfrequenztechnik Anwendungen mit Frequenzen im Bereich von 1 MHz bis 1 THz, bevorzugt von 1 GHz bis 500GHz, bevorzugt 2 GHz bis 300 GHz, insbesondere bevorzugt von ca. 5 bis 150 GHz. Die Anwendung liegt bevorzugt im Mikrowellenspektrum oder angrenzenden, für die Nachrichtenübertragung geeigneten Bereichen, in denen 'phased array'-Module in Sende- und Empfangsantennen zum Einsatz kommen können.

In der vorliegenden Erfindung und insbesondere in den folgenden Beispielen sind die Strukturen der mesogenen Verbindungen durch Abkürzungen angegeben, die auch als Akronyme bezeichnet werden. In diesen Akronymen sind die chemischen Formeln unter Verwendung der folgenden Tabellen A bis C wie folgt abgekürzt. Alle Gruppen $C_nH_{2n+1}$, $C_mH_{2m+1}$ und $C_lH_{2l+1}$ bzw. $C_nH_{2n-1}$, $C_mH_{2m-1}$ und $C_lH_{2l-1}$ bedeuten geradkettiges Alkyl bzw. Alkenyl, vorzugsweise 1-E-Alkenyl, jeweils mit n, m bzw. l C-Atomen, wobei m, n und l 1 bis 15 bedeuten. In der Tabelle A werden die für die Ringelemente der Kernstrukturen der Verbindungen verwendeten Codes aufgeführt, während in der Tabelle B die Verknüpfungsgruppen gezeigt sind. Tabelle C gibt die Bedeutungen der Codes für die Endgruppen der linken bzw. rechten Seite. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 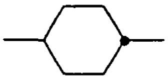 | | |
| **D** | 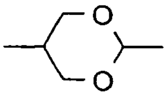 | **DI** | 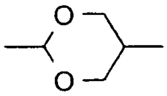 |
| **A** | 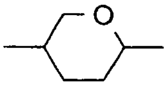 | **AI** | 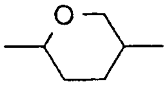 |
| **P** | 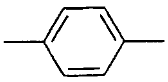 | | |
| **G** | 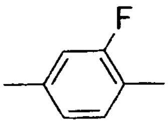 | **GI** | 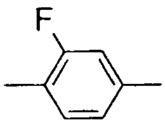 |
| **U** | 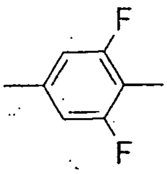 | **UI** | 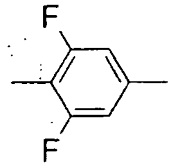 |
| **Y** | 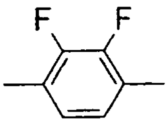 | | |
| **M** | 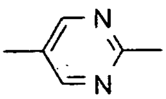 | **MI** | 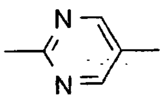 |
| **N** | 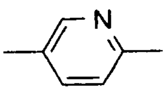 | **NI** | 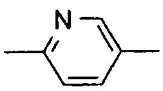 |
| **Np** | 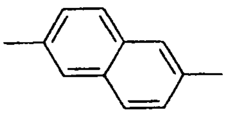 | | |
| **N3f** | 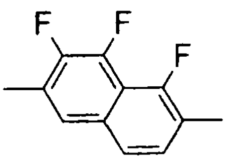 | **N3fI** | 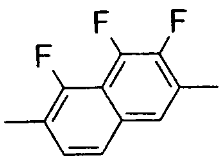 |
| **tH** | 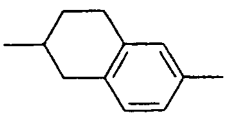 | **tHI** | 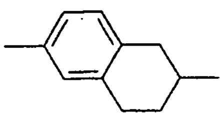 |
| **tH2f** | 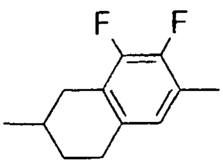 | **tH2fI** | 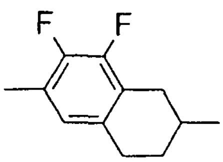 |
| **dH** | 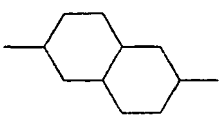 | | |

(fortgesetzt)

| | | | |
|---|---|---|---|
| K | 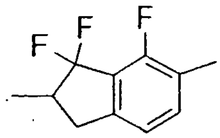 | KI | 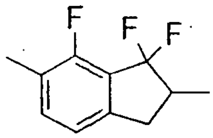 |
| L | 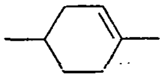 | LI | 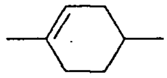 |
| F | 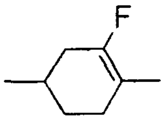 | FI | 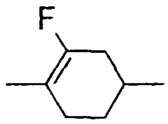 |

**Tabelle B: Verknüpfungsgruppen**

| | | | |
|---|---|---|---|
| **E** | $-CH_2CH_2-$ | **Z** | -CO-O- |
| **V** | -CH=CH- | **ZI** | -O-CO- |
| **X** | -CF=CH- | **O** | $-CH_2-O-$ |
| **XI** | -CH=CF- | **OI** | $-O-CH_2-$ |
| **B** | -CF=CF- | **Q** | $-CF_2-O-$ |
| **T** | -C=C- | **QI** | $-O-CF_2-$ |
| **W** | $-CF_2CF_2-$ | **T** | -C=C- |

**Tabelle C: Endgruppen**

| **Linke Seite** | | **Rechte Seite,** | |
|---|---|---|---|
| | **Verwendung allein** | | |
| **-n-** | $C_nH_{2n+1}-$ | **-n** | $--C_nH_{2n+1}$ |
| **-nO-** | $C_nH_{2n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}CH=CH-$ | **-nV** | $-C_nH_{2n}-CH=CH_2$ |
| **-Vn-** | $CH_2=CH- C_nH_{2n+1}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | NΞC- | **-N** | -CΞN |
| **-S-** | S=C=N- | **-S** | -N=C=S |
| **-F-** | F- | **-F** | -F |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O$ - | **-OM** | $-OCFH_2$ |
| **-DO-** | $CF_2HO$ - | **-OD** | $-OCF_2H$ |
| **-TO-** | $CF_3O$ - | **-OT** | $-OCF_3$ |
| **-OXF-** | $CF_2=CH-O-$ | **-OXF** | $-O-CH=CF_2$ |
| **-A-** | H-CΞC- | **-A** | -CΞC-H |
| **-nA-** | $C_nH_{2n+1}$-CΞC- | **-An** | -CΞC-$C_nH_{2n+1}$ |
| **-NA-** | NΞC-CΞC- | **-AN** | -CΞC-CΞN |
| | **Verwendung zusammen mit anderen** | | |
| **-...A...-** | -C≡C- | **-...A...** | -C≡C- |
| **-...V...-** | CH=CH- | **-...V...** | -CH=CH- |
| **-...Z...-** | -CO-O- | **-...Z...** | -CO-O- |

(fortgesetzt)

| Verwendung zusammen mit anderen | | | |
|---|---|---|---|
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

worin n und m jeweils ganze Zahlen bedeuten und die drei Punkte "..." Platzhalter für andere Abkürzungen aus dieser Tabelle sind.

In der folgenden Tabelle werden Beispielstrukturen zusammen mit ihren jeweiligen Abkürzungen angegeben. Diese werden gezeigt, um die Bedeutung der Regeln für die Abkürzungen zu demonstrieren. Weiterhin stellen sie Verbindungen dar, die vorzugsweise verwendet werden.

**Tabelle D: Beispielstrukturen**

Die Beispielstrukturen sind besonders bevorzugt eingesetzte Verbindungen:

Mit drei 6-gliedrigen Ringen

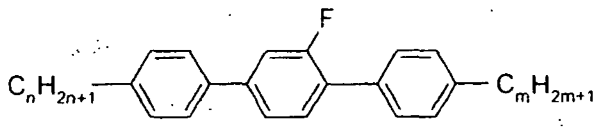

**PGP-n-m**

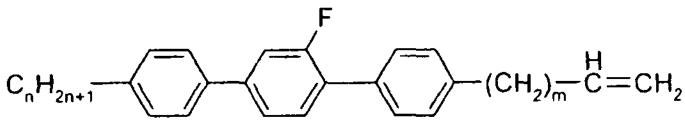

**PGP-n-mV**

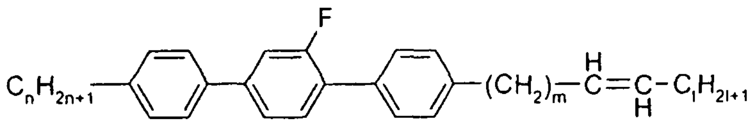

**PGP-n-mVI**

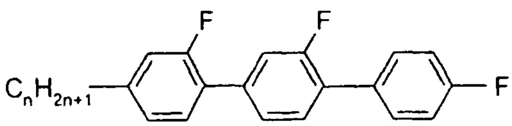

**GGP-n-F**

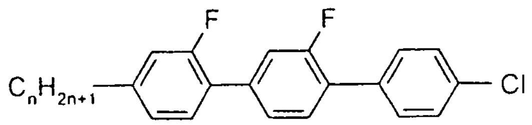

GGP-n-CL

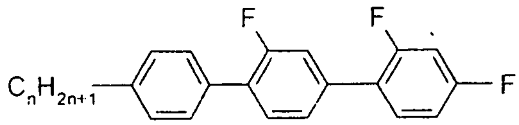

PGIGI-n-F

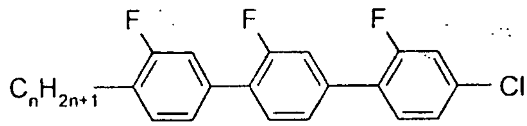

PGIGI-n-CL

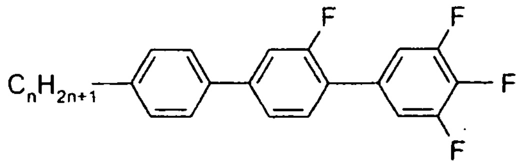

PGU-n-F

Mit vier 6-gliedrigen Ringen

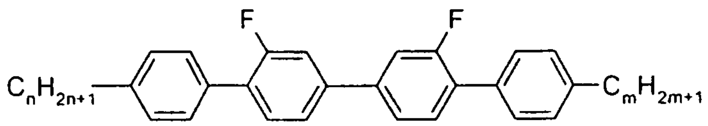

PGIGP-n-m

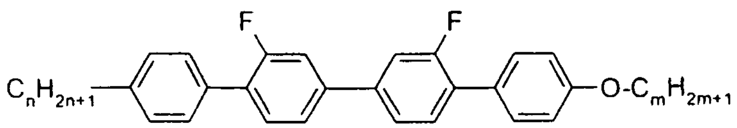

PGIGP-n-Om

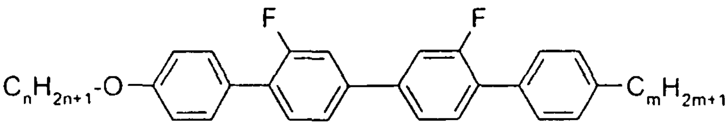

**PGIGP-nO-m**

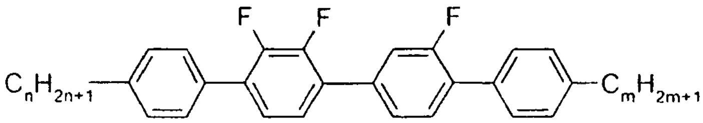

**PYGP-n-m**

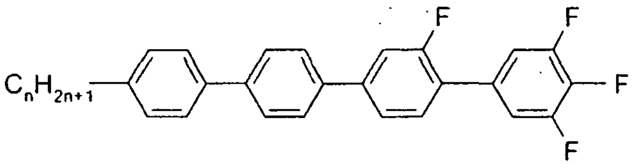

**PPGU-n-F**

Beispielstrukturen bevorzugt eingesetzter neutraler Verbindungen:

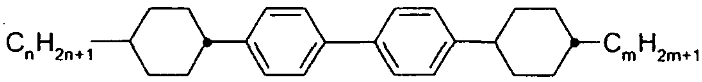

**CPPC-n-m**

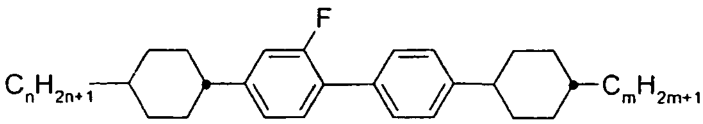

**CGPC-n-m**

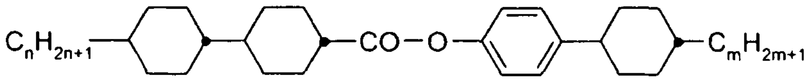

**CCZPC-n-m**

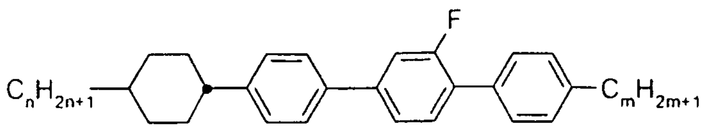

**CPGP-n-m**

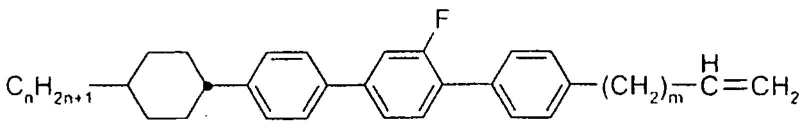

CPGP-n-mV

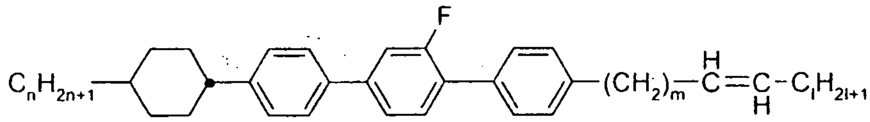

CPGP-n-mVI

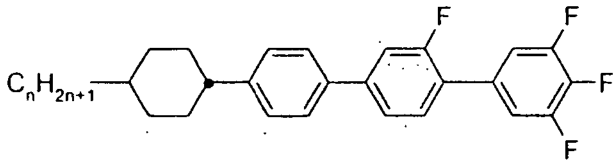

CPGU-n-F

Beispielstrukturen weiterer eingesetzter Verbindungen:

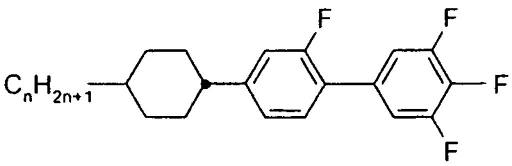

CGU-n-F

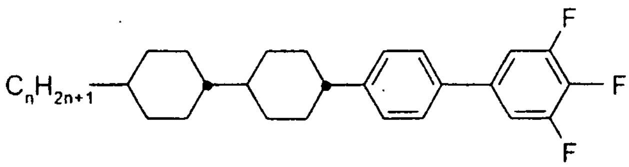

CCPU-n-F

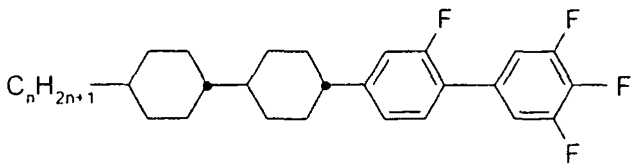

CCGU-n-F

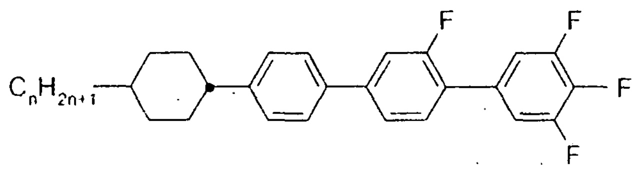

CPGU-n-F

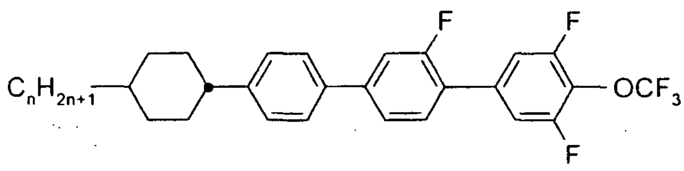

CPGU-n-OT

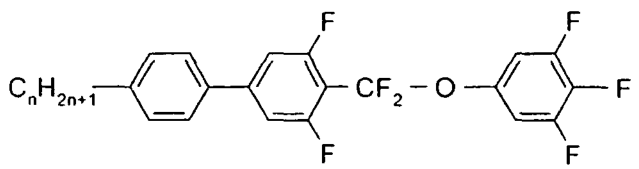

PUQU-n-F

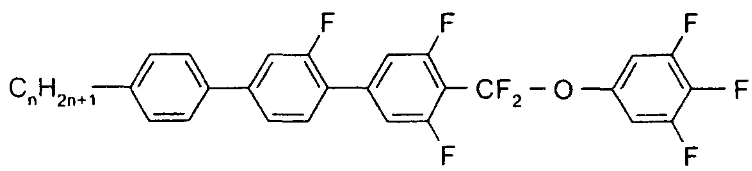

PGUQU-n-F

In der folgenden Tabelle, Tabelle E, sind Beispielverbindungen zusammengestellt, die in den mesogenen Medien gemäß der vorliegenden Erfindung als Stabilisator verwendet werden können. Die Gesamtkonzentration dieser bzw. ähnlicher Verbindungen in den Medien beträgt bevorzugt 5 % oder weniger.

## Tabelle E

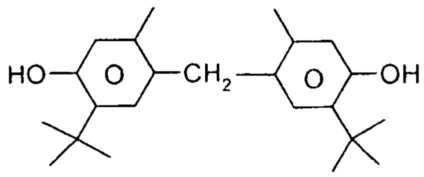

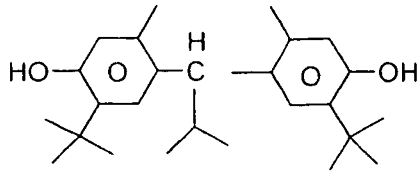

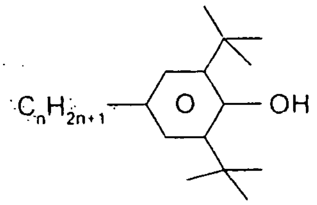

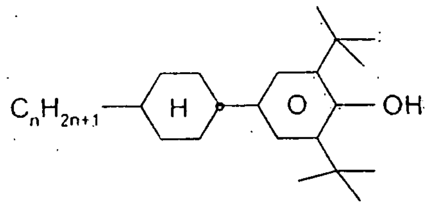

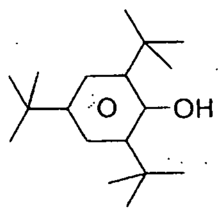

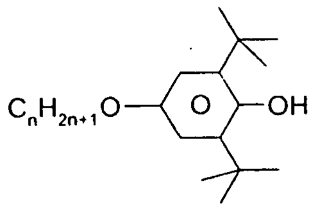

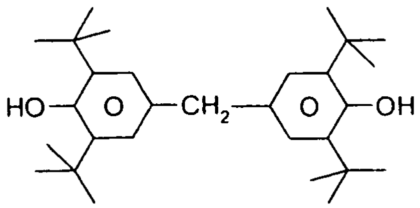

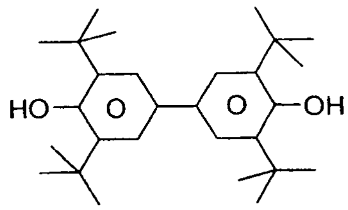

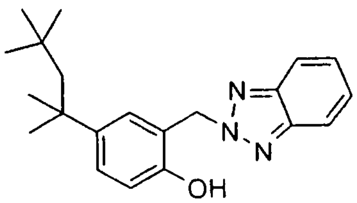

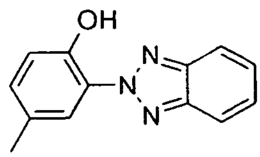

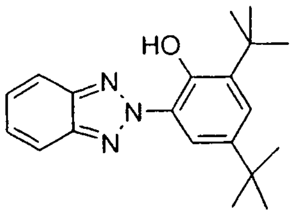

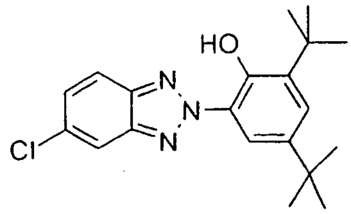

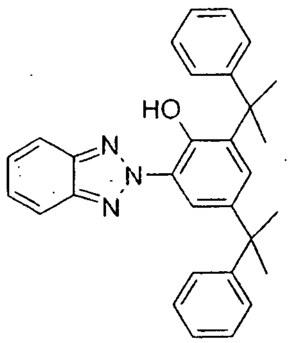

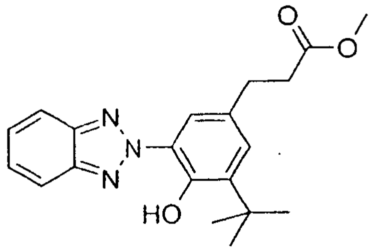

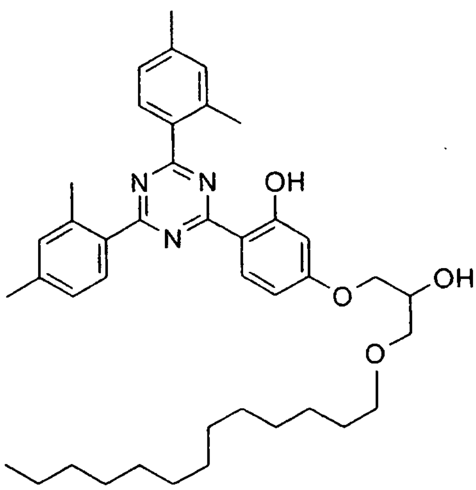

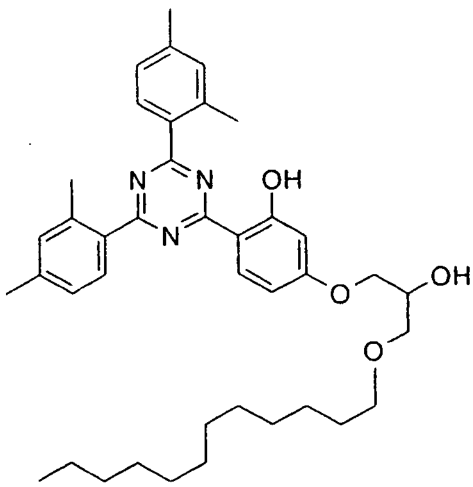

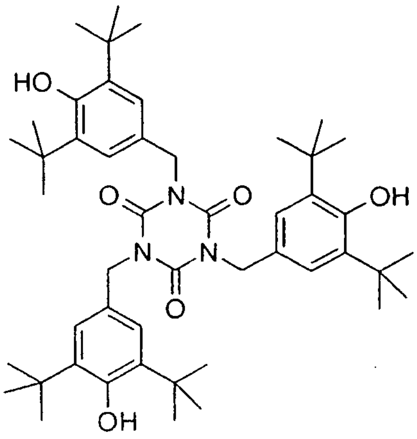

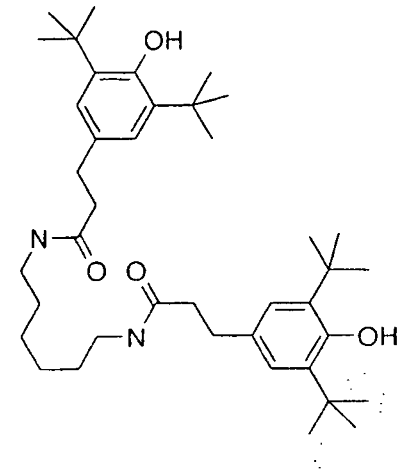

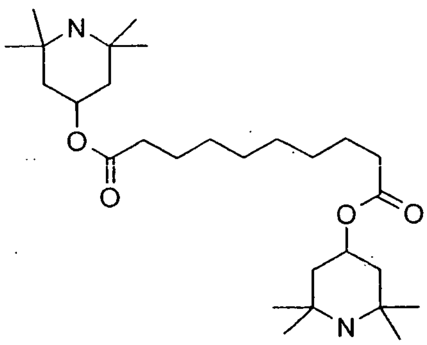

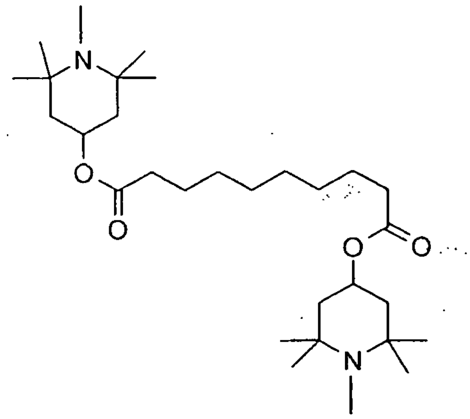

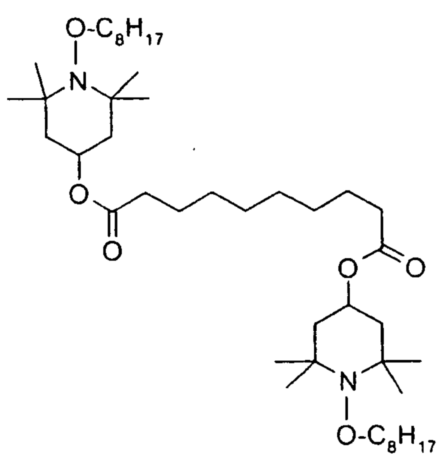

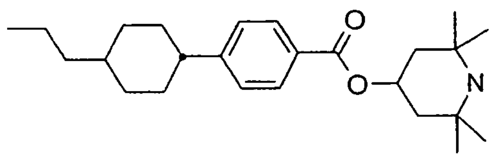

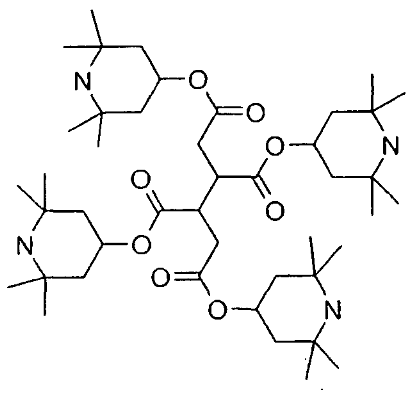

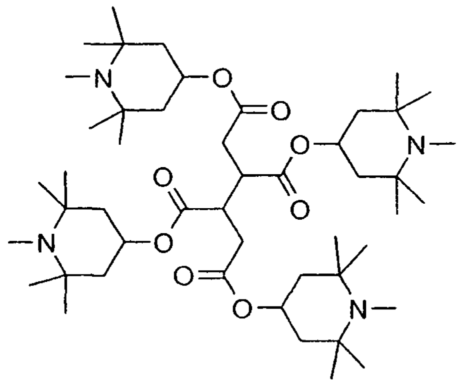

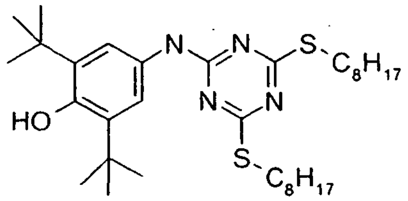

In einer bevorzugten Ausführungsform der vorliegenden Erfindung enthalten die mesogenen Medien eine oder mehrere Verbindungen ausgewählt aus der Gruppe der Verbindungen der Tabelle E.

In der folgenden Tabelle, Tabelle F, sind Beispielverbindungen zusammengestellt, die in den mesogenen Medien gemäß der vorliegenden Erfindung vorzugsweise als chirale Dotierstoffe verwendet werden können.

## Tabelle F

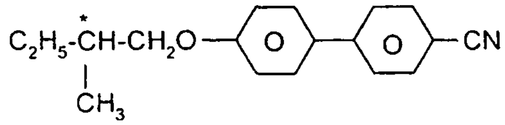

**C 15**

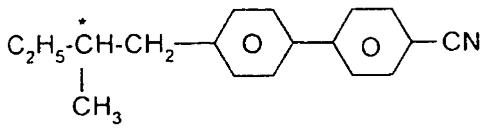

**CB 15**

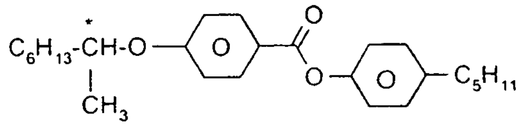

**CM 21**

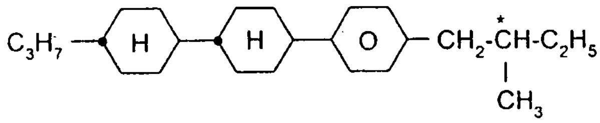

**CM 44**

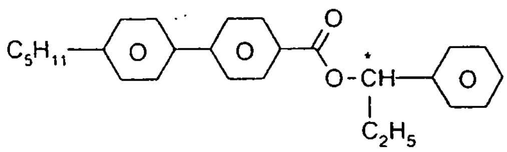

**CM 45**

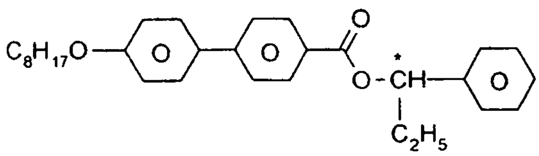

**CM 47**

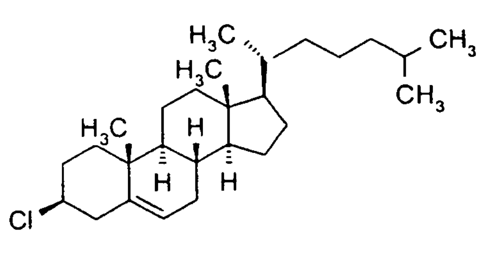

**CC**

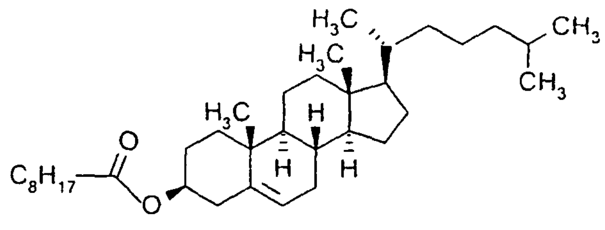

**CN**

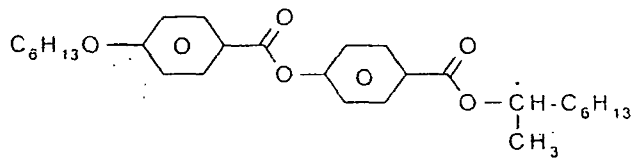

**R/S-811**

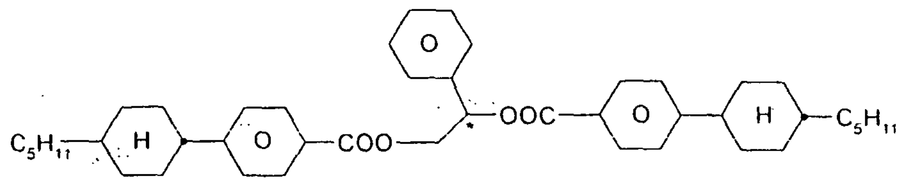

**R/S-1011**

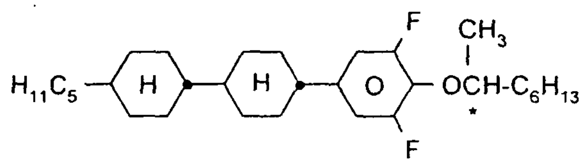

**R/S-2011**

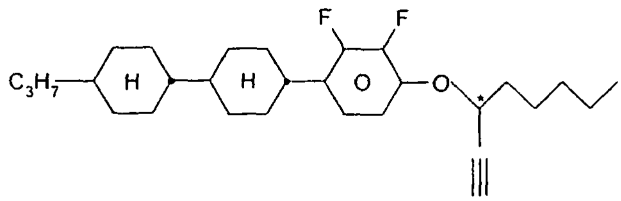

**R/S-3011**

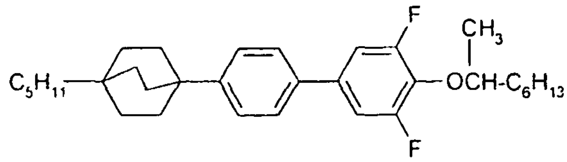

**R/S-4011**

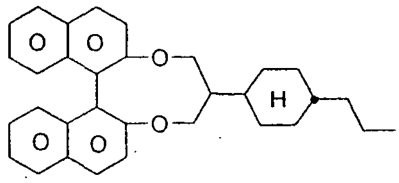

**R/S-5011**

In einer bevorzugten Ausführungsform der vorliegenden Erfindung enthalten die mesogenen Medien eine oder mehrere Verbindungen ausgewählt aus der Gruppe der Verbindungen der Tabelle F.

Vorzugsweise enthalten die mesogenen Medien gemäß der vorliegenden Anmeldung zwei oder mehr, vorzugsweise vier oder mehr, Verbindungen ausgewählt aus der Gruppe bestehend aus den Verbindungen der obigen Tabellen.

Die Flüssigkristallmedien gemäß der vorliegenden Erfindung enthalten vorzugsweise

- sieben oder mehr, vorzugsweise acht oder mehr Verbindungen, vorzugsweise Verbindungen mit drei oder mehr, vorzugsweise vier oder mehr unterschiedlichen Formeln, ausgewählt aus der Gruppe der Verbindungen der Tabelle D.

Die folgenden Beispiele erläutern die vorliegende Erfindung, ohne sie in irgendeiner Weise zu beschränken.

Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

**Beispiele**

Synthesebeispiel 1: 1,4-Bis(2-(4-butylphenyl)ethinyl)-2-cyclopropylbenzol

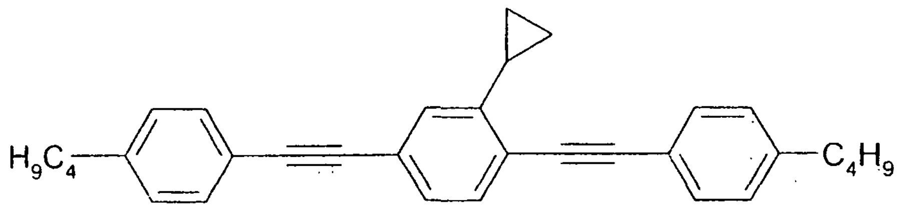

**1**

1.1) 1,4-Dichlor-2-cyclopropylbenzol 2

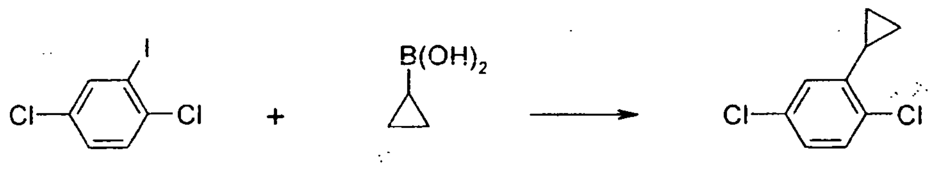

2

20 g (73 mmol) 1,4-Dichlor-2-iodbenzol, 9,4 g (110 mmol) Cyclopropylboronsäure, 32 g (147 mmol) Kaliumphosphat, 421 mg (0,7 mmol) Bis(dibenzylidenaceton)palladium(0) ($Pd(dba)_2$) und 1096 mg (1,5 mmol) 1,2,3,4,5-Pentaphenyl-1-(di-t-butylphosphan)ferrocen (CTC-Q-PHOS) werden in 600 ml Toluol gelöst und über Nacht auf 100 °C erhitzt. Zu der abgekühlten Lösung werden 100 ml Wasser zugegeben und die Mischung zweimal mit Toluol extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt. Man erhält die Titelverbindung als farblosen Feststoff .

1.2) 1,4-Bis(2-(4-butylphenyl)ethinyl)-2-cyclopropylbenzol (**1**)

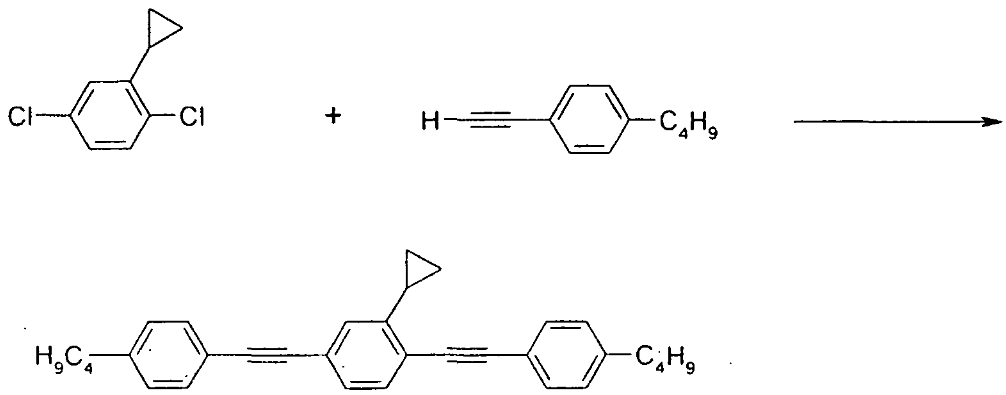

1

5 g (26 mmol) 1,4-Dichlor-2-cyclopropylbenzol, 9,4 g (58 mmol) 1-n-Butyl-4-ethinylbenzol, 19 g (58 mmol) Cesiumcarbonat, 69 mg (0,3 mmol) Bis(acetonitril)palladium(II)clorid und 382 mg (0,8 mmol) 2-Dicyclohexylphosphino-2',4',6'-triisopropybiphenyl werden unter Stickstoff in 80 ml Dioxan gelöst und über Nacht auf 100 °C erhitzt. Zu der abgekühlten Lösung werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt und aus Ethanol umkristallisiert. Man erhält die Titelverbindung **1** als Feststoff.
K 72 N 84,5 I.
$\Delta\varepsilon$ 1,5
$\Delta n$ 0,378
$\gamma_1$ 2194 mPa·s
$^1$H-NMR (250 MHz, $CDCl_3$) : 7.4-7.08(11H, m); 2.5 (4H, m); 1.6-1.3 (9H, m); 0.96 (6H, m); 0.6-0.4 (4H, m).

<u>Synthesebeispiel 2</u>: 1,4-Bis(2-(4-butylphenyl)ethinyl)-2-cyclobutylbenzol **3**

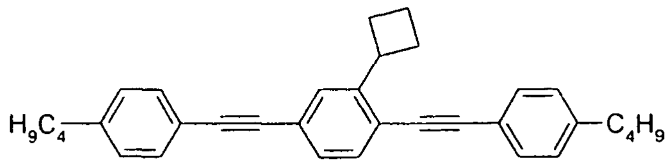

3

2.1) 1-(2,5-Dibrombenzol)-cyclobutanol **4**

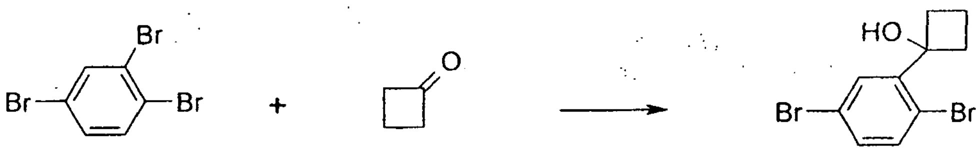

4

21,09 g (67 mmol) 1,2,4-Tribrombenzol werden unter Stickstoff in 100 ml THF vorgelegt, auf -45 °C gekühlt und eine Lösung (1,3 M) von 51,54 ml (67 mmol) Isopropylmagnesiumchlorid-Lithiumchlorid-Komplex in THF zugetropft. Nach 1 Stunde wird der Ansatz auf -10°C erwärmt und bei dieser Temperatur werden 5 ml (66,34 ml) Cyclobutanon zugetropft. Der Ansatz wird auftauen gelassen und mit gesät. $NH_4Cl$-Lösung versetzt, mit Methyl-t-butylether extrahiert, die organische Phase über Natriumsulfat getrocknet, filtriert, das Lösungsmittel im Vakuum entfernt und der Rückstand mit Dichlormethan über Kieselgel filtriert. Man erhält von **4**, das ohne weitere Aufreinigung in der nächsten Stufe eingesetzt wird.

2.2) 1,4-Dibrom-2-cyclobutylbenzol **5**

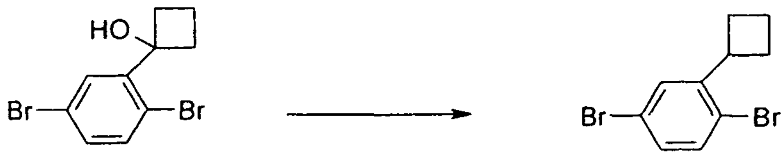

5

14,5 g (47.39 mmol) von **4** werden unter Stickstoff in 50 ml THF gelöst und bei Raumtemperatur werden 35,72 ml (284,4 mmol) Bortrifluorid-Diethylether-Komplex zugetropft. und portionsweise 12.54 g (189,6 mmol) Natriumcyanoborhydrid. Der Ansatz wird über Nacht unter Rückfluss erhitzt. Der Ansatz wird auf Raumtemperatur abkühlen gelassen, mit ges. $NaHCO_3$-Lösung versetzt, mit Methyl-t-butylether extrahiert, die organische Phase über Natriumsulfat getrocknet, filtriert, das Lösungsmittel i. Vak. entfernt und der Rückstand mit 1-Chlorbutan über Kieselgel filtriert. Man erhält 5 als gelbe Flüssigkeit.

2.3) 1,4-Bis(2-(4-butylphenyl)ethinyl)-2-cyclobutylbenzol **3**

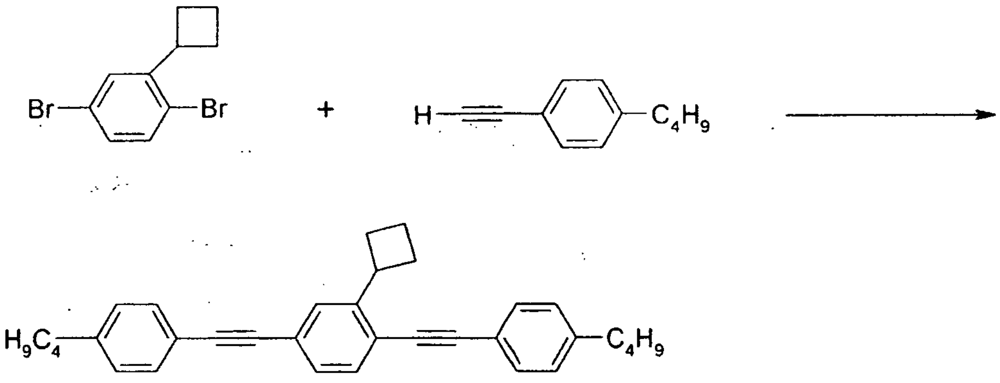

3

7,8 g (47,0 mmol) 1-Butyl-4-ethinylbenzol werden unter Stickstoff in 100 ml THF vorgelegt, auf -78 °C gekühlt und 63,32 ml (63,20 mmol) einer 1 M Lösung von Lithiumbis(trimethylsilyl)amid in Hexan zugetropft. Nach 1 Stunde werden 63,22 ml (63,20 mmol) einer 1 M Lösung 9-Methoxy-9-BBN in Hexan zugegeben und bei -78 °C 2 Stunden rühren gelassen. In einer zweiten Apparatur werden 6,8 g (23,45 mmol) von **5**, 0,916 g (1,0 mmol) Tris(dibenzylideneacetone)dipalladium(0) und 1,64 g (4,0 mmol) 2-Dicyclohexylphosphino-2'-6'-dimethoxybiphenyl in 100 ml THF vorgelegt. Die erste Lösung wird langsam zugetropft und der Ansatz über Nacht auf 100 °C erhitzt. Zu der abgekühlten Lösung werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt und aus Isopropanol umkristallisiert. Man erhält die Titelverbindung **3** als Feststoff.

Tg -39 K 69 N 70 I.

$\Delta\varepsilon$ 0,9

$\Delta n$ 0,359

$\gamma_1$ 3067 mPa·s

Synthesebeispiel 3: 2-Cyclohexyl-4-(4-hexyl-benzolethinyl)-1-(4-propylbenzolethinyl)benzol 6

3.1) 4-Chlor-2-cyclohexyl-benzol-trifluormethansulfonat **7**

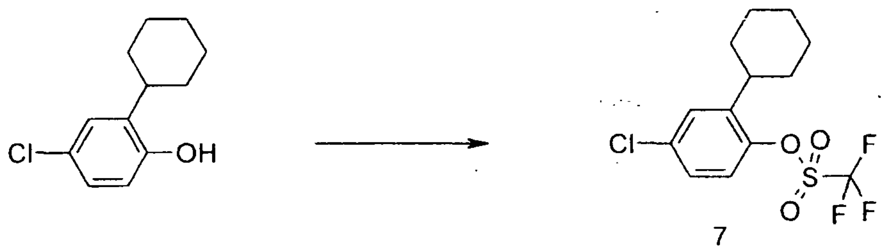

7

19 g (90,2 mmol) 4-Chlor-2-cyclohexylphenol , 4,64 ml (33,18 mmol) Triethylamin und 223 mg (1,8 mmol) 4-(Dimethylamino)pyridin werden in 264 ml Dichlormethan gelöst, auf -5 °C gekühlt und 29,6 ml (180 mmol) Trifluormethansulfonsäureanhydrid zugetropft. Der Ansatz wird über Nacht bei Raumtemperatur gerührt und mit Dichlormethan über Kieselgel filtriert. Man erhält das Produkt **7**, das ohne weitere Aufreinigung in der nächsten Stufe eingesetzt wird.

3.2) (4-Chlor-2-cyclohexyl-benzolethinyl)trimethylsilan **8**

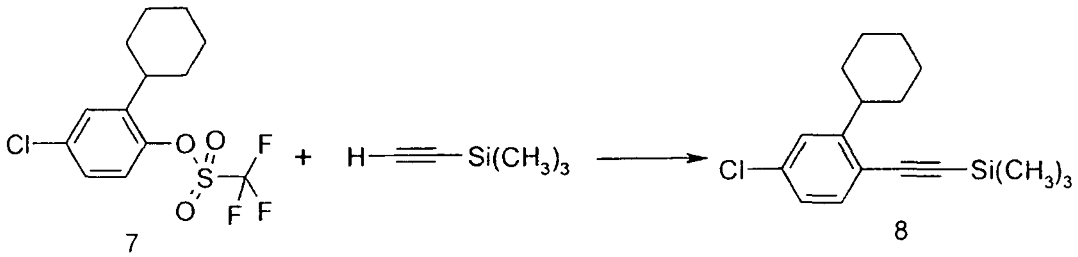

7 8

21 g (61,3 mmol) 7, 25,8 ml (183,8 mmol) Trimethylsilylacetylen, 2,15 g (3 mmol) Bis(triphenylphosphin)palladium(II)chlorid und 21,2 ml (153,2 mmol) Triethylamin werden unter Stickstoff in 60 ml N,N-Dimethylformamid gelöst und über Nacht auf 100 °C erhitzt. Zu der abgekühlten Lösung werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt. Man erhält das Produkt **8**, das ohne weitere Aufreinigung in der nächsten Stufe eingesetzt wird.

3.3) 4-Chlor-2-cyclohexyl-1-ethinyl-benzol **9**

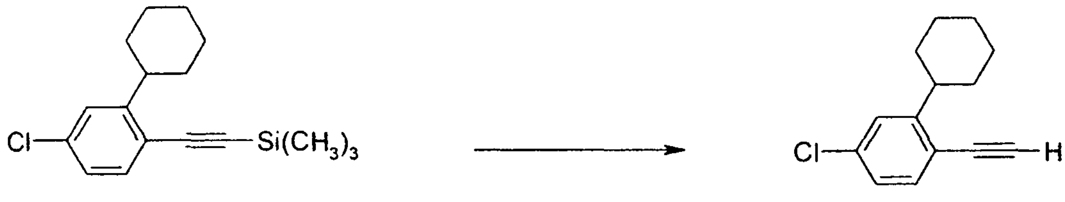

9

16,6 g (57,1 mmol) **8** werden in 154 ml Tetrahydrofuran gelöst, auf 0 °C gekühlt und 1 M Lösung von Tetra-n-butylammoniumfluorid (68,48 mmol) zugetropft. Der Ansatz wird über Nacht bei Raumtemperatur gerührt, mit Wasser versetzt, mit Methyl-t-butylether extrahiert, die organische Phase über Natriumsulfat getrocknet, filtriert, das Lösungsmittel im Vakuum entfernt und der Rückstand mit Heptan/Toluol über Kieselgel filtriert. Man erhält das Produkt **9**, das ohne weitere Aufreinigung in der nächsten Stufe eingesetzt wird.

3.4) 4-Chlor-2-cyclohexyl-1-p-tolylethinyl-benzol **10**

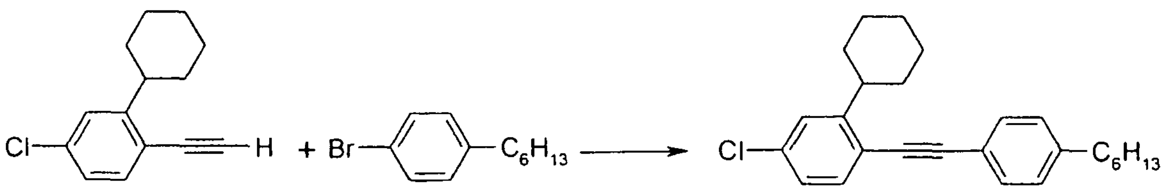

10

6,6 g (30,17 mmol) **9**, 7,28 g (30,17 mmol) 1-Brom-4-hexylbenzol, 21,63 g (66,39 mmol) Cesiumcarbonat, 78 mg (0,3 mmol) Bis(acetonitril)palladium(II)clorid und 431 mg (0,9 mmol) 2-Dicyclohexylphosphino-2',4',6'-triisopropybiphenyl werden unter Stickstoff in 90 ml Dioxan gelöst und über Nacht auf 100 °C erhitzt. Zu der abgekühlten Lösung werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt.

3.5) 2-Cyclohexyl-4-(4-hexyl-phenylethinyl)-1-(4-propylphenylethinyl)-benzol **6**

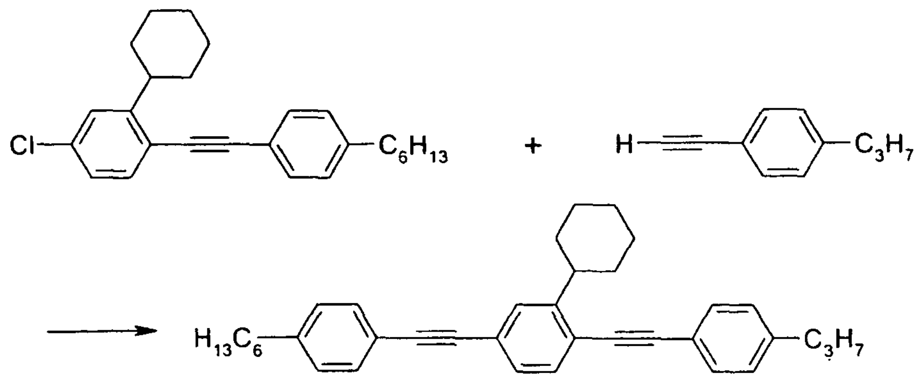

6

4,5 g (11,87 mmol) **10**, 1,7 g (11,87 mmol) 1-n-Propyl-4-ethinylbenzol, 8,5 g (26,12 mmol) Cesiumcarbonat, 30 mg (0,1 mmol) Bis(acetonitril)palladium(II)clorid und 170 mg (0,35 mmol) 2-Dicyclohexylphosphino-2',4',6'-triisopropybiphenyl werden unter Stickstoff in 35 ml Dioxan gelöst und über Nacht auf 100 °C erhitzt. Zu der abgekühlten Lösung werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt. Man erhält die Titelverbindung **6** als Feststoff.
$\Delta\varepsilon$ -0,6
$\Delta n$ 0,294
$\gamma_1$ 5884 mPa·s

<u>Synthesebeispiel 4</u>: 2-Cyclohexyl-4-(4-hexyl-2-fluor-benzolethinyl)-1-(4-propylbenzolethinyl)benzol **7**

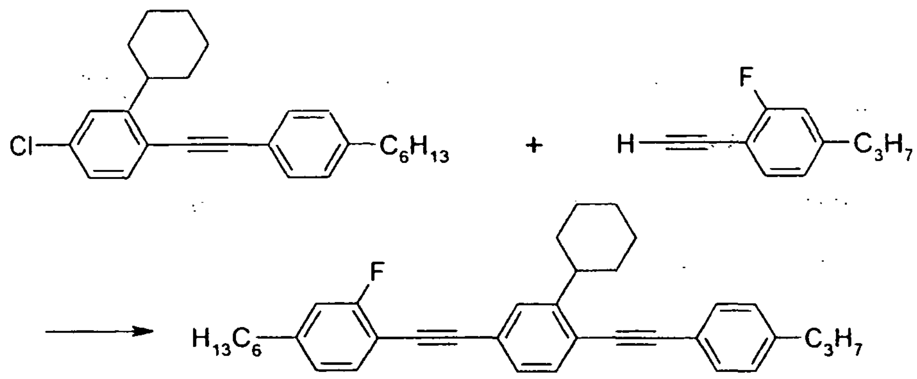

7

Die Titelverbindung wird analog Synthesebeispiel 3 hergestellt.

<u>Synthesebeispiel 5:</u> 2-Cyclopropyl-4-(4-butyl-benzolethinyl)-1-(3,4,5-trifluorbenzolethinyl)benzol **8**

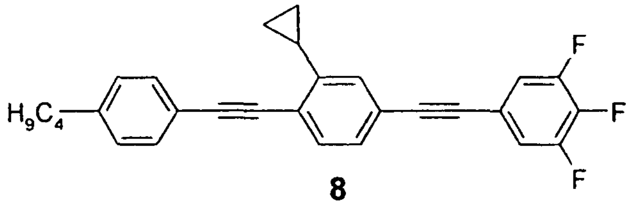

**8**

Die Titelverbindung wird analog Synthesebeispiel 3 ausgehend von 4-Chlor-2-cyclopropylbenzol-trifluormethansulfonat unter Verwendung von 3,4,5-Trifluorbrombenzol hergestellt.
K 84 I
$\Delta\varepsilon$ 13
$\Delta n$ 0,316
$\gamma_1$ 687 mPa·s

<u>Synthesebeispiel 6:</u> 2-Cyclopropyl-4-(4-hexyl-benzolethinyl)-1-(4-propylbenzolethinyl)benzol **9**

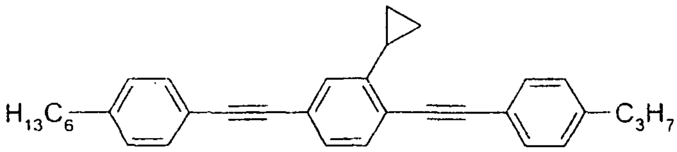

9

Die Titelverbindung wird analog Synthesebeispiel 3 hergestellt.
Tg -43 K 46 N 86 I
$\Delta\varepsilon$ 1,1
$\Delta n$ 0,379
$\gamma_1$ 3138 mPa·s

<u>Synthesebeispiel 7:</u> 2-Cyclopropyl-4-(4-hexyl-benzolethinyl)-1-(4-propylbenzolethinyl)benzol **10**

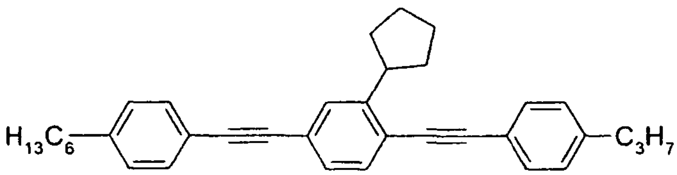

**10**

Die Titelverbindung wird analog Synthesebeispiel 2 hergestellt.
Tg -36 K 57 N (7,0) I
$\Delta\varepsilon$ -0,1
$\Delta n$ 0,334
$\gamma_1$ 4045 mPa·s

<u>Mischungsbeispiel 1</u>

Es wird eine Flüssigkristallmischung M-1 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 152 °C |
| Nr. | Abkürzung | | T(S,N) | = -20 °C |
| 1 | PPTUI-3-2 | 20 % | | |
| 2 | PPTUI-3-4 | 20 % | $\Delta n$ (20°C, 589,3 nm) | = 0,301 |
| 3 | PPTUI-4-4 | 5 % | | |
| 4 | GGP-3-CL | 10 % | | |
| 5 | GGP-5-CL | 20 % | $\Delta\varepsilon$ (20°C, 1 kHz) | = 4,1 |
| 6 | CPGP-5-2 | 5 % | $\varepsilon_{\|\|}$ (20°C, 1 kHz) | 7,6 |
| 7 | CPGP-5-3 | 5 % | | |
| 8 | **(1)** | 15 % | | |
| Σ | | 100 % | | |

Diese Mischung eignet sich sehr gut für Anwendungen im Mikrowellenbereich, insbesondere für Phasenschieber. Die Materialgüte ($\eta$) ist gegenüber herkömmlichen Mischungen erhöht.

Weitere Kombinationen der Ausführungsformen und Varianten der Erfindung gemäß der Beschreibung ergeben sich auch aus den folgenden Ansprüchen.

## Patentansprüche

**1.** Verbindungen der Formel I

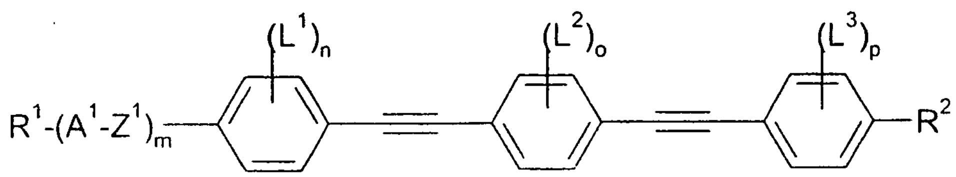

I

worin

$L^1$ bis $L^3$ unabhängig voneinander F, Cl, $C_1$ bis $C_{10}$-Alkyl oder eine Bedeutung gemäß $R^x$ bedeutet, wobei einer oder mehrere der Reste $L^1$ bis $L^3$ ein $R^x$ bedeuten,
n, o, p unabhängig voneinander 0, 1, 2, 3, oder 4,
$R^x$ Cyclopropyl, Cyclobutyl, Cyclopentyl oder Cyclohexyl,
$R^1$ und $R^2$ unabhängig voneinander H, einen halogenierten oder unsubstituierten Alkylrest mit 1 bis 15 C-Atomen, wobei in diesen Resten auch eine oder mehrere $CH_2$-Gruppen jeweils unabhängig voneinander durch -C≡C-, -CH=CH-, -CF=CF-, -(CO)O-, -O(CO)-, -(CO)- oder -O- so ersetzt sein können, dass O-Atome nicht direkt miteinander verknüpft sind,
F, Cl, Br, CN, $CF_3$, $OCF_3$, SCN, NCS oder $SF_5$ bedeuten,
$A^1$

a) trans-1,4-Cyclohexylen oder Cyclohexenylen, worin auch eine oder zwei nicht benachbarte $CH_2$-Gruppen durch -O - und/oder -S- ersetzt sein können, und worin H durch F ersetzt sein kann,
b) 1,4-Phenylen, worin eine oder zwei CH-Gruppen durch N ersetzt sein können und worin auch ein oder mehrere H-Atome gegen Br, Cl, F, CN, $R^x$, $C_1$-$C_{10}$ Alkyl, $C_1$-$C_{10}$ Alkoxy oder eine ein- oder mehrfach fluorierte $C_1$-$C_{10}$ Methyl- oder Alkoxygruppe ersetzt sein können, oder c) ein Rest aus der Gruppe 1,4-Bicyclo(2,2,2)-octylen, Cylcobut-1,3-diyl, Spiro[3.3]heptan-2,6-diyl, Thiophen-2,5-diyl,

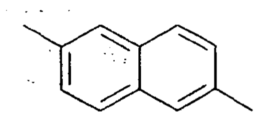 oder 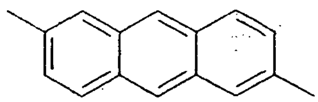 ,

worin ein oder mehrere CH-Gruppen durch N ersetzt sein können, ein oder mehrere H-Atome gegen Br, Cl, F, CN, $R^x$, $C_1$-$C_{10}$ Alkyl, $C_1$-$C_{10}$ Alkoxy oder eine ein- oder mehrfach fluorierte $C_1$-$C_{10}$ Methyl- oder Alkoxygruppe ersetzt sein können, und eine oder mehrere Doppelbindungen durch Einfachbindungen ersetzt sein können,

bedeutet,
$Z^1$ eine Einfachbindung, -C≡C-, -CH=CH-, $-CH_2O-$, -(CO)O-, $-CF_2O-$, $-CF_2CF_2-$, $-CH_2CF_2-$, $-CH_2CH_2-$, $-(CH_2)_4-$, -CH=CF- oder -CF=CF-, wobei asymmetrische Brücken nach beiden Seiten orientiert sein können, und
m 0, 1 oder 2

bedeutet.

2. Verbindungen nach Anspruch 1, **dadurch gekennzeichnet, dass** einer, zwei oder drei der Reste $L^1$ bis $L^3$ einen Rest $R^x$ bedeuten.

3. Verbindungen nach Anspruch 1 oder 2, **dadurch gekennzeichnet, dass** m 0 ist.

4. Verbindungen nach einem oder mehreren der Ansprüche 1 bis 3, **dadurch gekennzeichnet, dass** genau ein Rest $L^2$ einen Rest $R^x$ bedeutet.

5. Verwendung der Verbindungen der Formel I nach einem oder mehreren der Ansprüche 1 bis 4 in einem Bauteil für die Hochfrequenztechnik.

6. Flüssigkristallmedium, **dadurch gekennzeichnet, dass** es eine oder mehrere Verbindungen der Formel I nach einem oder mehreren der Ansprüche 1 bis 4 enthält.

7. Flüssigkristallmedium nach Anspruch 6, **dadurch gekennzeichnet, dass** es zusätzlich eine oder mehrere Verbindungen ausgewählt aus den Verbindungen der Formeln II, III und/oder IV enthält:

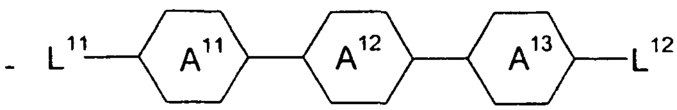 II

worin

$L^{11}$ $R^{11}$ oder $X^{11}$,
$L^{12}$ $R^{12}$ oder $X^{12}$,
$R^{11}$ und $R^{12}$ unabhängig voneinander H, unfluoriertes Alkyl oder unfluoriertes Alkoxy mit 1 bis 15 C-Atomen oder unfluoriertes Alkenyl, unfluoriertes Alkenyloxy oder unfluoriertes Alkoxyalkyl mit 2 bis 15 C-Atomen bedeuten,
$X^{11}$ und $X^{12}$ unabhängig voneinander H, F, Cl, -CN, -NCS, $-SF_5$, fluoriertes Alkyl oder fluoriertes Alkoxy mit 1 bis 7 C-Atomen oder fluoriertes Alkenyl, fluoriertes Alkenyloxy oder fluoriertes Alkoxyalkyl mit 2 bis 7 C-Atomen, und

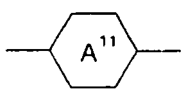

bis

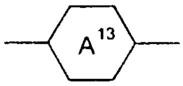

unabhängig voneinander

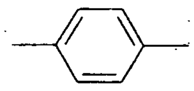 , 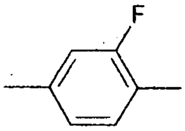 , 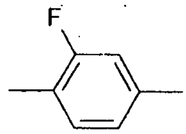 ,

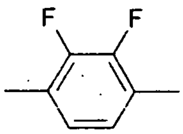 , 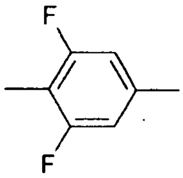 , 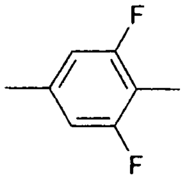 ,

oder

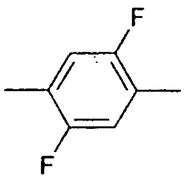

bedeuten,

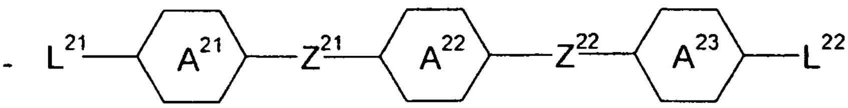 III

worin

$L^{21}$ $R^{21}$ und, im Fall, dass $Z^{21}$ und/oder $Z^{22}$ *trans*- -CH=CH - oder *trans*- -CF=CF-, bedeutet, alternativ $X^{21}$, bedeutet,

$L^{22}$ $R^{22}$ und, im Fall, dass $Z^{21}$ und/oder $Z^{22}$ *trans*- -CH=CH - oder *trans*- -CF=CF-, bedeutet, alternativ $X^{22}$, bedeutet,

$R^{21}$ und $R^{22}$ unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen, bedeuten,

$X^{21}$ und $X^{22}$ unabhängig voneinander F oder Cl, -CN, -NCS, $-SF_5$, fluoriertes Alkyl oder fluoriertes Alkoxy mit 1 bis 7 C-Atomen oder fluoriertes Alkenyl, fluoriertes Alkenyloxy oder fluoriertes Alkoxyalkyl mit 2 bis 7 C-Atomen bedeuten,

einer von

$Z^{21}$ und $Z^{22}$ *trans*- -CH=CH-, *trans*- -CF=CF- oder -C≡C- bedeutet und der andere unabhängig davon *trans*- -CH=CH-, *trans*- -CF=CF- oder eine Einfachbindung bedeutet, und

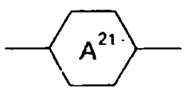

bis

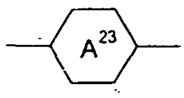

unabhängig voneinander

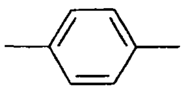 , 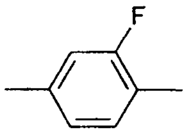 , 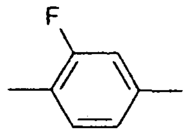 ,

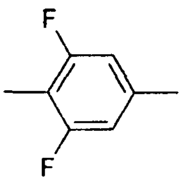 , 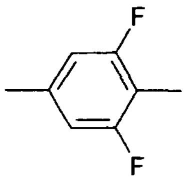 , 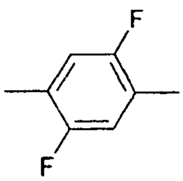 ,

oder

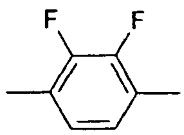

bedeuten,

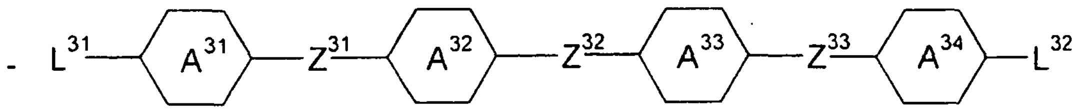 IV

worin

$L^{31}$ $R^{31}$ oder $X^{31}$,
$L^{32}$ $R^{32}$ oder $X^{32}$,
$R^{31}$ und $R^{32}$ unabhängig voneinander H, unfluoriertes Alkyl oder unfluoriertes Alkoxy mit 1 bis 17, C-Atomen oder unfluoriertes Alkenyl, unfluoriertes Alkenyloxy, oder unfluoriertes Alkoxyalkyl mit 2 bis 15, bedeuten,
$X^{31}$ und $X^{32}$ unabhängig voneinander H, F, Cl, -CN, -NCS, $-SF_5$, fluoriertes Alkyl oder fluoriertes Alkoxy mit 1 bis 7 C-Atomen oder fluoriertes Alkenyl, fluoriertes Alkenyloxy, oder fluoriertes Alkoxyalkyl mit 2 bis 7 C-Atomen,
$Z^{31}$ bis $Z^{33}$ unabhängig voneinander *trans*- -CH=CH-, *trans*--CF=CF-, -C≡C- oder eine Einfachbindung bedeuten, und

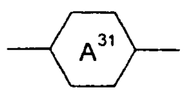

bis

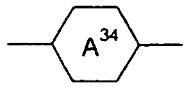

unabhängig voneinander

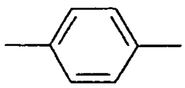 , 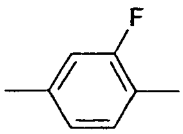 , 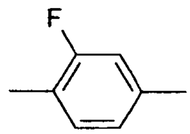 ,

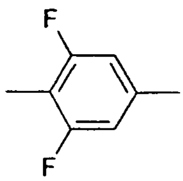 , 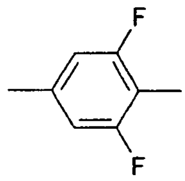 , 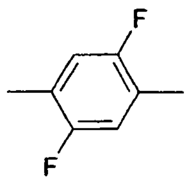 ,

oder

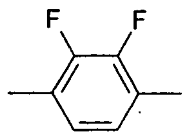

bedeuten,

8. Flüssigkristallmedium nach Anspruch 6 oder 7, **dadurch gekennzeichnet, dass** es eine oder mehrere Verbindungen der Formel II, wie in Anspruch 7 angegeben, enthält.

9. Flüssigkristallmedium nach einem oder mehreren der Ansprüche 6 bis 8, **dadurch gekennzeichnet, dass** es eine oder mehrere Verbindungen der Formel III, wie in Anspruch 7 angegeben, enthält.

10. Flüssigkristallmedium nach einem oder mehreren der Ansprüche 6 bis 9, **dadurch gekennzeichnet, dass** es eine oder mehrere Verbindungen der Formel IV, wie in Anspruch 7 angegeben, enthält.

11. Flüssigkristallmedium nach einem oder mehreren der Ansprüche 6 bis 10, **dadurch gekennzeichnet, dass** die Konzentration der Verbindungen der Formel I im Medium im Bereich von insgesamt 5 % bis 90 % liegt.

12. Flüssigkristallmedium nach einem oder mehreren der Ansprüche 6 bis 11, **dadurch gekennzeichnet, dass** es eine oder mehrere Verbindungen ausgewählt aus der Gruppe der Verbindungen der Formeln II-1 bis II-3

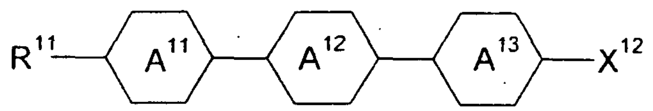 II-1

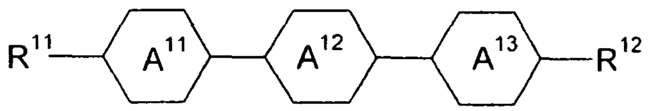 II-2

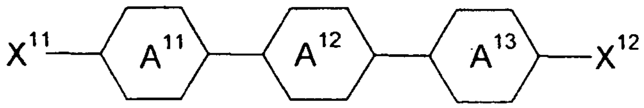

II-3

worin die Parameter die jeweiligen in Anspruch 1 gegebenen Bedeutungen haben, enthält.

13. Verfahren zur Herstellung eines Flüssigkristallmediums nach einem oder mehreren der Ansprüche 6 bis 12, **dadurch gekennzeichnet, dass** eine oder mehrere Verbindungen der Formel I, wie in Anspruch 1 angegeben, mit einer oder mehreren Verbindungen ausgewählt aus der Gruppe der Verbindungen der Formeln II, III und IV, wie in Anspruch 7 angegeben und optional mit einer oder mehreren weiteren Verbindungen und optional mit einem oder mehreren Additiven gemischt wird.

14. Bauteil für die Hochfrequenztechnik, **dadurch gekennzeichnet, dass** es ein Flüssigkristallmedium nach einem oder mehreren der Ansprüche 6 bis 12 enthält.

15. Bauteil nach Anspruch 14, **dadurch gekennzeichnet, dass** es sich um einen oder mehrere funktionell verbundene Phasenschieber handelt.

16. Verwendung eines Flüssigkristallmediums nach einem oder mehreren der Ansprüche 6 bis 12 in einem Bauteil für die Hochfrequenztechnik.

17. Phasengesteuerte Gruppenantenne, **dadurch gekennzeichnet**, das sie ein oder mehrere Bauteile nach Anspruch 14 oder 15 enthält.

**Claims**

1. Compounds of the formula I

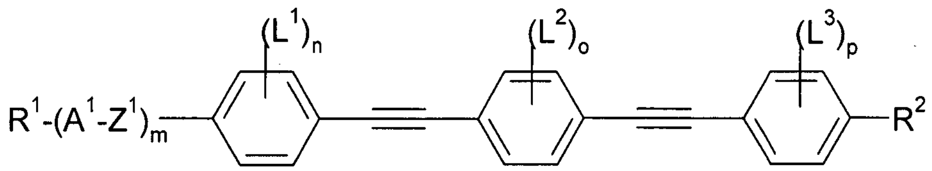

I

in which

$L^1$ to $L^3$, independently of one another, denote F, Cl, $C_1$- to $C_{10}$-alkyl or a meaning in accordance with $R^x$, where one or more of the radicals $L^1$ to $L^3$ denote an $R^x$,
n, o, p, independently of one another, denote 0, 1, 2, 3 or 4,
$R^x$ denotes cyclopropyl, cyclobutyl, cyclopentyl or cyclohexyl,
$R^1$ and $R^2$, independently of one another, denote H, a halogenated or unsubstituted alkyl radical having 1 to 15 C atoms, where, in addition, one or more $CH_2$ groups in these radicals may each be replaced, independently of one another, by -C≡C-, -CH=CH-, -CF=CF-, -(CO)O-, -O(CO)-, -(CO)- or -O- in such a way that O atoms are not linked directly to one another, F, Cl, Br, CN, $CF_3$, $OCF_3$, SCN, NCS or $SF_5$,
$A^1$ denotes

a) trans-1,4-cyclohexylene or cyclohexenylene, in which, in addition, one or two non-adjacent $CH_2$ groups may be replaced by -O-and/or -S- and in which H may be replaced by F,
b) 1,4-phenylene, in which one or two CH groups may be replaced by N and in which, in addition, one or more H atoms may be replaced by Br, Cl, F, CN, $R^x$, $C_1$-$C_{10}$ alkyl, $C_1$-$C_{10}$ alkoxy or a mono- or polyfluorinated $C_1$-$C_{10}$ alkyl or alkoxy group,
or
c) a radical from the group 1,4-bicyclo[2.2.2]octylene, cyclobut-1,3-diyl, spiro[3.3]heptane-2,6-diyl, thiophene-2,5-diyl,

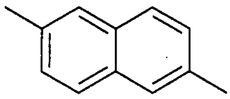 or 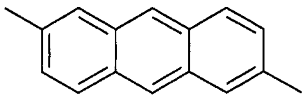 ,

in which one or more CH groups may be replaced by N, one or more H atoms may be replaced by Br, Cl, F, CN, $R^x$, $C_1$-$C_{10}$ alkyl, $C_1$-$C_{10}$ alkoxy or a mono- or polyfluorinated $C_1$-$C_{10}$ alkyl or alkoxy group, and one or more double bonds may be replaced by single bonds,

$Z^1$ denotes a single bond, -C≡C-, -CH=CH-, $-CH_2O-$, -(CO)O-, - $CF_2O-$, $-CF_2CF_2-$, $-CH_2CF_2-$, $-CH_2CH_2-$, $-(CH_2)_4-$, -CH=CF- or -CF=CF-, where asymmetrical bridges may be oriented to both sides, and
m denotes 0, 1 or 2.

2. Compounds according to Claim 1, **characterised in that** one, two or three of the radicals $L^1$ to $L^3$ denote a radical $R^x$.

3. Compounds according to Claim 1 or 2, **characterised in that** m is 0.

4. Compounds according to one or more of Claims 1 to 3, **characterised in that** precisely one radical $L^2$ denotes a radical $R^x$.

5. Use of the compounds of the formula I according to one or more of Claims 1 to 4 in a component for high-frequency technology.

6. Liquid-crystal medium, **characterised in that** it comprises one or more compounds of the formula I according to one or more of Claims 1 to 4.

7. Liquid-crystal medium according to Claim 6, **characterised in that** it additionally comprises one or more compounds selected from the compounds of the formulae II, III and/or IV:

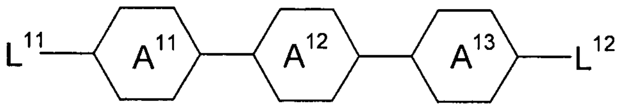 II

in which

$L^{11}$ denotes $R^{11}$ or $X^{11}$,
$L^{12}$ denotes $R^{12}$ or $X^{12}$,
$R^{11}$ and $R^{12}$, independently of one another, denote H, unfluorinated alkyl or unfluorinated alkoxy having 1 to 15 C atoms or unfluorinated alkenyl, unfluorinated alkenyloxy or unfluorinated alkoxyalkyl having 2 to 15 C atoms,
$X^{11}$ and $X^{12}$, independently of one another, denote H, F, Cl, -CN, -NCS, - $SF_5$, fluorinated alkyl or fluorinated alkoxy having 1 to 7 C atoms or fluorinated alkenyl, fluorinated alkenyloxy or fluorinated alkoxyalkyl having 2 to 7 C atoms, and

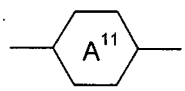

to

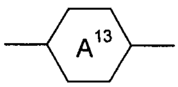 ,

independently of one another, denote

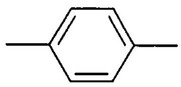, 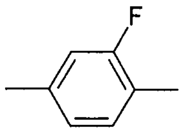, 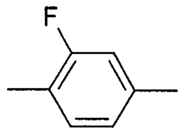,

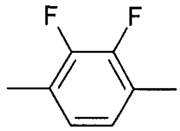, 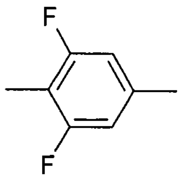, 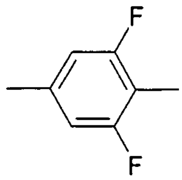

or

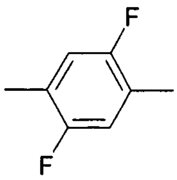,

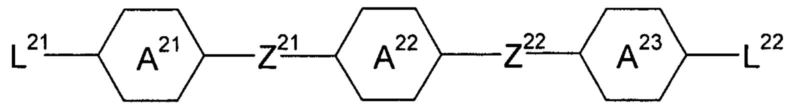 III

in which

$L^{21}$ denotes $R^{21}$ and, in the case where $Z^{21}$ and/or $Z^{22}$ denote *trans*-CH=CH- or *trans*-CF=CF-, alternatively denotes $X^{21}$,
$L^{22}$ denotes $R^{22}$ and, in the case where $Z^{21}$ and/or $Z^{22}$ denote *trans*-CH=CH- or *trans*-CF=CF-, alternatively denotes $X^{22}$,
$R^{21}$ and $R^{22}$, independently of one another, denote H, unfluorinated alkyl or unfluorinated alkoxy having 1 to 17, preferably having 3 to 10, C atoms or unfluorinated alkenyl, unfluorinated alkenyloxy or unfluorinated alkoxyalkyl having 2 to 15, preferably 3 to 10, C atoms,
$X^{21}$ and $X^{22}$, independently of one another, denote F or Cl, -CN, -NCS, $-SF_5$, fluorinated alkyl or fluorinated alkoxy having 1 to 7 C atoms or fluorinated alkenyl, fluorinated alkenyloxy or fluorinated alkoxyalkyl having 2 to 7 C atoms,
one of
$Z^{21}$ and $Z^{22}$ denotes *trans*-CH=CH-, *trans*-CF=CF- or -C=C- and the other, independently thereof, denotes *trans*-CH=CH-, *trans*-CF=CF- or a single bond, and

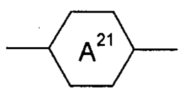

to

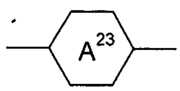,

independently of one another, denote

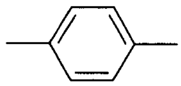,
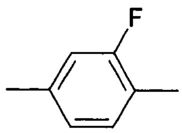,
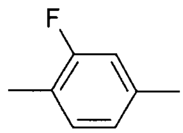,

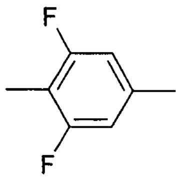,
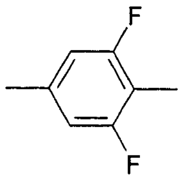,
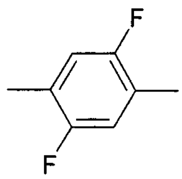

or

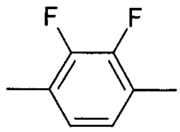,

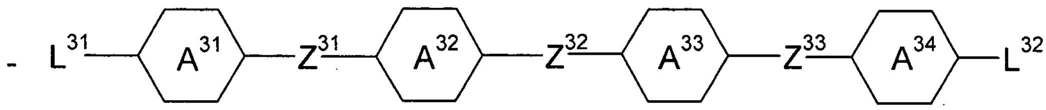 IV

in which

$L^{31}$ denotes $R^{31}$ or $X^{31}$,
$L^{32}$ denotes $R^{32}$ or $X^{32}$,
$R^{31}$ and $R^{32}$, independently of one another, denote H, unfluorinated alkyl or unfluorinated alkoxy having 1 to 17 C atoms or unfluorinated alkenyl, unfluorinated alkenyloxy or unfluorinated alkoxyalkyl having 2 to 15 C atoms,
$X^{31}$ and $X^{32}$, independently of one another, denote H, F, Cl, -CN, -NCS, - $SF_5$, fluorinated alkyl or fluorinated alkoxy having 1 to 7 C atoms or fluorinated alkenyl, fluorinated alkenyloxy or fluorinated alkoxyalkyl having 2 to 7 C atoms,
$Z^{31}$ to $Z^{33}$, independently of one another, denote *trans*-CH=CH-, *trans*-CF=CF-, -C≡C- or a single bond, and

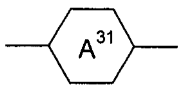

to

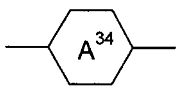,

independently of one another, denote

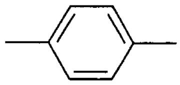, 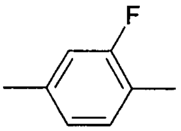, 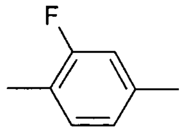,

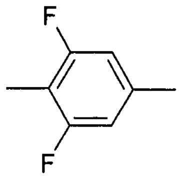, 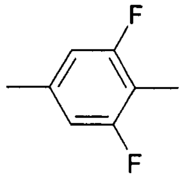, 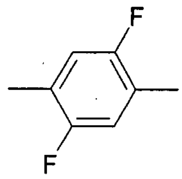

or

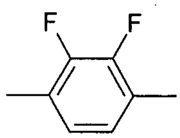.

**8.** Liquid-crystal medium according to Claim 6 or 7, **characterised in that** it comprises one or more compounds of the formula II as indicated in Claim 7.

**9.** Liquid-crystal medium according to one or more of Claims 6 to 8, **characterised in that** it comprises one or more compounds of the formula II as indicated in Claim 7.

**10.** Liquid-crystal medium according to one or more of Claims 6 to 9, **characterised in that** it comprises one or more compounds of the formula IV as indicated in Claim 7.

**11.** Liquid-crystal medium according to one or more of Claims 6 to 10, **characterised in that** the concentration of the compounds of the formula I in the medium is in the range from in total 5% to 90%.

**12.** Liquid-crystal medium according to one or more of Claims 6 to 11, **characterised in that** it comprises one or more compounds selected from the group of the compounds of the formulae II-1 to II-3

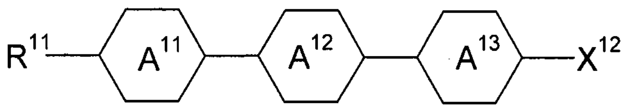

II-1

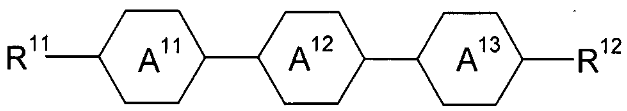

II-2

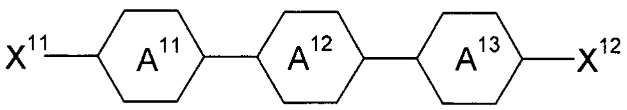

II-3

in which the parameters have the respective meanings given in Claim 1.

**13.** Process for the preparation of a liquid-crystal medium according to one or more of Claims 6 to 12, **characterised in that** one or more compounds of the formula I as indicated in Claim 1 are mixed with one or more compounds selected from the group of the compounds of the formulae II, III and IV as indicated in Claim 7 and optionally with one or more further compounds and optionally with one or more additives.

**14.** Component for high-frequency technology, **characterised in that** it comprises a liquid-crystal medium according to one or more of Claims 6 to 12.

**15.** Component according to Claim 14, **characterised in that** it comprises one or more functionally connected phase shifters.

**16.** Use of a liquid-crystal medium according to one or more of Claims 6 to 12 in a component for high-frequency technology.

**17.** Phase-controlled group antenna, **characterised in that** it comprises one or more components according to Claim 14 or 15.

## Revendications

**1.** Composés de la formule I

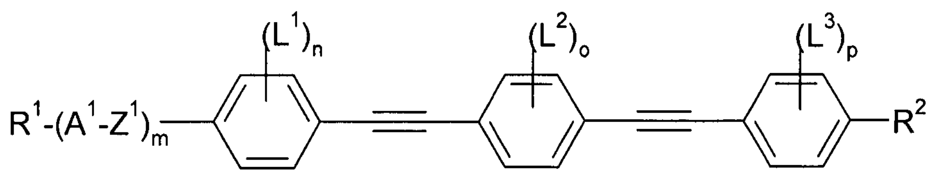

I

dans laquelle

$L^1$ à $L^3$ représentent, indépendamment les uns des autres, F, Cl, $C_1$- à $C_{10}$-alkyle ou une signification conformément à $R^x$, où un ou plusieurs des radicaux $L^1$ à $L^3$ représente(nt) un $R^x$,
n, o, p représentent, indépendamment les uns des autres, 0, 1, 2, 3 ou 4,
$R^x$ représente cyclopropyle, cyclobutyle, cyclopentyle ou cyclohexyle,
$R^1$ et $R^2$ représentent, indépendamment l'un de l'autre, H, un radical alkyle halogéné ou non substitué comportant de 1 à 15 atomes de C, où, en outre, un ou plusieurs groupes $CH_2$ dans ces radicaux peuvent chacun être remplacés, indépendamment les uns des autres, par -C≡C-, -CH=CH-, -CF=CF-, -(CO)O-, -O(CO)-, -(CO)- ou -O- de telle sorte que des atomes de O ne soient pas liés directement les uns aux autres,
F, Cl, Br, CN, $CF_3$, $OCF_3$, SCN, NCS ou $SF_5$,
$A^1$ représente

a) trans-1,4-cyclohexylène ou cyclohexénylène, où, en outre, un ou deux groupes $CH_2$ non adjacents peut/peuvent être remplacé(s) par -O- et/ou -S- et où H peut être remplacé par F,
b) 1,4-phénylène, où un ou deux groupes CH peut/peuvent être remplacé(s) par N et où, en outre, un ou plusieurs atomes de H peut/peuvent être remplacé(s) par Br, Cl, F, CN, $R^x$, $C_1$-$C_{10}$ alkyle, $C_1$-$C_{10}$ alcoxy ou un groupe $C_1$-$C_{10}$ alkyle ou alcoxy mono- ou polyfluoré,
ou
c) un radical pris parmi le groupe 1,4-bicyclo[2.2.2]octylène, cyclobut-1,3-diyle, spiro[3.3]heptane-2,6-diyle, thiophène-2,5-diyle,

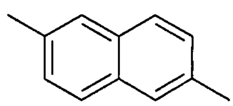 ou 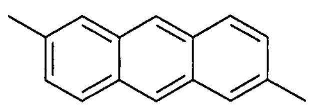 ,

où un ou plusieurs groupes CH peut/peuvent être remplacé(s) par N,
un ou plusieurs atomes de H peut/peuvent être remplacé(s) par Br, Cl, F, CN, $R^x$, $C_1$-$C_{10}$ alkyle, $C_1$-$C_{10}$ alcoxy ou un groupe $C_1$-$C_{10}$ alkyle ou alcoxy mono- ou polyfluoré, et une ou plusieurs liaisons doubles peut/peuvent être remplacée(s) par des liaisons simples,

$Z^1$ représente une liaison simple, -C≡C-, -CH=CH-, $-CH_2O-$, -(CO)O-, $-CF_2O-$, $-CF_2CF_2-$, $-CH_2CF_2-$, $-CH_2CH_2-$,

$-(CH_2)_4-$, -CH=CF- ou -CF=CF-, où des ponts asymétriques peuvent être orientés sur les deux côtés, et m représente 0, 1 ou 2.

2. Composés selon la revendication 1, **caractérisés en ce qu'**un, deux ou trois des radicaux $L^1$ à $L^3$ représentent un radical $R^x$.

3. Composés selon la revendication 1 ou 2, **caractérisés en ce que** m est 0.

4. Composés selon une ou plusieurs des revendications 1 à 3, **caractérisés en ce que** précisément un radical $L^2$ représente un radical $R^x$.

5. Utilisation des composés de la formule I selon une ou plusieurs des revendications 1 à 4 dans un composant pour une technologie haute fréquence.

6. Milieu cristallin liquide, **caractérisé en ce qu'**il comprend un ou plusieurs composés de la formule I selon une ou plusieurs des revendications 1 à 4.

7. Milieu cristallin liquide selon la revendication 6, **caractérisé en ce qu'**il comprend additionnellement un ou plusieurs composés choisis parmi les composés des formules II, III et/ou IV :

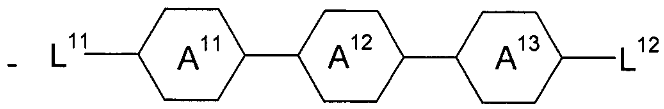 II

dans laquelle

$L^{11}$ représente $R^{11}$ ou $X^{11}$,
$L^{12}$ représente $R^{12}$ ou $X^{12}$,
$R^{11}$ et $R^{12}$ représentent, indépendamment l'un de l'autre, H, alkyle non fluoré ou alcoxy non fluoré comportant de 1 à 15 atomes de C ou alkényle non fluoré, alkényloxy non fluoré ou alcoxyalkyle non fluoré comportant de 2 à 15 atomes de C,
$X^{11}$ et $X^{12}$ représentent, indépendamment l'un de l'autre, H, F, Cl, -CN, -NCS, $-SF_5$, alkyle fluoré ou alcoxy fluoré comportant de 1 à 7 atomes de C ou alkényle fluoré, alkényloxy fluoré ou alcoxyalkyle fluoré comportant de 2 à 7 atomes de C, et

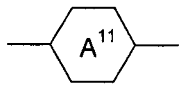

à

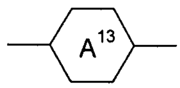

représentent, indépendamment les uns des autres,

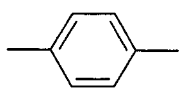, 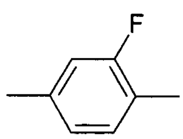, 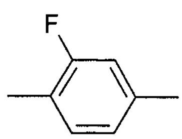,

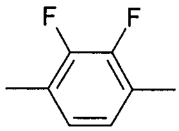, 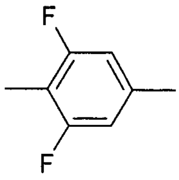, 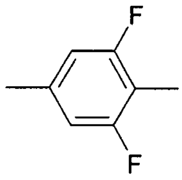

ou

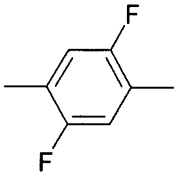,

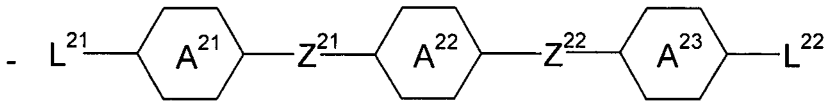 III

dans laquelle

$L^{21}$ représente $R^{21}$ et, dans le cas où $Z^{21}$ et/ou $Z^{22}$ représentent *trans*-CH=CH- ou *trans*-CF=CF-, représente à titre d'alternative $X^{21}$,
$L^{22}$ représente $R^{22}$ et, dans le cas où $Z^{21}$ et/ou $Z^{22}$ représentent *trans*-CH=CH- ou *trans*-CF=CF-, représente à titre d'alternative $X^{22}$,
$R^{21}$ et $R^{22}$ représentent, indépendamment l'un de l'autre, H, alkyle non fluoré ou alcoxy non fluoré comportant de 1 à 17, de préférence comportant de 3 à 10, atomes de C ou alkényle non fluoré, alkényloxy non fluoré ou alcoxyalkyle non fluoré comportant de 2 à 15, de préférence de 3 à 10, atomes de C,
$X^{21}$ et $X^{22}$ représentent, indépendamment l'un de l'autre, F ou Cl, -CN, -NCS, -$SF_5$, alkyle fluoré ou alcoxy fluoré comportant de 1 à 7 atomes de C ou alkényle fluoré, alkényloxy fluoré ou alcoxyalkyle fluoré comportant de 2 à 7 atomes de C,
l'un de
$Z^{21}$ et $Z^{22}$ représente *trans*-CH=CH-, *trans*-CF=CF- ou -C≡C- et l'autre, indépendamment du premier, représente *trans*-CH=CH-, *trans*-CF=CF- ou une liaison simple, et

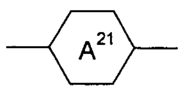

à

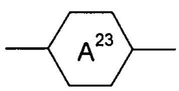,

représentent, indépendamment les uns des autres,

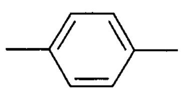, 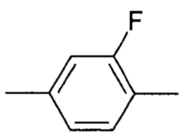, 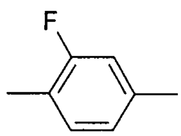,

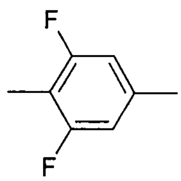 , 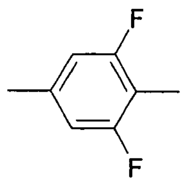 , 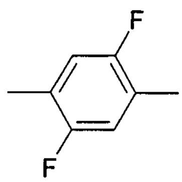

ou

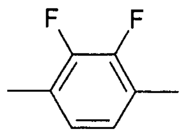 ,

- 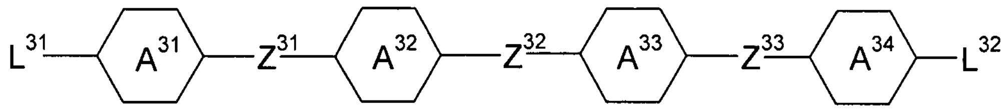 IV

dans laquelle

$L^{31}$ représente $R^{31}$ ou $X^{31}$,
$L^{32}$ représente $R^{32}$ ou $X^{32}$,
$R^{31}$ et $R^{32}$ représentent, indépendamment l'un de l'autre, H, alkyle non fluoré ou alcoxy non fluoré comportant de 1 à 17 atomes de C ou alkényle non fluoré, alkényloxy non fluoré ou alcoxyalkyle non fluoré comportant de 2 à 15 atomes de C,
$X^{31}$ et $X^{32}$ représentent, indépendamment l'un de l'autre, H, F, Cl, -CN, -NCS, $-SF_5$, alkyle fluoré ou alcoxy fluoré comportant de 1 à 7 atomes de C ou alkényle fluoré, alkényloxy fluoré ou alcoxyalkyle fluoré comportant de 2 à 7 atomes de C,
$Z^{31}$ à $Z^{33}$ représentent, indépendamment les uns des autres, *trans*-CH=CH-, *trans*-CF=CF-, -C≡C- ou une liaison simple, et

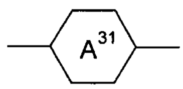

à

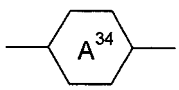 ,

représentent, indépendamment les uns des autres,

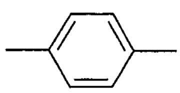 , 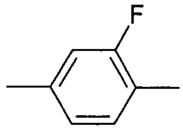 , 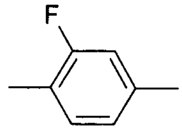 ,

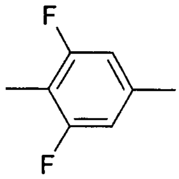
,
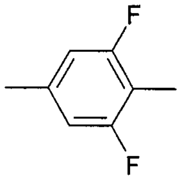
,
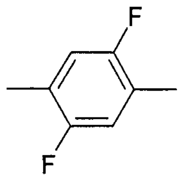

ou

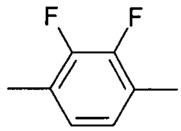
.

**8.** Milieu cristallin liquide selon la revendication 6 ou 7, **caractérisé en ce qu'**il comprend un ou plusieurs composés de la formule II comme indiqué selon la revendication 7.

**9.** Milieu cristallin liquide selon une ou plusieurs des revendications 6 à 8, **caractérisé en ce qu'**il comprend un ou plusieurs composés de la formule III comme indiqué selon la revendication 7.

**10.** Milieu cristallin liquide selon une ou plusieurs des revendications 6 à 9, **caractérisé en ce qu'**il comprend un ou plusieurs composés de la formule IV comme indiqué selon la revendication 7.

**11.** Milieu cristallin liquide selon une ou plusieurs des revendications 6 à 10, **caractérisé en ce que** la concentration des composés de la formule I dans le milieu est dans la plage de 5% à 90% au total.

**12.** Milieu cristallin liquide selon une ou plusieurs des revendications 6 à 11, **caractérisé en ce qu'**il comprend un ou plusieurs composés choisis parmi le groupe des composés des formules II-1 à II-3

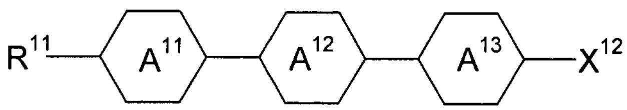
II-1

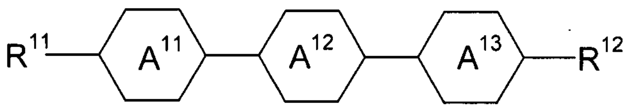
II-2

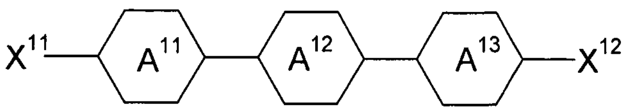
II-3

dans lesquelles les paramètres présentent les significations respectives données selon la revendication 1.

**13.** Procédé pour la préparation d'un milieu cristallin liquide selon une ou plusieurs des revendications 6 à 12, **caractérisé en ce qu'**un ou plusieurs des composés de la formule I comme indiqué selon la revendication 1 est/sont mélangé(s) avec un ou plusieurs composé(s) choisi(s) parmi le groupe des composés des formules II, III et IV comme indiqué selon la revendication 7 et en option, avec un ou plusieurs autres composés et en option, avec un ou plusieurs additifs.

**14.** Composant pour une technologie haute fréquence, **caractérisé en ce qu'**il comprend un milieu cristallin liquide selon une ou plusieurs des revendications 6 à 12.

**15.** Composant selon la revendication 14, **caractérisé en ce qu'**il comprend un ou plusieurs déphaseurs connectés

fonctionnellement.

**16.** Utilisation d'un milieu cristallin liquide selon une ou plusieurs des revendications 6 à 12 dans un composant pour une technologie haute fréquence.

**17.** Antenne groupe commandée en phase, **caractérisée en ce qu'**elle comprend un ou plusieurs composants selon la revendication 14 ou 15.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102004029429 A
- JP 2005120208 A
- DE 10120024 A1
- DE 19907941 A1
- US 5759443 A


### In der Beschreibung aufgeführte Nicht-Patentliteratur


- **A. GAEBLER ; A. MOESSINGER ; F. GOELDEN et al.** Liquid Crystal-Reconfigurable Antenna Concepts for Space Applications at Microwave and Millimeter Waves. *International Journal of Antennas and Propagation,* 2009, vol. 2009, 7
- **A. PENIRSCHKE ; S. MÜLLER ; P. SCHEELE ; C. WEIL ; M. WITTEK ; C. HOCK ; R. JAKOBY.** Cavity Perturbation Method for Characterization of Liquid Crystals up to 35GHz. *34th European Microwave Conference,* 545-548
- **WU, S.-T. ; HSU, C.-S. ; SHYU, K.-F.** *Appl. Phys. Lett.,* 1999, vol. 74 (3), 344-346
- **HSU, C. S. ; SHYU, K. F. ; CHUANG, Y. Y. ; WU, S.-T.** *Liq. Cryst.,* 2000, vol. 27 (2), 283-287
- **DABROWSKI, R. ; KULA, P. ; GAUZA, S. ; DZIADISZEK, J. ; URBAN, S. ; WU, S.-T.** *IDRC,* 2008, vol. 08, 35-38
- **TSAI W.-L. et al.** *Liquid Crystals,* 2004, vol. 31 (2), 299-300
- **A. GAEBLER ; F. GÖLDEN ; S. MÜLLER ; A. PENIRSCHKE ; R. JAKOBY.** Direct Simulation of Material Permittivites ... *12MTC 2009 - International Instrumentation and Measurement Technology Conference,* 2009, 463-467